# EUROPEAN PATENT APPLICATION

(11) **EP 1 128 277 A2**
(43) Date of publication of application: **29.08.2001**
(21) Application number: 00301740.7
(22) Date of filing: 03.03.2000
(51) Int. Cl.: G06F 17/28

(54) **Data processing method and system, program for realizing the method, and computer readable storage medium storing the program**

(30) Priority: 23.02.2000 JP 2000052109
(71) Applicant: Hitachi, Ltd., Chiyoda-ku, Tokyo (JP)
(72) Inventor: Kobayashi, Susumu, c/o Hitachi, Ltd., Tokyo 100-8220 (JP); Nakano, Yukio, c/o Hitachi, Ltd., Tokyo 100-8220 (JP); Kawamura, Nobuo, c/o Hitachi, Ltd., Tokyo 100-8220 (JP); Tsuchida, Masashi, c/o Hitachi, Ltd., Tokyo 100-8220 (JP); Torii, Shunichi, Hitachi, Ltd., Tokyo 100-8220 (JP)
(74) Representative: Hackney, Nigel John

(57) **Abstract**

A database access management unit (103) manages accesses to databases (114) managed by a plurality of data processing servers (104) each provided for each data kind. A request analysis unit (110) analyzes a request from an application containing a process request for each data kind. A process server selection unit (111) selects the data processing server for executing a data process in accordance with the data kind. A data process request unit (112) requests the data processing server to execute the data process. A process result edition unit edits the process result by the data processing server.

## Description

The present invention relates to a data processing method, a data processing system, and a storage medium. More particularly, the present invention relates to techniques effective for the application to a data processing method which is suitable for accessing a plurality type of data in a data processing system by discriminating between data kinds such as natural languages, Japanese language, English language and the like.

It is necessary for a computer system to process various types of mixed data.

For example, if information systems at main offices of various counties of a multinational enterprise are to be integrated, it is necessary for a server in a single central office to process text data described in different natural languages of various countries.

If information collected worldwide from the World Wide Web is to be integrated, it is necessary to process files of HTML texts written in various natural languages supplied from Web sites in various countries.

In learning a new language, it is necessary to process both the description of the language to be learnt and its translation into a mother language or another already learnt language.

One method of allowing a plurality of languages to be processed by encoding each language into one integrated format, is to use encoded character sets called Unicode. Unicode is multilanguage character sets developed through cooperation of International Standards Organization (ISO) and Unicode consortium. Main character set specifications of the world are consolidated into one large character set specification. ISO named this character set specification as ISO 10646.

One method of processing data of a plurality of languages by a database system is to use Unicode. This method is described, for example, in ORACLE 8 National Language Support, An Oracle Technical White Paper, 1997.6.

This document teaches that in order to consolidate local databases of a multinational enterprise into one database, it is ideal to use Unicode as the character code of the database server. In the database server, data of the character train type is integrally processed by one data format Unicode. If the character code of the client is different from the character code of the database server, the database management system of the database server automatically translates the character code.

As a system for processing multilanguage text data, a multilanguage support communication system is known which is disclosed in the Laid-open Patent Publication JP-A-10-232869. In this system, the server stores intermediate format text data which is obtained by grammatically and semantically analyzing the text data described in a natural language. Upon reception of a request of text data search from a client, the server searches intermediate format text data containing a specified character string from its memory, generates text data described in the natural language requested by the client from the searched intermediate text data, and transmits the generated text data back to the client. The server stores all text data to be processed by the system, in one intermediate format.

A conventional database language SQL uses an ORDER BY phrase in order to sort the process result. This language specification is defined in Database Language SQL in Japanese Industrial Standard JIS X 3005-1990. It is possible to assign a sorting key with a character string. In this case, a collating sequence is specified by COLLATE.

A similar specification is described in "Understanding The New SQL: a Complete Guide, Jim Melton, Morgan Kaufmann, 1993". This document gives an example of usage of the following SQL statements.
SELECT movie_title, movie_type
FROM movie_titles
ORDER BY movie_title COLLATE FRENCH

In this example, it is specified that the titles of movies are sorted in accordance with the French custom, to explicitly designate a proper collation relative to the character set of character trains of the sorting key.

In an example described in "ORACLE 8 National Language Support, An Oracle Technical White Paper, 1997. 6", the collation method is specified by environmental variables and the like.

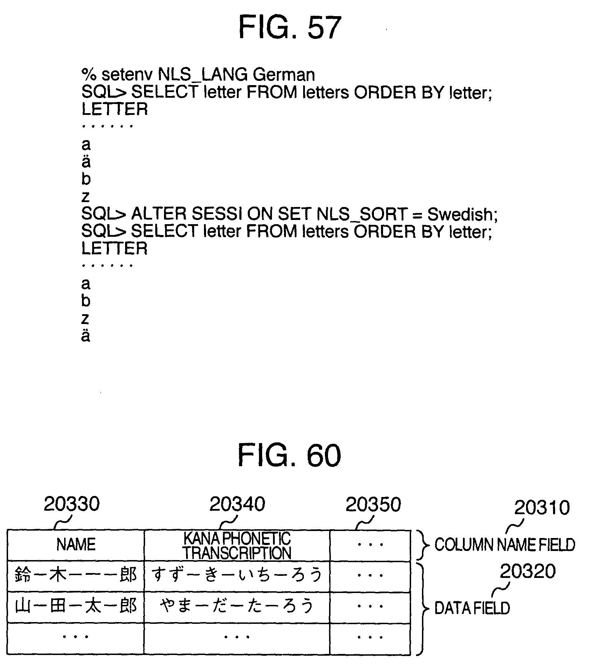

Fig. 57 shows an example of a conventional collation method specified by environmental variables and the like. Fig. 57 illustrates an example of a specification of the collation method, a query by SQL statements and its process result. As seen from this example, depending upon a designated language, a different sort process is executed even for the same character set.

Consider now that a conventional database is used for multilanguage support and a sort process is executed for a different language character set by using a different collation method. In this case, the sort process is executed by a different collating sequence because of the different collation method. Therefore, depending upon a designated language, a different sort result is obtained even for the same character set.

Even for collation of a specific language, there are various collating sequences. For example, for the Japanese language, the sort process can be executed by various collation methods such as simple collation, phonetic transcription - representation collation, and representative phonetic collation. The process result changes with each collation method.

As the collation of different languages, a language recognition collating system is disclosed in the Publication JP-A-8-508123. The specification regarding the collation of Japanese Language character strings is stipulated in Japanese Industrial Standard JIS X 4061-1996. This specification defines three collating sequences including simple collation, phonetic transcription-representation collation, and representative phonetic collation.

In a conventional collation method described above, the database is used for multilanguage support or a plurality of collation methods are used for a specific language, to apply a different collation method to values in the same column of the data base. In this case, the sort process is executed by using a different collating key for each collation method for the values in the same column. Therefore, after the collating key corresponding to the collation method for the values of respective columns is generated, the sort process is executed by using the generated collating key.

Another method of sorting data stored in the database of a database system is to use an index. An example of this is a data search apparatus with a sort function disclosed in the Publication of JP-A-8-255170.

In an object-relational database management system, it is possible to define a user function for the sequence evaluation when indices are to be formed for user definition types. An example of this is described in "Object-Relational DBMSs. Michael Stonebraker, Morgan Kaufmann, 1966". According to this document, B-tree indices can be generated in conformity with an optional sequence specified by a user definition function.

In order to collate character strings, it is generally necessary to execute multidimensional analysis for each of various collating keys at each collation stage. As an example of a data processing method which retrieves data by similar multidimensional data analysis, a neighborhood search method in a multidimensional vector space and a storage medium storing program for realizing the method are described in the Publication of JP-A-10-301937. According to this method, multidimensional data is generated from the feature amounts of an image such as color and shape, and indices of a tree structure are used to retrieve images similar to some image. The search range of the feature amounts is limited for each dimension to search similar images. Since the search range is limited and matching with all images is not performed, the data processing amount can be reduced and the data processing can be speeded up.

In spreadsheet software and a database management system (DBMS), a process is executed which stores and manages data upon a data registration request from a user, and searches data and returns it to the user upon a data search request from the user. In this process, if data is searched without specifying search conditions, the sequence of searching data is indefinite. In order to search data in a predetermined sequence, a data sorting function is provided.

This sorting function provides sorting in ascending or descending order of values of character codes of character strings, or sorting of Japanese language character strings in the 50-kana syllabic order if this function is set up in the system. For example, the database language SQL can request to sort the collated retrieved result by using the ORDER BY phrase. This language specification is stipulated in the database language SQL of Japanese Industrial Standard JIS X 3005-1900.

Spreadsheet software, Excel (registered trademark of Microsoft Corporation), has a data sorting function. When sorting is selected from a menu, a sorting dialog box is displayed to allow a user to designate a sorting key and ascending order or descending order. As an optional function, if the arrangement of an optional character string registered from a user definition list panel is selected from a sorting sequence designation menu, it is possible to rearrange the key values in the selected order (Excel 5.0 for Windows, Operation Handbook, ISBN 4-8163-1671-X, description on data sorting p. 178 to p. 481, description on user definition p. 214).

The specification of Collation of Japanese Language Character String is defined in Japanese Industrial Standard JIS X 4061-1996. This specification stipulates three collating sequences including simple collation, phonetic transcription - representation collation, and representative phonetic collation.

In the simple collation, sorting is executed by using one given character string itself as the collating key. In the phonetic transcription - representation collation, in accordance with the character string to be sorted and its phonetic transcription string, sorting is executed first by using the phonetic transcription string as the collating key, and if the same sequential order is obtained, sorting is executed by using the character string as the collating key.

The representative phonetic collation includes a fundamental representative phonetic collation and a simple representative phonetic collation. In the fundamental representative phonetic collation, a phonetic transcription train and a representation train are respectively syllabled so as to be able to determine representative phonetic sounds, and the result obtained by the following procedures (1) to (4) becomes the collation result.
(1) The start trains of two representation trains are evaluated from the order of character class.
(2) If the two representation trains have the same order at the stage (1), the following rules (a) and (b) are sequentially applied to each syllable of the two representation trains until it becomes that there is no syllable. If there is no syllable in one of the two representation trains to be collated, this representation train is given the preferential order. If there is no syllable in both of the two representation trains, they are given the same order at this stage (2).
   (a) For each syllable, representative phonetic sounds are determined from a representative phonetic dictionary by using the representation train and phonetic train, and by using the representative phonetic sounds as the collating key, evaluation is performed in accordance with a collating rule.
   (b) If the two representation trains have the same order at the stage (a), by using the representation train having the corresponding syllable as the collating key, evaluation is performed in accordance with the collating rule.
(3) If the two representation trains have the same order at the stage (2), by using the phonetic train as the collating key, evaluation is performed in accordance with the collating rule.
(4) If the two representation trains have the same order at the stage (3), by using the representation train as the collating key, evaluation is performed in accordance with the collating rule.

As a method of sorting data stored in a database management system, a method using indices is known. An example of this is the search apparatus with a sort function disclosed in the Publication of JP-A-8-255170. By using indices, data of the desired sorting order can be obtained without sorting the data in the system, resulting in high processing speed.

The above-described conventional techniques use an integrated form of data types and data formats in managing data of a plurality of kinds by a server, and don't consider the data kind of data having the same data type and format. It is not possible to process data in accordance with the characteristics of each data kind.

For example, consider the case that a database management system stores character string data of a plurality of languages (English, Japanese, Hebrew and the like) in one table by using Unicode. In this case, the server which manages data storage recognizes the data only as the character data encoded by Unicode and cannot discriminate between languages. Therefore, even if there is a full text search function specific to each language, it is not possible to select data of each language and sse the full text search function specific to each language. For example, the development of synonyms and different representations change with each language, and the search function changes with each language such as cutting of each Japanese word and exclusion of English articles. It is therefore impossible to use a proper function unless the language of data is identified.

Preferably, an object of the invention is to provide a data processing system capable of accessing data of a plurality of different kinds and processing data in accordance with the characteristics specific to each data kind.

As described above, with the conventional collation method, if different collation methods are used for the same column value for a multilanguage support of a database or for use of a plurality of collation methods for a particular language, after the collating key corresponding to the collation method is generated for the column value to be collated, the sort process is executed by using the generated collating key. The process speed of the sort process therefore lowers.

With the conventional collation method, the collating key generated for each sort process is used only for this sort process. Even if the generated collating key can be used for another collation method, it is not used for the other collation method. The use efficiency of the collating key therefore lowers. For example, if a particular column value is to be subjected to a sort process by phonetic transcription - representation collation and to a sort process by a combination of phonetic transcription - representation collation and representative phonetic collation, the same collating key is used for the phonetic transcription - representation collation. However, a conventional collation method generates a collating key independently for each sort process. The use efficiency of the collating key is therefore lowered.

With the above-described conventional collation method, if the contents of a plurality of collation methods to be used for the same column value are altered, it is necessary to alter the contents of a collating key to be generated. It is therefore not easy to deal with alteration or addition of a collation method.

In a conventional database system, an index is used for sorting data stored in a database. This conventional method uses an index specific to the column value to be collated. Therefore, if there are a plurality of collating keys for the same column value, the index of the conventional type cannot be used directly.

For example, it is assumed that a conventional relational database system supports a function of sorting character strings stored in table columns of a database by a collation method stipulated in JIS X 4061, and that the sort function is provided by the method disclosed in JP-A-8-255170.

In this case, if the sort function for the column storing character strings by the phonetic transcript-representation collation method is to be supported, the order of character strings is determined by the phonetic transcription - representation collation method and then information for identifying the key value and record for the sort process is stored in a node of a tree structure constituting an index.

This method is, however, associated with the following problems. If the sort function by the representative phonetic collation method is to be supported relative to the column storing the character strings, the index generated for the phonetic transcription - representation collation method cannot be used because the order of records in the node is different. As above, an index generated in some order such as a B-tree cannot be applied to another collation method. In order to support the sort function by a plurality of collation methods, some methods have been studied, such as a method of generating a plurality of indexes for a plurality of collation methods and a method of directly collating and evaluating records without using an index in order to sort data.

The method of generating a plurality of indexes is required to have a function of generating and managing a plurality of indexes for evaluation of the same column in a database system in different orders. This function is not provided to a general database management system. Even if this function is provided, it is necessary to manage indexes for each of a plurality of collation methods to be supported, resulting in a high cost of management. It is also necessary to provide a resource such as a file for storing index data of each index. Furthermore, the overhead of maintenance of index data when records are registered or altered, becomes larger as the number of indexes becomes larger.

The method of directly collating and evaluating records without using an index in order to sort data, accesses the whole storage area of records. Therefore, if the size of all records is large and the number of records is very large, a high speed process is impossible as compared to accessing only the key value by using the index.

Another method may be considered by which an index is dynamically generated when the sort process is executed without generating the index in advance to sort data. With this method, however, an overhead of generating an index is large so that a high speed process is impossible as compared to the index generated in advance.

There is another problem that a conventional database system cannot easily deal with partial alteration or addition of a collation method. For example, JIS X 4061 stipulates that the order of kanji should be the order of ideographic full stops defined in Information Exchange Kanji Codes of Japanese Industrial Standard JIS X 0208, or the order of mark positions defined in the first system and fundamental multilanguage plane of Universal Coded Character Set (UCS) of Japanese Industrial Standard JIS X 0221. If the portion of kanji is to be sorted for order evaluation in the stroke order as in a telephone directory of NTT, the index generated in conformity with JIS X 4061 cannot be used because of the different order. It is therefore necessary to provide a specific order evaluation function, to generate the index in a different way, and to perform other countermeasures.

With the method of generating an index for order evaluation by a user definition function according to the above-described conventional techniques, although an index can be generated in accordance with an optional order evaluation, this index cannot be used for the sort process based upon another order evaluation.

Another method can be considered which applies the neighborhood search method in a multidimensional vector space according to the above-described conventional techniques, and collates character strings by analyzing multidimensionally the collating key for character strings. This method acquires a set of data satisfying some conditions. Therefore, although this method is effective for limiting the search range, it is not effective for sorting data in the sequential order by using some rules (collation method). It is not particularly effective for sorting data in the sequential order by using a plurality of collation methods. In summary, the following problems are associated with the conventional techniques.
(1) One index can be used only for a sort process by one collation method. A sort process by a plurality of collation methods is not taken into consideration. If-an index is generated for each of a plurality of collation methods, each index requires an operation cost of management. It is also necessary-to use a resource for storing index data. An overhead of index maintenance increases when records are to be registered or altered.
(2) Partial alteration or addition of a collation method cannot be dealt with easily. An alteration of the collation method is not taken into consideration. If the order is changed by alteration of a collation method, the index generated for the original collation method cannot be used.

Preferably, an object of the invention is to solve the above problems and provide techniques capable of speeding up a sort process by a plurality of collation methods and improving the use efficiency of multidimensional data.

Although a conventional sort process can use simple collation or phonetic transcription - representation collation, representative phonetic collation requiring evaluation in the unit of syllable cannot be realized. Another problem therefore arises that spreadsheet software is required to generate macros realizing a sort process and a database management system is required to execute a particular sort process after data is acquired. Furthermore, the conventional sort process may take a long execution time because it cannot generate an index for the sort process.

Preferably, another object of the present invention is to solve the above problems and provide techniques capable of executing a sort process specific to each user.

Preferably, another object of the present invention is to provide techniques capable of executing at high speed a sort process by rules designated by the sort process.

The above and other aspects and novel features of the invention will become more apparent from the following detailed description when read in conjunction with the accompanying drawings.

The summary of the typical features of the invention disclosed in this specification will be described briefly.

A data processing method selects data processing means for executing a data process in accordance with a data kind and executes the data process by the selected data processing means.

By selecting the data processing means in accordance with the data king and executing the data process by the selected data processing means, it is possible to execute the data process specific to the data kind when data of a plurality of different kinds is accessed.

Preferably, according to the invention, in a collation method of collating collating keys corresponding to a column value and sort records, a plurality of collation methods share multidimensional data representative of the collating keys corresponding to the column values, and a sort process by a plurality of different collation methods is executed by using collating keys n the multidimensional data.

Preferably, according to the invention, an application program issues a query request to a database processing server to sort character strings stored in a table data store by using various collation methods.

Upon reception of the query request from the application program, the database processing server analyzes the query request, sends the analysis result to a collation module via an index management unit to request the collation module to execute a sort process.

By referring to various data stored in a definition data store, the collation module acquires an identifier of a collation key corresponding to the column values to be evaluated by the collation method designated by the sort request, and sends the identifier as well as a multidimensional data analysis request to a multidimensional data processing module.

The multidimensional data processing module reads the collating key indicated by the identifier from the multidimensional data, sorts record identifiers for identifying records storing the column values by using the collating key, and generates a list of record identifiers for the column values sorted in the collation method.

The multidimensional processing module returns the list of record identifiers to the collation module as the multidimensional data analysis result. The collation module passes the multidimensional data analysis result to the index management unit. Upon reception of the sort process result at the index management unit, the database processing server returns a query process end to the application program.

As described above, according to the present invention, in supporting a sort process by a plurality of collation methods, the multidimensional data is shared by a plurality of collation methods and a sort process by a plurality of collation methods is executed by the collating keys in the multidimensional data. Accordingly it is possible to speed up a sort process by each collation method, to improve a multidimensional data use efficiency (reduce resources) and to lower maintenance operation cost.

As above, according to a collation processing apparatus of this invention, the multidimensional data representative of the collating key corresponding to the column values is shared by a plurality of collation methods, and the sort process by a plurality of different collation methods is executed by using the collating keys in the multidimensional data. It is therefore possible to speed up the sort process by a plurality of collation methods and improve the use efficiency of the multidimensional data.

Preferably, according to the invention, in a data processing apparatus for storing and searching data constituted of optional elements including a character string, a data sort process is executed by a designated rule.

Preferably, according to the invention, a sort rule is defined by a sort object in the column to be referred to and by the sort order. For example, a character string length of characters to be evaluated for the sort process, a delimiting character, an evaluation excluded character, and a sort order by an ascending order or descending order or by a combination of character strings, are designated to register the rule for the sort process and define the sort rule.

Next, a sort process is designated which indicates a column to be referred to during the sort process and the rule used by the sort process for the column. In designating the sort process, the reference columns and rules to be executed when the sort result under a first condition of a particular rule shows the same order, may be designated as second, third,... conditions. The sort process is executed in accordance with the contents of the designated sort process.

As described above, according to the invention, the sort process is executed in accordance with a predefined rule. Therefore, by defining the sort object and order in a manner desired by each user, it is possible to execute the data sort process specific to the user. For example, if a rule is defined which contains the byte length of sort object data and a combination of data strings representing a sort order, then it is possible to define a sort rule which can sort the data strings used by an optional language in a designated order. It is possible to sort data of multilanguages.

Preferably, according to the invention, an index representative of the sort result obtained by a rule designated by the sort process is generated. Therefore, if a sort execution request is issued by designating the sort process, the sort result can be obtained by referring to the index. The sort process can therefore be executed at high speed.

Preferably, as described above, according to the data processing apparatus of this invention, a rule for the sort process is registered in advance, and the sort process is executed in accordance with the designated rule. It is therefore possible to execute a data sort process specific to each user.

### BRIEF DESCRIPTION OF THE DRAWINGS

Fig. 1 is a conceptual diagram illustrating the outline of a data search process according to an embodiment of the invention.

Fig. 2 is a diagram showing the hardware structure according to an embodiment of the invention.

Fig. 3 is a flow chart illustrating data processing in a data processing system.

Fig. 4 is a flow chart illustrating a data processing request analysis.

Fig. 5 is a diagram showing the data structure of analysis result of a data search process request.

Fig. 6 is a flow chart illustrating a data processing server selection.

Fig. 7 is a diagram showing the structure of a correspondence table between data kind and data processing server.

Fig. 8 is a flow chart illustrating a process request to a data processing server.

Fig. 9 is a diagram showing the data structure of a data search processing request to the data processing server.

Fig. 10 is a flow chart illustrating data processing result editing.

Fig. 11 is a conceptual diagram illustrating the outline of a data registration process.

Fig. 12 is a diagram showing the outline of an interface for a data processing request.

Fig. 13 is a diagram showing the data structure of an analysis result of a data registration processing request.

Fig. 14 is a diagram showing the data structure of the data registration processing request to the data processing server.

Fig. 15 is a diagram showing the outline of an interface for the data registration processing request.

Fig. 16 is a diagram showing the outline of an interface for the data registration processing request.

Fig. 17 is a diagram showing the data structure of analysis result of the data registration processing request.

Fig. 18 is a flow chart illustrating a process request to the data processing server in a data registration process.

Fig. 19 is a diagram showing the structure of data to be registered in the data processing server.

Fig. 20 is a flow chart illustrating data processing result editing in a data search process.

Fig. 21 is a diagram showing the structure of data edited by a process result editing unit.

Fig. 22 is a diagram showing the outline of an interface for the data registration process request.

Fig. 23 is a diagram showing the structure of registration data.

Fig. 24 is a diagram showing the outline of an interface for the data registration process request.

Fig. 25 is a flow chart illustrating a data processing server selection.

Fig. 26 is a flow chart illustrating translation of data to be registered in the data processing server.

Fig. 27 is a conceptual diagram illustrating translation of data to be registered in the data processing server.

Fig. 28 is a diagram showing an outline of an interface for a data search processing request.

Fig. 29 is a diagram showing the data structure of a data search processing result.

Fig. 30 is a flow chart illustrating a data processing server selection.

Fig. 31 is a conceptual diagram illustrating the data processing system added with a data processing server.

Fig. 32 is a conceptual diagram illustrating a data processing system.

Fig. 33 is a diagram showing the outline of a character string sort process according to an embodiment.

Fig. 34 is a diagram showing the outline structure of a collation processing apparatus of the embodiment.

Fig. 35 is a diagram showing an example of a table 10115 of the embodiment.

Fig. 36 is a diagram showing an example of index definition data 10110 of the embodiment.

Fig. 37 is a diagram showing an example of collation method - collating key correspondence data 10113 of the embodiment.

Fig. 38 is a diagram showing an example of collating key - dimension correspondence data 10114 of this embodiment.

Fig. 39 is a diagram showing an example of index - domain correspondence data 10112 of this embodiment.

Fig. 40 is a diagram illustrate the outline of a process of inserting a record in a database system 10101 of this embodiment.

Fig. 41 is a diagram showing an example of collation module - collation method correspondence data 10802 of this embodiment.

Fig. 42 is a flow chart illustrating the operation by a collation module 10106 for entry registration of this embodiment.

Fig. 43 is a diagram showing an example of a code of a collating key value of this embodiment.

Fig. 44 is a diagram showing an example of multidimensional data stored in a multidimensional data domain 10116 of this embodiment.

Fig. 45 is a flow chart illustrating the operation of a query process including a sort request 10151 of this embodiment.

Fig. 46 is a flow chart illustrating the operation by the collation module 10106 for a sort process of this embodiment.

Fig. 47 is a diagram showing an example of a sort process result of this embodiment.

Fig. 48 is a diagram showing an example of the multidimensional data to be generated for the sort process of this embodiment.

Fig. 49 is a flow chart illustrating the operation of the sort process generating the multidimensional data of this embodiment.

Fig. 50 is a diagram showing an example of a collation method definition according to a modification of the embodiment.

Fig. 51 is a diagram illustrating an example of a sort result using the collation method definition of the modification.

Fig. 52 is a diagram showing examples of the collation method definition for the evaluation in the order of a representation column and a phonetic column and its sort result.

Fig. 53 is a diagram illustrating the concept of the system management of a conventional database.

Fig. 54 is a diagram illustrating the concept of the system management of a database of this embodiment.

Fig. 55 is a diagram illustrating the concept of conventional index data.

Fig. 56 is a diagram illustrating the concept of multidimensional data of this embodiment.

Fig. 57 is a diagram showing an example of the collation method designated by conventional environmental variables and the like.

Fig. 58 is a diagram illustrating the outline of a sort process according to an embodiment 201.

Fig. 59 is a diagram showing the outline structure of a data processing apparatus of the embodiment 201.

Fig. 60 is a diagram showing an example of the structure of a table 20141 of the embodiment 201.

Fig. 61 is a flow chart illustrating the operation by a process menu display part 20101 of the embodiment 201.

Fig. 62 is a flow chart illustrating the operation by a rule definition part 20102 of the embodiment 201.

Fig. 63 is a diagram showing an example of a rule definition menu of the embodiment 201.

Fig. 64 is a diagram showing the details of rule data of the embodiment 201.

Fig. 65 is a flow chart illustrating the operation by a sort process registration part 20103 of the embodiment 201.

Fig. 66 is a diagram showing an example of a sort process registration menu of the embodiment 201.

Fig. 67 is a diagram showing the details of sort process data 20113 of the embodiment 201.

Fig. 68 is a flow chart illustrating the operation by a sort execution part 20104 of the embodiment 201.

Fig. 69 is a flow chart to follow the flow chart shown in Fig. 68.

Fig. 70 is a diagram showing an example of a sort process execution menu of the embodiment 201.

Fig. 71 is a diagram showing an example of setting the sort process registration menu of the embodiment 201.

Fig. 72 is a diagram showing an example of setting the sort process execution menu of the embodiment 201.

Fig. 73 is a diagram showing an example of setting a data setting field of a sort rule by a fundamental representative phonetic collation method of the embodiment 201.

Fig. 74 is a diagram showing an example of setting a data setting field of the sort rule by the fundamental representative phonetic collation method of the embodiment 201.

Fig. 75 is a diagram showing an example of setting the sort process registration menu of the embodiment 201.

Fig. 76 is a diagram showing a system structure of a data processing apparatus according to an embodiment 202.

Fig. 77 is a diagram showing the outline structures of a data processing system 22000 and an information processing apparatus 22030 of the embodiment 202.

Fig. 78 is a diagram illustrating the outline of a process by a DBMS 22003 of the embodiment 202.

Fig. 79 is a flow chart illustrating the operation by a table definition part 22101 of the embodiment 202.

Fig. 80 is a flow chart illustrating the operation by an insertion part 22101 of the embodiment 202.

Fig. 81 is a flow chart illustrating the operation by a search part 22103 of the embodiment 202.

Fig. 82 is a diagram illustrating the outline of a table definition process of the embodiment 202.

Fig. 83 is a diagram illustrating the outline of an insertion process of the embodiment 202.

Fig. 84 is a diagram illustrating the outline of a table search process of the embodiment 202.

Fig. 85 is a diagram illustrating the outline of a table search process by an index of the embodiment 202.

Fig. 86 is a diagram showing the outline of a rule definition process of the embodiment 202.

Fig. 87 is a diagram showing the outline of a sort process definition of the embodiment 202.

Fig. 88 is a flow chart illustrating the operation by a rule definition part 22104 of the embodiment 202.

Fig. 89 is a flow chart illustrating the operation by a sort process registration part 22105 of the embodiment 202.

### DETAILED DESCRIPTION OF THE EMBODIMENTS

Modes (embodiments) of the invention will be described in detail with reference to the accompanying drawings.

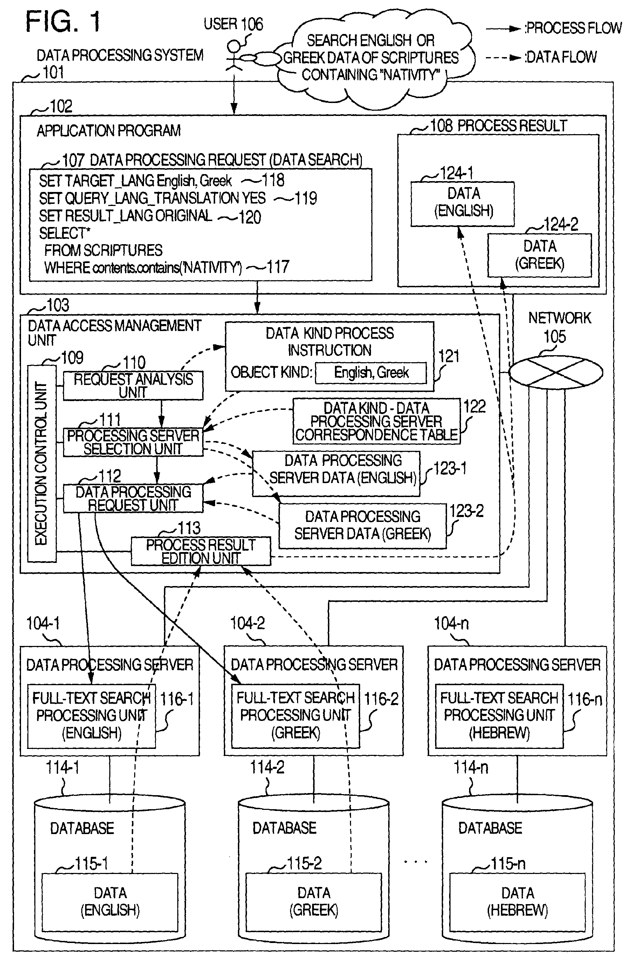

The principle of the invention will first be described with reference to Fig. 1. Fig. 1 is a conceptual diagram illustrating the outline of a process of searching text data described in a plurality of natural languages, to be executed by a data processing system according to a first embodiment of the invention.

This data processing system stores data of a plurality of languages, and in response to a search request from a user of this system, executes a full-text search specific to each of a plurality of languages.

As shown in Fig. 1, the data processing system 101 of this embodiment is constituted of an application program (AP) 102, a data access management unit 103, data processing servers 104-1, 104-2, ..., 104-n, and a network 105 interconnecting these components and used as a communication path.

AP 102 is a program for transmitting a data processing request 107 from a user 106 using the data processing system 101 to a data access management unit 103 and for receiving a processing result 108 corresponding to the request.

It is assumed that a user 106 can use data received from AP 102 by using a program (not shown) capable of displaying and editing a plurality of languages.

The data access management unit 103 manages accesses of AP 102 to the data stored in the data processing system 101.

The data access management unit 103 receives a data processing request 107 from AP 102, analyzes the request, requests the data processing servers 104-1, 104-2,... 104-n suitable for executing a process corresponding to the request to execute data processing, and returns the process result by the data processing server to AP 102.

The data access management unit 103 is constituted of an execution control unit 109, a request analysis unit 110, a processing server selection unit 111, a data processing request unit 112, and a process result edition unit 113.

The execution control unit 109 controls the execution of a process to be executed in the data access management unit. Namely, a partial process of a series of processes to be executed by the data access management unit 103 is controlled to be executed by the request analysis unit 110, processing server selection unit 111, data processing request unit 112, and process result edition unit 113.

The request analysis unit 110 analyzes the data processing request 107 from AP 102.

The processing server selection unit 111 selects the data processing servers 104-1, 104-2, ..., 104-n which execute the data processing suitable for the data processing request 107 from AP 102.

The data processing request unit 112 requests the data processing servers 104-1, 104-2, ..., 104-n to execute data processing suitable for the data processing request 107 from AP 102.

The process result edition unit 113 edits the process results by the data processing servers 104-1, 104-2, ..., 104-n so as to change them in order to match the process result 108 requested by AP 102.

The data processing servers 104-1, 104-2,..., 104-n each register and retrieve data 115-1, 115-2,..., 115-n to and from the databases 114-1, 114-2, ..., 114-n. These servers provide a data processing function of a general database management system.

The data access management unit 103 manages data accesses of AP 102, whereas the data processing servers 104-1, 104-2, ..., 104-n execute actual data processing suitable for the data processing request of AP 102.

The data processing servers 104-1, 104-2,..., 104-n have full-text search units 116-1, 116-2, ..., 116-n corresponding to predetermined languages. The full-text search unit 116-1 provides a full-text search function of English. The full-text search unit 116-2 provides a full-text search function of Greek. The full-text search unit 116-n provides a full-text search function of Hebrew. The full-text search units 116-1, 116-2, ..., 116-n each may be a program module which provides a general full-text search function of each language.

Next, the outline of the data search process by the data processing system 101 will be described.

First, the user 106 inputs a data search request to AP 102. This request is assumed to be "search a document containing a word "Nativity" from documents on Scriptures".

This search request is described in the database language SQL as in the following.
SELECT * FROM Scriptures WHERE contents.contains('Nativity') ... 117

This search request requests the following data processing regarding the data kind, particularly language type.

Language types to be searched are assumed to be English and Greek. Namely, only the original documents written in English or Greek are searched.

In the search statement, a data portion (not a control portion such as SELECT and a schema portion of the database such as the name of a table) is translated into each language. Namely, representation of the word string "Nativity" is not directly applied to the search process, but a word meaning "Nativity" is translated into each language (e.g., "the Nativity" in English) and this translated language is used for the search.

It is assumed that the language type of the search request 117 itself is recognized by the data access management unit 103, similar to that a database server in a general database system recognizes the language type of a request from an application program.

Data of the search result 108 is original texts and words registered in the data processing system.

This is designated as in the following by using SQL execution environment variables (corresponding to session characteristics in ISO Final Draft International Standard (FDIS) Database Language SQL.. Part 2: Foundation (SQL/Foundation) «Part 2» ISO/IEC FDIS 9075-2: 1999 (E), March 199).
SET TARGET_LANG English, Greek ... 118
SET QUERY_LANG_TRANSLATION YES ... 119
SET RESULT_LANG ORIGINAL ... 120

In response to the search request from the user, AP 102 requests the data access management unit 103 to execute data processing.

In the data access management unit 103, the following processes are executed under the control of the execution control unit 109.

The request analysis unit 110 analyzes the search request statement 117 of the data processing request 107. This analysis may be SQL analysis to be performed by a general database management system. The analysis result contains the following items.

The search request statement is a data search request, the search object field is the "Scriptures", and the search condition is "containing Nativity".

The following three items are set for the data kind.
(1) Language types to be searched are English and Greek. As information for instructing a process for the data kind, a data kind process instruction 121 is generated. Values "English" and "Greek" indicating the data kinds are set to the data kind process instruction 121 as its object data kinds.
(2) A data portion in the search text is translated into a corresponding language.
(3) Search result data is original texts and words registered in the database.

Next, the processing server selection unit 111 selects the data processing servers 104-1, 104-2, ..., 104-n which are requested to search. In accordance with the data kind process instruction 121 analyzed by the request analysis unit 110, a data kind - data processing server correspondence table 122 is referred to and the data processing servers are selected.

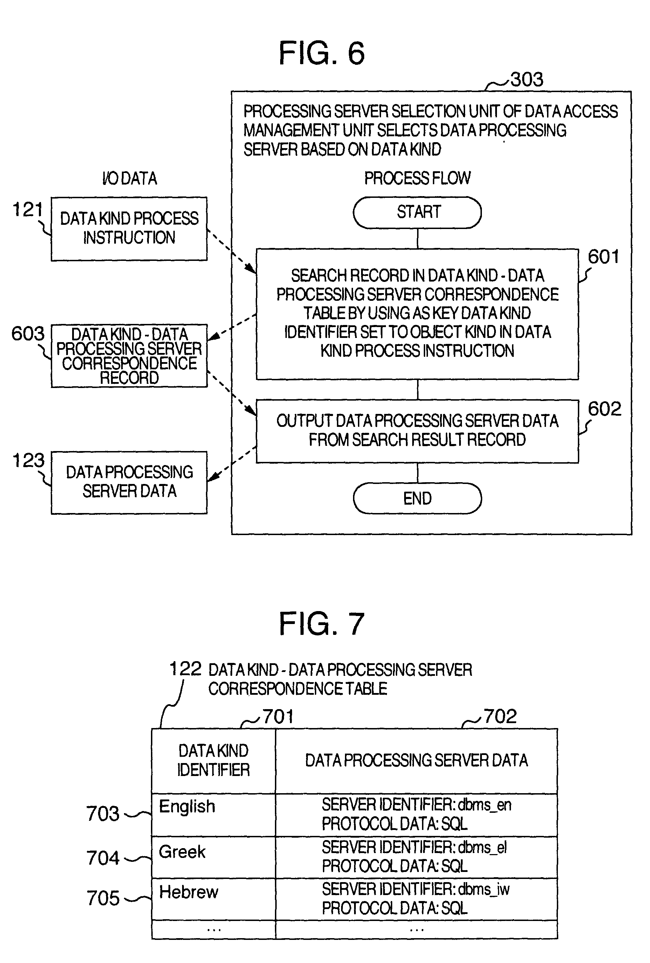

The data kind - data processing server correspondence table 122 stores pairs of an identifier of the data kind and data processing server information (details will be given with reference to Fig. 7).

By referring to the data kind - data processing server correspondence table 122 by using as search keys the data kind identifiers "English" and "Greek" set as the object data kinds in the data kind process instruction 121, data processing server information 123-1 and 123-2 is acquired to select the data processing servers indicated by the data processing server information 123-1 and 123-2.

The data processing server information 123-1 and 123-2 includes server names for identifying the data processing servers and protocols indicating a process request method, both necessary for requesting the data processing servers 104-1 and 104-2 to search.

Next, in accordance with the data processing server information 123-1 and 123-2, the data processing request unit 112 requests the data processing servers 104-1 and 104-2 to search. In accordance with the protocols in the data processing server information 123-1 and 123-2, a search request statement is generated from the contents analyzed by the request analysis unit 110 and the data processing servers 104-1 and 104-2 are requested to search.

The data processing servers 104-1 and 104-2 execute the data search process corresponding to the search request. The data search process may be the search process to be executed by a general database system having a full-text search function for each language.

In response to the requests, in the data processing servers 104-1 and 104-2, full-text search units 116-1 and 116-2 execute full-text searches specific to respective languages under the condition of "containing "Nativity".

The data processing servers 104-1 and 104-2 return the search process results to the data access management unit 103.

In the data access management unit 103, the process result edition unit 113 edits the process results by the data processing servers 104-1 and 104-2 so as to change them and meet the request of AP 102.

In accordance with the analysis result by the request analysis unit 110 that the search result request of AP 102 is "original texts and words", the search results 108 by the data processing servers are not translated and returned to AP 102.

AP 102 receives English data 124-1 and Greek data 124-2 as the process results 108 to thereafter terminate the search process.

As described in this example, the invention provides the following effects.

The data access management unit 103 selects the data processing servers 104-1, 104-2, ..., 104-n which perform actual data processing in accordance with the data kind, and each selected data processing server executes the data processing. It is therefore possible to execute the data processing specific to each data kind.

Next, the hardware structure according to an embodiment of the invention will be described.

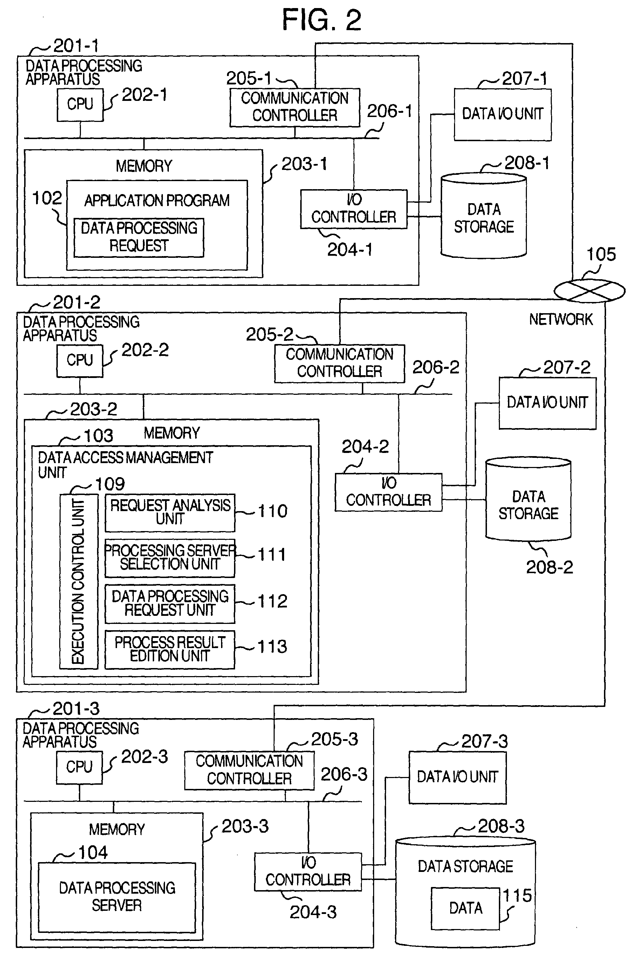

Fig. 2 is a diagram showing the hardware structure according to a mode (embodiment) of this invention.

Programs according to a mode of this invention run on data processing apparatus shown in Fig. 2.

Data processing apparatus 201-1, 201-2 and 201-3 have respectively central processing units (CPUs) 202-1, 202-2 and 202-3, main storages (memories) 203-1, 203-2 and 203-3, input/output (I/O) controllers 204-1, 204-2 and 204-3, communication controllers 205-1, 205-2 and 205-3, system buses 206-1, 206-2 and 206-3 interconnecting these components, and the like. The I/O controllers 204-1, 204-2 and 204-3 are connected to data input/output devices 207-1, 207-2 and 207-3 such as a keyboard, a mouse and a display, and data storages 208-1, 208-2 and 208-3 such as a magnetic disk.

The data processing apparatus 201-1, 201-2 and 201-3 are connected via the communication controllers 205-1, 205-2 and 205-3 to a network 105 such as a LAN (Local Area Network) to communicate with other data processing apparatus connected to the network 105.

The data processing described with reference to Fig. 1 and data processing to be described hereinafter are realized by executing programs stored in the memories 203-1, 203-2 and 203-3 by CPUs 202-1, 202-2 and 202-3. Programs realizing the functions of AP 102, data access management unit 103 and data processing servers 104-1, 104-2, ..., 104-n are stored in the memories 205-1, 205-2 and 205-3 and executed by CPUs 202-1, 202-2 and 202-3. AP 102, data access management unit 103 and data processing servers 104-1, 104-2, ..., 104-n are each a logical function unit of software. Each logical function unit may run on the physically different data processing apparatus 201-1, 201-2 and 201-3 or a plurality of these functional programs may run on one data processing apparatus. The databases 114-1, 114-2, ..., 114-n are realized by storing data in the data storages 208-1, 208-2 and 208-3.

The details of the data processing by the data processing system 101 will be given.

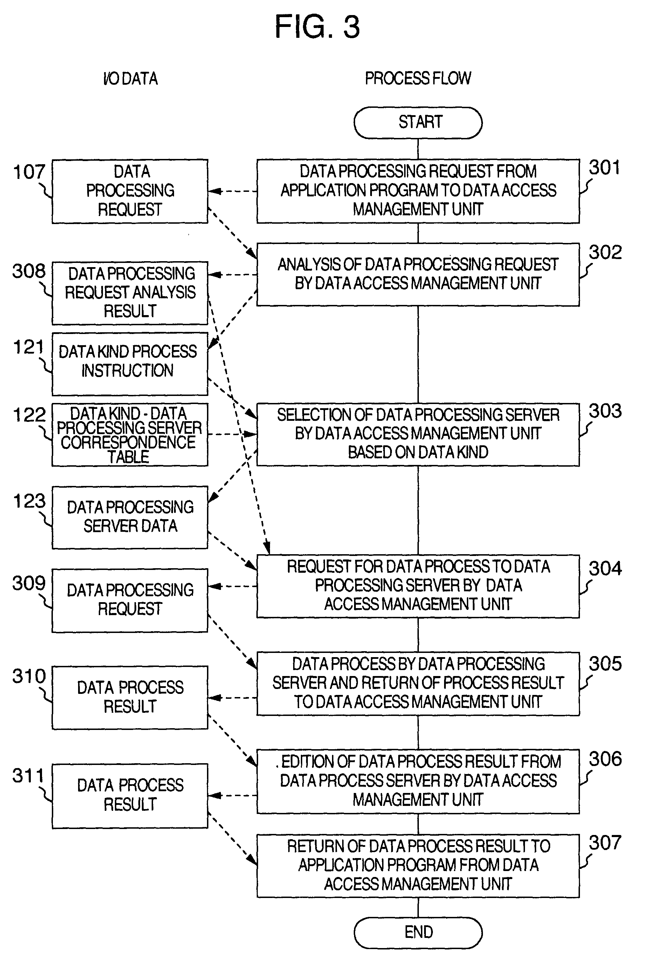

Fig. 3 is a flow chart illustrating a fundamental data processing by the data processing system 101.

AP 102 requests the data access management unit 103 to execute the data processing (301). The data processing request 107 is transmitted to the data access management unit 103.

Next, the request analysis unit 110 of the data access management unit 103 analyzes the data processing request 107 (302). As the analysis results, a data processing request analysis result 308 and data kind process instruction 121 are output.

Next, the processing server selection unit 111 of the data access management unit 103 selects a data processing server (303). By using as a key the data kind identifier set as the object data kind to the data kind process instruction 121, the data kind - data processing server correspondence table 122 is referred to and the data processing server 104 is selected. The data processing server information 123 of the selected data processing server is output.

Next, the data processing request unit 112 of the data access management unit 103 requests the data processing server 104 to execute the data processing (304). In accordance with the data processing request analysis result 308, a data processing request 309 suitable for the data processing server 104 is generated from the data processing server information 123, and transmitted to the data processing server 104.

Next, the data processing server 104 executes the data processing suitable for the data processing request 309, and returns a process result 310 to the data access management unit 103 (305).

Next, the process result editing unit 113 of the data access management unit 103 edits the process result data in accordance with the request from AP 102, and outputs the edited result as a data processing result 311.

Next, the data access management unit 103 returns the data processing result 311 to AP 102 to thereafter terminate the search process (307).

With this search process, upon reception of the data processing request from AP 102, the data access management unit 103 selects the data processing server 104 suitable for the data kind. It is therefore possible to execute the data processing specific to each data kind.

Next, the data search process by the data processing system 101 will be described in detail.

The outline of the data search process has been described with reference to Fig. 1. The fundamental process is illustrated in the flow chart of Fig. 3. Each partial process in the data search process will be described.

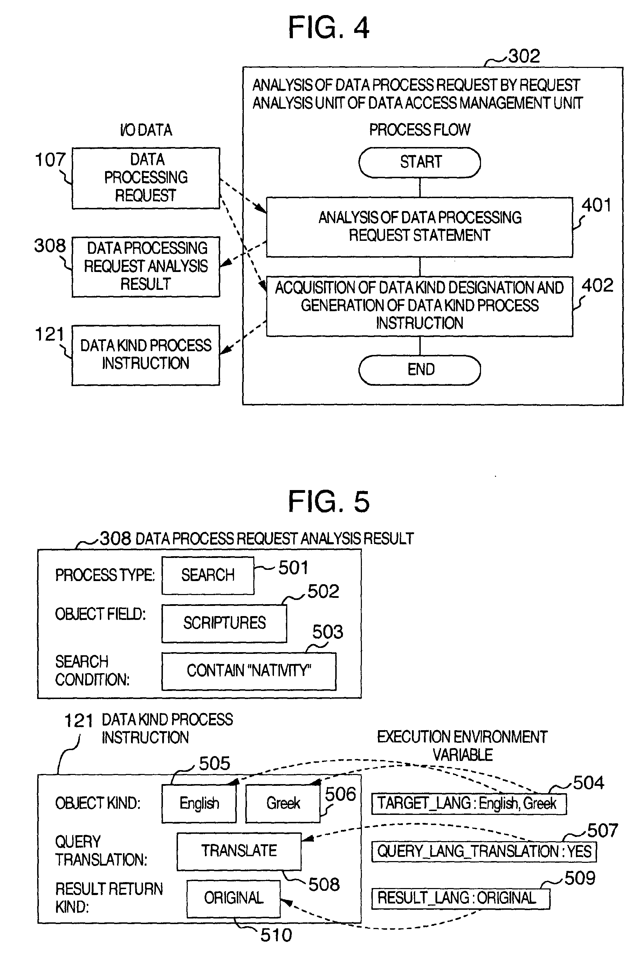

Fig. 4 is a flow chart illustrating the details of analyzing the data processing request to be executed by the request analysis unit 110 of the data access management unit 103. This flow chart shows the details of Step 302 in the data processing flow shown in Fig. 3.

First, the request analysis unit 110 analyzes the data processing request statement 117 and generates the data processing request analysis result 308 (401).

In the example of the data processing request statement 117 shown in Fig. 1, the analysis contents include that the search object field is "Scriptures" and the search condition of containing "Nativity", and are stored in the data processing request analysis result 308.

Next, the data kind to be searched and designated by AP 102 is acquired to generate the data kind process instruction 121 (402) to thereafter terminate the request analysis process.

In designating the data kind to be searched, the execution environment variable TARGET_LANG at 118 in Fig. 1 or the like is used. The details of the data kind process instruction 121 will be later given with reference to Fig. 5.

With this request analysis process, the data kind to be searched is analyzed from the designated data kind of AP 102. It is therefore possible to identify the data kind to be searched.

Fig. 5 is a diagram showing the data structure of the data processing request analysis result of a data search request. The analysis result of the data search request 107 from AP 102 is shown in Fig. 5.

The data processing request analysis result 308 of the data search includes a process type 501, an object field 502 and a search condition 503.

The process type 501 is set with a value representative of "search" in accordance with the analysis result of the SQL statement 117.

The object field 502 is set with a value representative of "Scriptures" in accordance with the analysis result of the FROM phrase of the SQL statement 117.

The search condition 503 is set with a value representative of "containing "Nativity"" in accordance with the analysis result of the WHERE phrase of the SQL statement 117.

The data kind process instruction 121 is generated in accordance with designation of the execution environment variables.

By analyzing the designation 118 of the execution environment variables, TARGET_LANG: Greek 504 is acquired so that "English" 505 and "Greek" 506 are set as object data kinds.

By analyzing the designation 119 of the execution environment variables, QUERY_LANG_TRANSLATION: YES 507 is acquired so that "Translate" 508 is set as a query translation.

By analyzing the designation 120 of the execution environment variables, RESULT_LANG: ORIGINAL 509 is acquired so that "Original" 510 is set as a result return kind.

With this data structure, the analysis contents of the data processing request can be expressed in a structured manner. It is possible to designate a process suitable for the data kind by providing the data kind to be searched, the process method for the data kind under query, the data kind for the processing result to be returned, and the like.

Fig. 6 is a flow chart illustrating a process of selecting a data processing server in a data registration process. The details of Step 303 in the data processing shown in Fig. 3 are given.

First, by using, as keys, data kind identifiers 505 and 506 set as the object data kinds to the data kind process instruction 121, the processing server selection unit 111 refers to the data kind - data processing server correspondence table 122 (will be described with Fig. 7) to search records registered in the table (601). A data kind - data processing server correspondence record 603 is therefore acquired.

Next, the data processing server selection unit 111 outputs the data processing server information 123 contained in the data kind - data processing server correspondence record 603 (602) to thereafter terminate this process.

With this process, it is possible to select the data processing server suitable for the data kind.

Fig. 7 is a diagram showing the structure of the data kind - data processing server correspondence table 122.

This table 122 is referred to by the process 601 of selecting the data processing server shown in Fig. 6.

The data kind - data processing server correspondence table 122 has a column 701 for storing data kind identifiers and a column 702 for storing data processing server information.

The data processing server information is constituted of a server identifier for unanimously identifying each data processing server of the data processing system 101 and protocol information on the data processing request to the data processing server.

A record 703 indicates a correspondence between the data kind "English" and the data processing server. The data processing server information contains a server identifier dbms_en of the data processing server corresponding to English, and the protocol information contains a value SQL indicating an SQL interface.

A record 704 indicates a correspondence between the data kind "Greek" and the data processing server. The data processing server information contains a server identifier dbms_el of the data processing server corresponding to Greek, and the protocol information contains a value SQL indicating an SQL interface.

A record 705 indicates a correspondence between the data kind "Hebrew" and the data processing server. The data processing server information contains a server identifier dbms_iw of the data processing server corresponding to Hebrew, and the protocol information contains a value SQL indicating an SQL interface.

With this table, a relation between the data kind and its corresponding data processing server can be known.

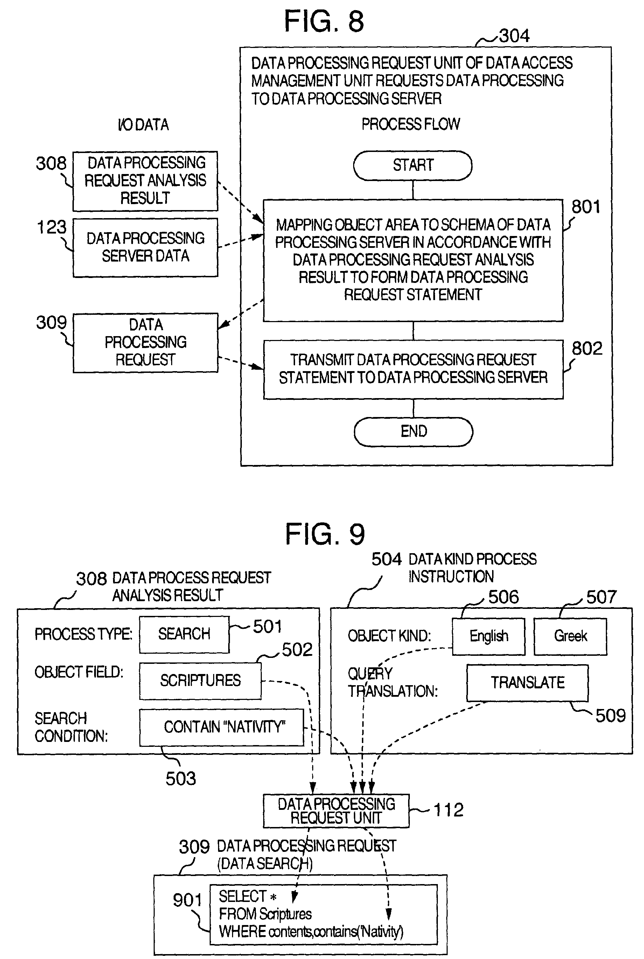

Fig. 8 is a flow chart illustrating the process of requesting the data processing server to execute the data processing, by the data processing request unit 112. The details of Step 304 shown in Fig. 3 are given.

First, in accordance with the data processing request analysis result 308, the data processing request unit 112 maps the object field 502 to the schema of the database of the data processing server to generate a data processing request 309 (801). The details of the data processing request 309 will be given later with reference to Fig. 9. In accordance with the data processing server information 123 selected in the processing server selection process 303 by the processing server selection unit 111, mapping to the schema of the database is executed.

Next, the generated data processing request is transmitted to the data processing server (802) to thereafter terminate this process.

With this process, it is possible to perform the data processing request suitable for each data processing server selected in accordance with the data kind.

Fig. 9 is a diagram showing the data structure of the data processing request from the data access management unit 103 to the data processing server 104.

The details of the data processing request 309 generated at Step 304 (at Step 801 of Fig. 8 for the search) are given.

In this example, for the simplicity of description, the data search request only for the data kind "English" will be described. The data search request 309 for the data processing server of the data kind "Greek" can be generated in the similar manner.

A request statement 901 of the data processing request 309 contains the following items.

The "Scriptures" in the object field 502 of the data processing request analysis result 308 are mapped to the schema of the database 114-1 of the data processing server 104-1 of the data kind "English", and a Scriptures table is used as the search object.

In accordance with the object data kind "English" 506 and query translation "Translate" 509 of the data kind process instruction 121, the "Nativity" in the object search condition 503 of the data processing request analysis result 308 is translated into a character string "Nativity" which is used as a key of the full-text search.

With this structure, it is possible to transmit the data processing request 107 from AP 102 in the format suitable for each data processing server.

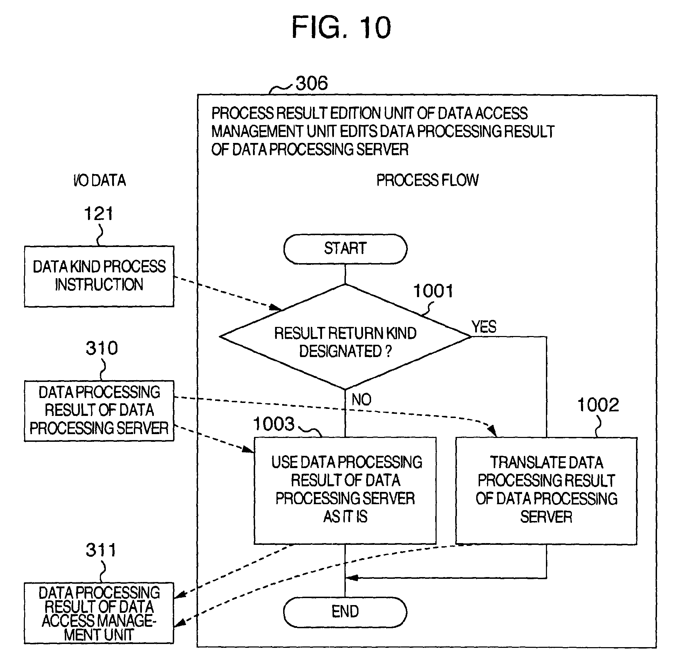

Fig. 10 is a flow chart illustrating the processing result editing process by the data processing system 101. The details of Step 306 shown in Fig. 3 are given.

First, with reference to the data kind process instruction 121, the processing result edition unit 113 of the data access management unit 103 judges whether there is the data kind designation for returning the result (1001).

In the example of the data processing request 107 for the data search shown in Fig. 1, the data kind is designated by the execution environment variable RESULT_LANG 120 and the result return data kind "Original" 510 is set to the data kind process instruction 121.

If there is a data kind designation at Step 1001, the process result 310 of the data processing server 104 is translated in accordance with the data kind set to the data kind process instruction 121, and the translated result is used as the processing result 311 of the data access management unit 103 (1002).

In the data search shown in Fig. 1, since "Original" 510 is designated, the processing result 311 is not translated and is used directly as the processing result 311.

If there is no data kind designation at Step 1001, the processing result 310 of the data processing server 104 is used directly as the processing result 311 of the data access management unit 103 (1003).

With this process, it is possible to return data of the data kind requested by AP 102.

As described above, the data search process suitable for each data kind can be executed.

Next, the details of the data registration process by the data processing system 101 will be given.

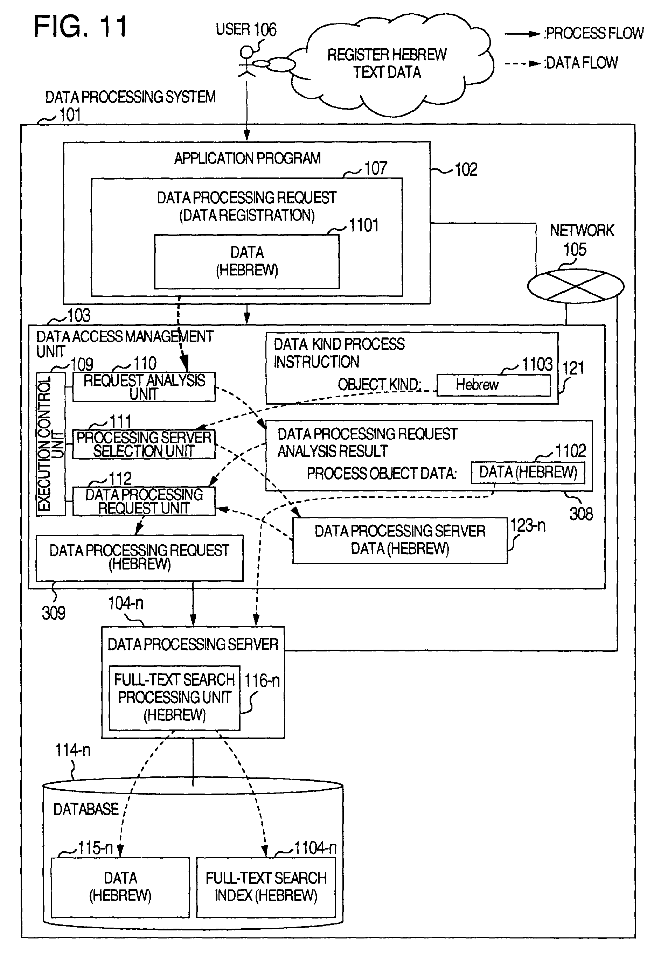

Fig. 11 is a conceptual diagram showing the outline of the data registration process by the data processing system 101.

The fundamental structure is the same as that shown in Fig. 1, and the process flow is the same as the data processing flow shown in Fig. 3. The data registration process will be described in the order of a process flow.

First, in response to a request from the user 106, AP 102 requests for the data registration. It is assumed that this request is a request for registration of Hebrew text data. AP 102 requests the data access management unit 103 to execute a data registration process. The data processing request 107 contains Hebrew text data 1101.

Next, the request analysis unit 110 of the data access management unit 103 analyzes the request. The analysis result is output as the data processing request analysis result 308 and data kind process instruction 121.

The data processing request analysis result 308 contains process object data 1102.

A data kind identifier 1103 "Hebrew" is being set as the object data kind to the data kind process instruction 121.

Next, in accordance with the data kind process instruction 121, the processing server selection unit 111 selects the data processing server and outputs the data processing server information 123-n.

Next, the data processing request unit 112 requests the data processing server 104-n of the Hebrew kind to execute the data processing.

The data processing server 104-n stores the Hebrew data 402 in the database 114-n as Hebrew data 115-n. The full-text search unit 116-n of the Hebrew kind registers an index entry of the data 115-1 in a full-text search index 1104-n.

Upon completion of the registration process by the data processing server 104-n, the registration result is transmitted to the data access management unit 103, and the completion of the registration process is notified to AP 102 to thereafter terminate the data registration process.

With this process, the data access management unit 103 selects the data processing server for the data registration process in accordance with the data kind of the data 1101 to be registered, so that the data registration process suitable for each data kind can be executed.

The data processing server can execute the data registration process by using as an object only the data of a corresponding data kind.

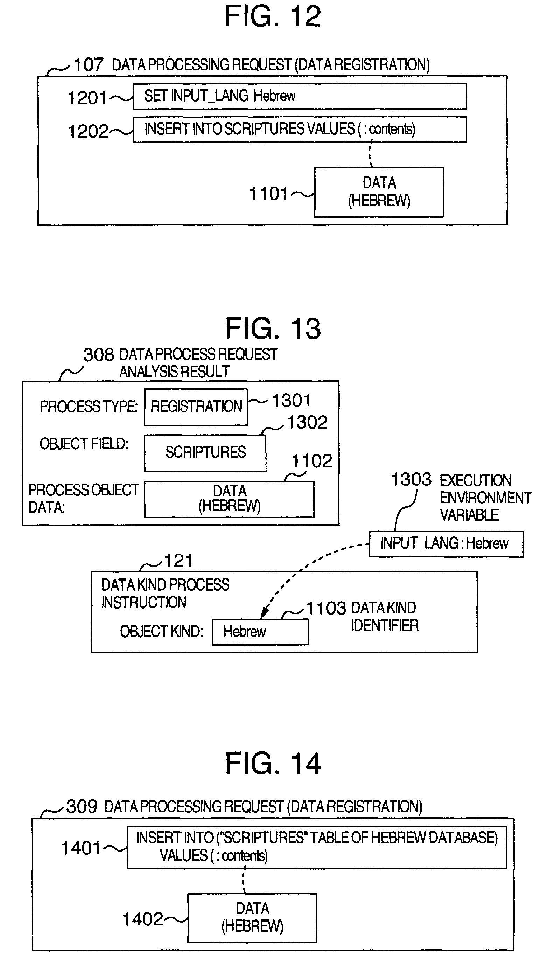

Fig. 12 is a diagram showing the data structure of the data registration process request.

The data processing request 107 for data registration includes a designation 1201 of the execution environment variable indicating the data kind of the data to be registered, a data registration request statement 1202 and data 1101 to be registered.

The designation 1201 sets a value "Hebrew" of the data kind representative of Hebrew to the execution environment variable INPUT_LANG. This execution environment variable INPUT_LANG indicates the language type of data to be registered. Since the value is "Hebrew", the registration data is Hebrew.

The SQL statement 1202 indicates a request "register data in a collection of documents on the Scriptures". The registration data 1101 is character string data described in Hebrew. The registration data 1101 is related to the variable: contains in the SQL statement 1202.

The data kind is designated in the data processing request so that the data kind can be identified. The designation of the data kind is analyzed by the request analysis unit 110 at Step 402 shown in Fig. 4 to identify the data kind.

Fig. 13 shows the structure of the data processing request analysis result 308 for the data registration.

The details of the analysis result output by the data processing request analysis process shown in Fig. 4 are given.

The data processing request analysis result 308 for the data registration includes a process type 1301, an object field 1302 and process object data 1102.

The process type 1301 is set with a value representative of "registration" because of the analysis result of the INSERT statement in the SQL statement 1202 for the data registration shown in Fig. 12.

The object field 1302 is set with a value representative of the "Scriptures" because of the analysis result of the INSERT statement in the SQL statement 1202 for the data registration shown in Fig. 12.

The process object data 1102 is constituted of the data 1101 contained in the data processing request 107.

The value "Hebrew" 1103 representative of the Hebrew language is set as the object data kind to the data kind process instruction 121, in accordance with the execution environment variable 1303 recognized by analyzing the designation 1201 of the data kind set to the data registration request shown in Fig. 12.

With this data structure, the analysis contents of the data processing request can be expressed in a structured manner. It is possible to designate a process suitable for the data kind by providing the data kind to be processed.

Fig. 14 is a diagram showing the data structure of the data registration processing request from the data access management unit 103 to the data processing server 104.

This data processing request is generated at Step 801 shown in Fig. 8.

The data processing request 309 for the data registration includes a registration request statement 1401 and data 1402.

At Step 801 shown in Fig. 8, the registration object area set to the request statement 1401 for the data registration is mapped to the schema of the database 114-n of the data processing server 104-n of the Hebrew data kind to generate a table of the Scriptures of the Hebrew database.

Hebrew data 1402 designated to be registered is set to the variable: contents of the registration value.

With this structure, the data processing request 107 from AP 102 can be transmitted in the format suitable for each data processing server.

As described above, the data registration process suitable for each data kind can be executed.

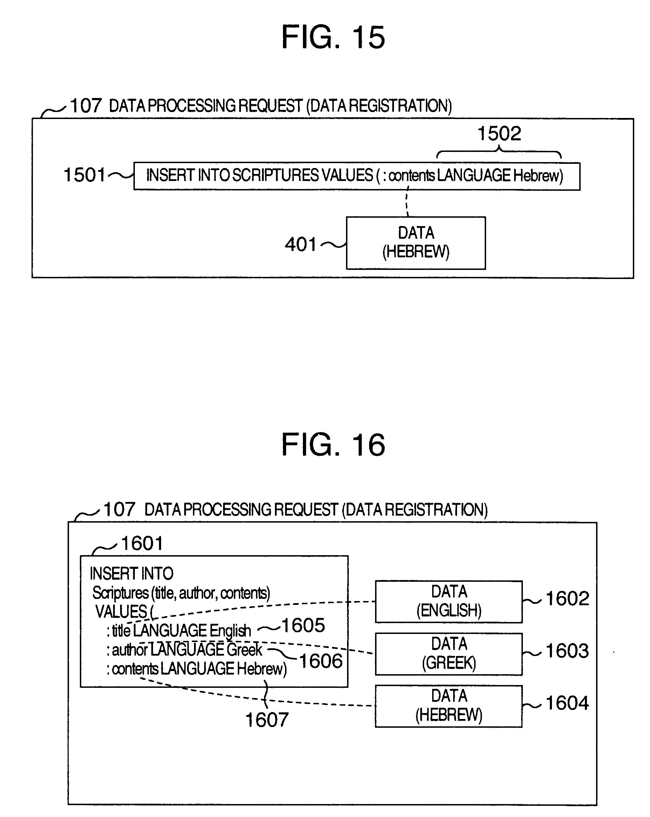

Next, an example of designation of the data kind by an attribute of the data variable by AP 102 will be described. Fig. 15 is a diagram showing the data structure of the data processing request 107 from AP 102.

In a data registration request statement 1501, an attribute LANGUAGE Hebrew 1502 is designated to the variable: contents representative of the registration data 1101. With this setting, the designation equivalent to the data kind designation 1201 by the execution environment variable for the data processing request shown in Fig. 12 can be realized.

This designation is analyzed by the processing request analysis unit 110 so that a process similar to the data registration process described earlier can be executed.

Next, a first example of processing data constituted of a plurality of partial data of different data kinds according to a second embodiment of the invention will be described.

The fundamental structure of the second embodiment of the invention is similar to that shown in Fig. 1. The process flow will be sequentially described starting from the data processing request from AP 102.

Fig. 16 is a diagram showing the outline of an interface for the data processing request 107 from AP 102 according to the second embodiment of the invention.

A request statement 1601 contained in the data processing request 107 for the data registration requests to insert character string data into three columns, title, author and contents of the Scriptures table.

Attributes 1605, 1606 and 1607 for the variables in each column indicate that the data kind of the title character string data 1602 is English, the data kind of the author character string data 1603 is Greek, and the data kind of the contents character string data 1604 is Hebrew, respectively.

With this interface, it is possible to constitute values of one row by a plurality of column values of different data kind.

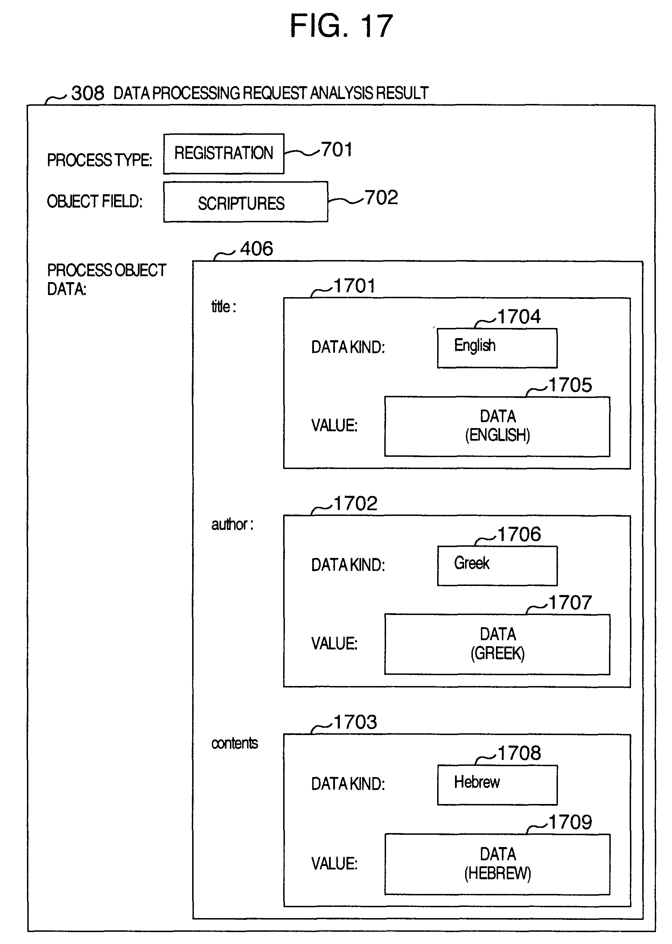

Fig. 17 is a diagram showing the data structure of the analysis result of the data processing request by the interface shown in Fig. 16.

The fundamental structure is the same as the data processing request analysis result 308 shown in Fig. 13. Different points are that the process object data 1102 contains partial data 1701, 1702 and 1703 corresponding to the three columns, title, author and contents.

Each of the partial data 1701, 1702 and 1703 is constituted of a data kind and a value.

The partial data 1701 corresponding to the column title is constituted of the data kind "English" 1704 and a value 1705 of the title character string data.

The partial data 1702 corresponding to the column author is constituted of the data kind "Greek" 1706 and a value 1707 of the author character string data.

The partial data 1703 corresponding to the column author is constituted of the data kind "Hebrew" 1708 and a value 1709 of the contents character string data.

With this data structure, it is possible to discriminate between the data kinds of the partial data of the process object data.

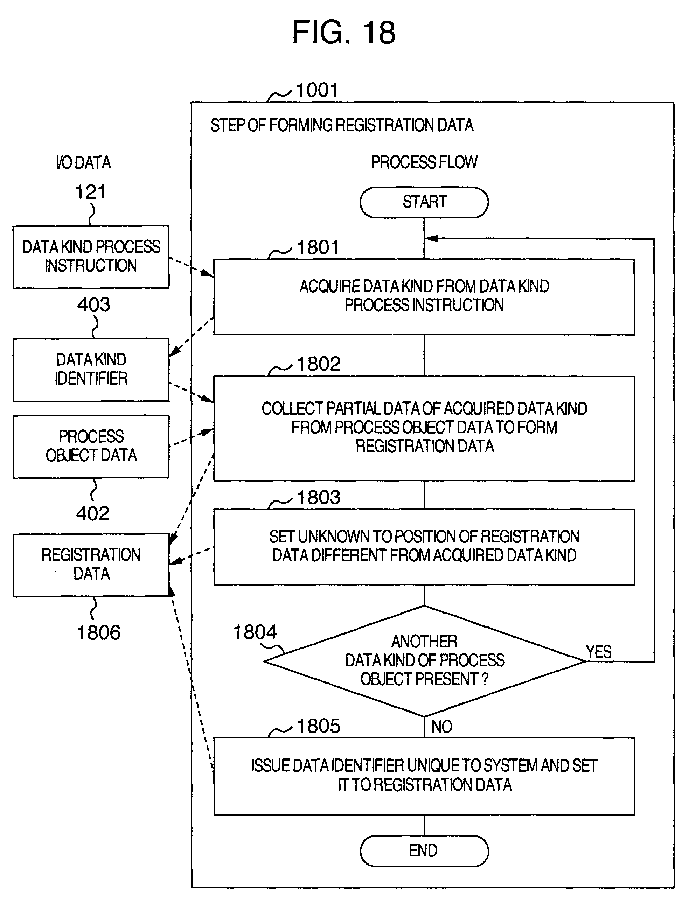

Fig. 18 is a flow chart illustrating a process of generating a data processing request to be sent to the data processing server when the data is to be registered in accordance with the data processing request analysis result shown in Fig. 17.

The details of the process corresponding to Step 801 shown in Fig. 8 are given.

First, the data processing request unit 112 acquires the data kind identifiers from the object data kinds of the data kind process instruction 121 (1801). The data kind identifiers include the data kind identifier "English" and the like.

Next, the partial data belonging to the data kinds acquired at Step 1801 is collected from the process object data 1102 and registration data 1806 to be registered in the data processing server is generated (1802). For the data kind identifier "English", the registration data 1806 is constituted of the title partial data 1705.

Next, of the registration data generated at Step 1802, the partial data of the data kind not to be processed is set with information "unknown" indicating that the data is unknown (1803). For the data kind identifier "English", the data for the author and contents is set with the information "unknown".

Next it is judged whether there is a data kind to be processed (1804).

If there is still a data kind, the flow returns to Step 1801 to repeat the above processes. By repeating the processes up to Step 1804, a plurality of registration data are generated if there are a plurality of data kinds. In this case, the other registration data for the Greek and Hebrew data kinds is generated.

If there is no other data kind at Step 1804, the flow advances to the next Step.

The data processing system 101 then issues a unique data identifier which is set to the registration data (1805). If a plurality of registration data are generated, the single data identifier issued is set to all the registration data. With the above processes, the process of generating the registration data is terminated.

With this process, the registration data 1806 of each data kind can be generated for registering the data constituted of a plurality of partial data of different data kinds.

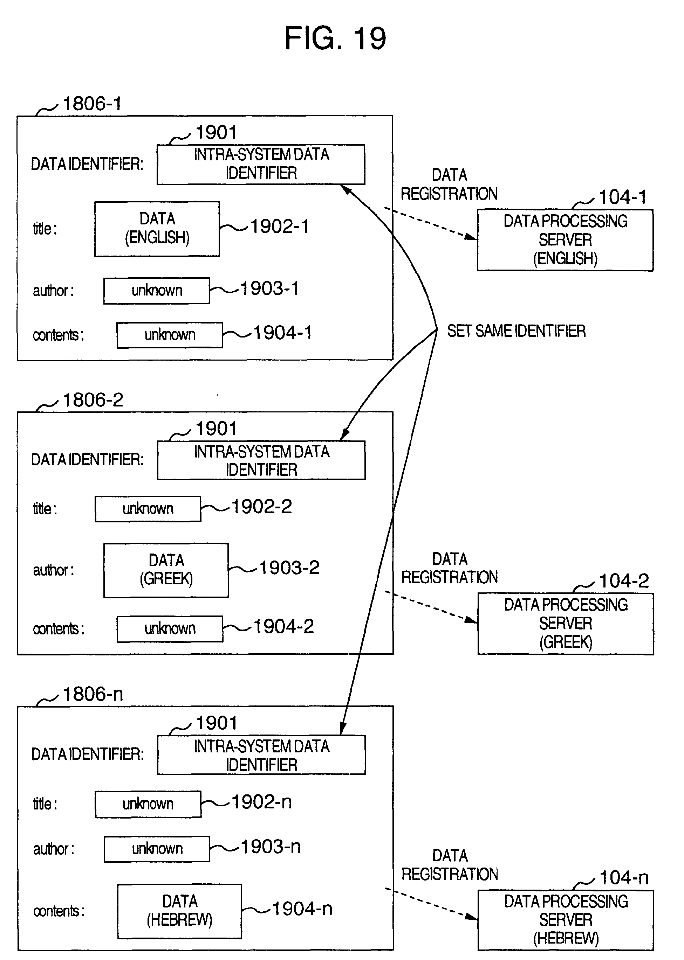

Fig. 19 is a diagram showing the structure of the registration data generated by the process shown in Fig. 18.

With the process shown in Fig. 18, the registration data for the data kinds "English", "Greek" and "Hebrew" is generated having the structures 1806-1, 1806-2 and 1806-n.

Each registration data 1806-1, 1806-2 and 1806-n has the same intra-system data identifier 1901.

The registration data 1806-1 generated for the data kind "English" is constituted of a data identifier 1901, tile partial data of title character string data 1902-1, author partial data "unknown" 1903-1, and contents partial data "unknown" 1904-1. This registration data 1806-1 is registered in the data processing server 104-1 of the English data kind.

The registration data 1806-2 generated for the data kind "Greek" is constituted of the data identifier 1901, tile partial data "unknown" 1902-2, author partial data of author character string data 1903-1, and contents partial data "unknown" 1904-2. This registration data 1806-2 is registered in the data processing server 104-2 of the Greek data kind.

The registration data 1806-n generated for the data kind "Hebrew" is constituted of the data identifier 1901, tile partial data "unknown" 1902-n, author partial data "unknown" 1903-n, and contents partial data of contents character string data 1904-n. This registration data 1806-n is registered in the data processing server 104-n of the Hebrew data kind.

With this structure, the process object data constituted of a plurality of partial data of different data kinds can be generated as the registration data of each data kind.

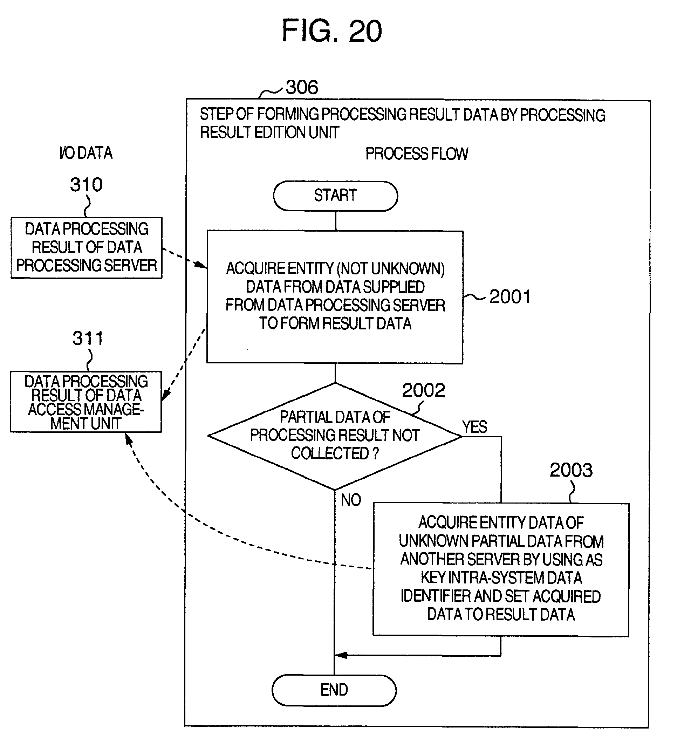

Fig. 20 is a flow chart illustrating the process of the processing result edition unit 113 when the retrieved registration data having the structure shown in Fig. 19 is edited.

This process is executed before Step 1001 in the processing result editing process shown in Fig. 10.

First, the processing result edition unit 113 acquires entity data not "unknown" from the partial data received from the data processing server, to generate the processing result data 311 (2001).

Next, it is checked whether the entity data of all the partial data of the processing result has been collected (2002).

If not collected, the entity data of the partial data "unknown" is acquired from another data processing server and set to the processing result data 311 (2003). After the entity data of all the partial data is collected, the process is terminated.

With this process, the original one set of the process object data can be generated from divided partial data.

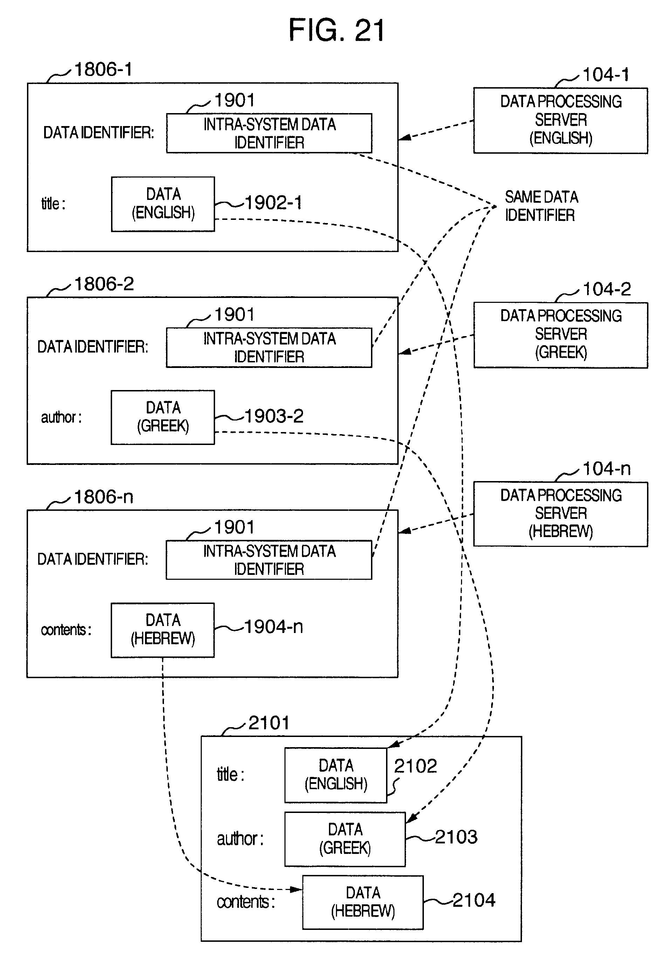

Fig. 21 is a diagram showing the structure of the processing result data generated by the process shown in Fig. 20.

Title entity data 1902-1, author entity data 1903-2 and contents entity data 1904-n are collected and these data are used as partial data 2102, 2103 and 2104 to generate processing result data 2101.

Next, a second example of processing data constituted of a plurality of partial data of different data kinds according to the second embodiment of the invention will be described.

In this second example, the language type of the partial data is designated by a tag in a text described in XML (eXtensible Markup Language).

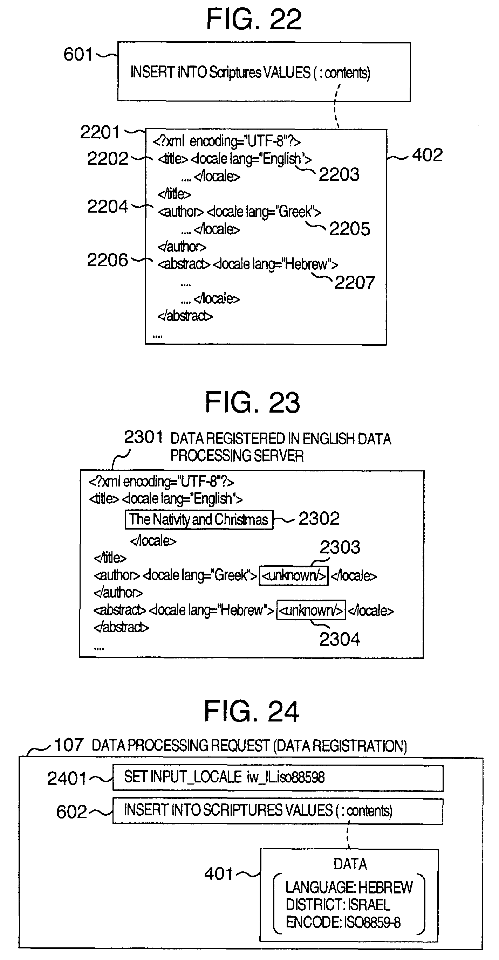

Fig. 22 is a diagram showing the outline of an interface for the process object data 402 for the data registration.

The process object data 402 is text data described in XML.

A statement 2201 indicates that character string data is described in XML and that character codes are Unicode UTF-8.

An area surrounded by tags title 2202 shows the title of this text. By designating "English" 2203 to the tag locale attribute language, it is possible to indicate that an area surrounded by the tags locale is English character strings.

An area surrounded by tags author 2204 shows the author of this text. By designating "Greek" 2205 to the tag locale attribute language, it is possible to indicate that an area surrounded by the tags locale is Greek character strings.

An area surrounded by tags author 2206 shows the contents of this text. By designating "Hebrew" 2207 to the tag locale attribute language, it is possible to indicate that an area surrounded by the tags locale is Hebrew character strings.

With this interface, data constituted of a plurality of partial data of different data kinds can be expressed.

Fig. 23 is a diagram showing the structure of registration data to be registered in the data processing server by using XML data shown in Fig. 22.

In this example, registration data 2301 of the data kind "English" is shown.

The entity 2302 of the data kind "English" acquired by the process shown in Fig. 18 is retained, and the partial character strings of the other data kinds are replaced by "unknown" tags 2303 and 2304.

With this structure, the registration data can be expressed which the data processing server of each data kind can properly process.

Next, an example of processing more complicated data kinds according to a third embodiment will be described.

The fundamental structure of the third embodiment of the invention is similar to the first embodiment. Main different points reside in that the data kind is represented by information having a complicated structure and that even if a data processing server selected does not match the data kind to be processed, the data is translated and the data processing server is requested to execute the data processing.

Fig. 24 is a diagram showing the outline of an interface wherein a data kind is represented by locale information.

In the examples described above, the data kinds are represented by the language types such as English, Green, and Hebrew. In this example, the data kind is expressed by a combination of a language type, a district, and encode.

The language, district and encode are in conformity with the locale model of POSIX (Portable Operating System Interface for UNIX) standards. The language, district and character code are described, for example, as "en_IL.iso88591".

In a statement 2401, the execution environment variables designate that the locale of registration data is "iw_IL.iso88598". This shows that the language of the registration data is Hebrew, the district is Israel, and the encode is ISO 8859-8.

With this interface, the data kind having a composite structure can be expressed.

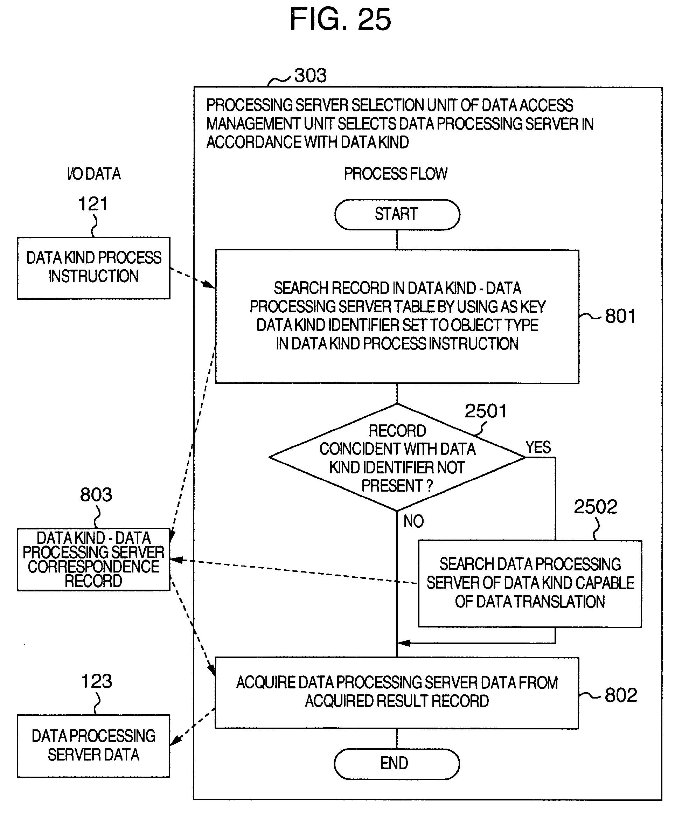

Fig. 25 is a flow chart illustrating a process of selecting a data processing server when data of a data kind having a composite structure shown in Fig. 24 is to be registered.

This process is fundamentally the same as the processing server selection process shown in Fig. 6. The different point is that between Steps 601 and 602 it is judged whether there is a record coincident with the data kind identifier (2501), and if not, the data processing server capable of translating data is searched (2502).

With this process, even if data processing servers capable of perfectly processing a number of complicated data kinds are not provided, data processing servers capable of processing a small number of data kinds through data translation can be used.

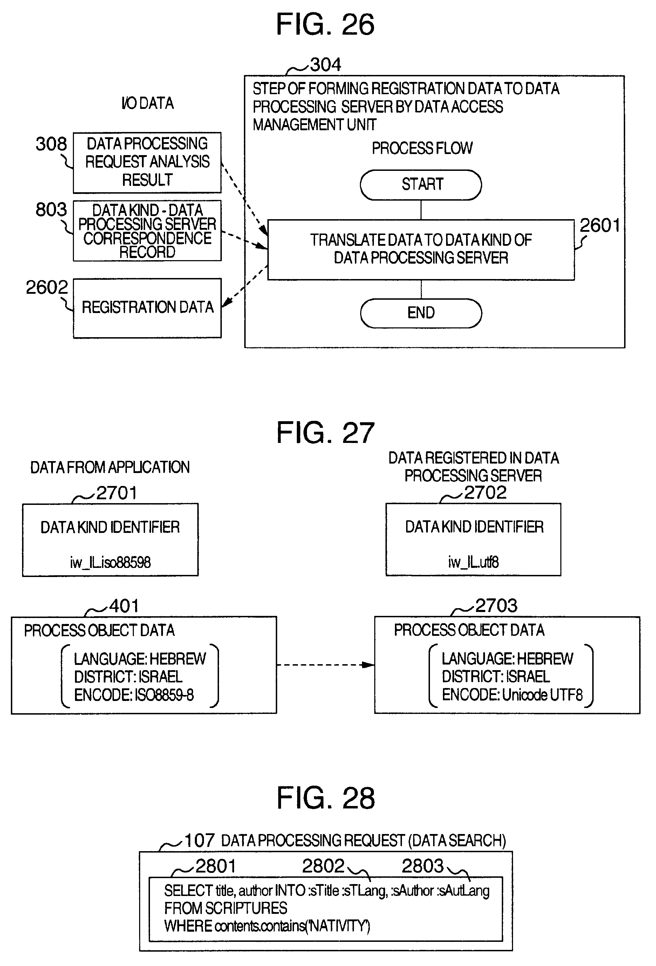

Fig. 26 is a flow chart illustrating a data translation process to be executed when data is registered in the data processing server.

The process object data contained in the data processing request analysis result 308 is translated in accordance with the data kind capable of data translation searched at Step 2502 shown in Fig. 25 (2601).

With this process, even if the data processing server perfectly coincident with the complicated data kind is not provided, data can be registered.

Fig. 27 is a diagram showing the structure of translated data generated by the process shown in Fig. 26.

It is assumed that in the processing request from AP 102, the locale of the registration data 401 is iw_IL.iso88598 and a data kind identifier 2701 is "iw_IL.iso88598". It is also assumed that the data kind - data processing server correspondence table 122 does not contain the record coincident with the data kind identifier, and a record of a data kind identifier "iw_IL.utf8" 2702 capable of data translation was searched. In accordance with the data kind identifier 2702, the data translation by the process shown in Fig. 26 is executed to generate registration data 2703.

With this structure, even if the data processing server perfectly coincident with the complicated data kind is not provided, data can be registered.

Next, an example of receiving a data kind by the application program according to a fourth embodiment will be described.

The fundamental structure of the fourth embodiment of the invention is the same as the first and second embodiments. A main different point is that AP 102 receives the data kind at its application programming interface.

Fig. 28 is a diagram showing the outline of an interface for requesting to receive the data kind in the processing result at AP 102 during the data search.

A request statement 2801 of the data processing request 107 for the data search requests to receive the data kind of the title and author as indicators: sTLang 2802 and sAutLang 2803.

With this interface, when AP 102 receives the data search result from the databases storing data of a plurality of data kinds, AP 102 can know the data kind of each received data.

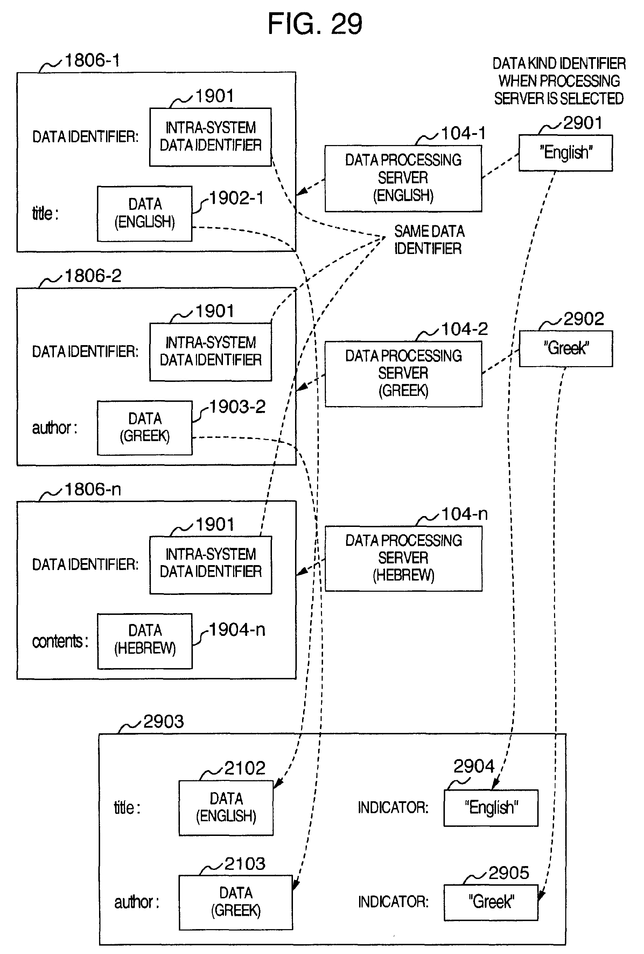

Fig. 29 is a diagram showing the outline of the data structure used when the indicator corresponding to the data kind identifier is returned in response to the search request designated by the interface shown in Fig. 28.

When the processing result edition unit 113 of the data access management unit 103 receives the partial data of the title and author from the data processing servers 104-1 and 104-2, the processing result edition unit 113 sets a title indicator "English" 2904 and an author indicator "Greek" 2905 of processing result data 2903, in accordance with data kind identifiers "English" 2901 and "Greek" 2902 of data processing servers.

It is therefore possible for AP 102 to know the data kind of the processing result data.

Next, an example of searching and selecting a data processing server via the network according to a fifth embodiment of the invention will be described.

The fundamental structure of the fifth embodiment of the invention is the same as that shown in Fig. 1. The main different point is that the data access management unit 103 is not provided with the data kind - data processing server correspondence table 122.

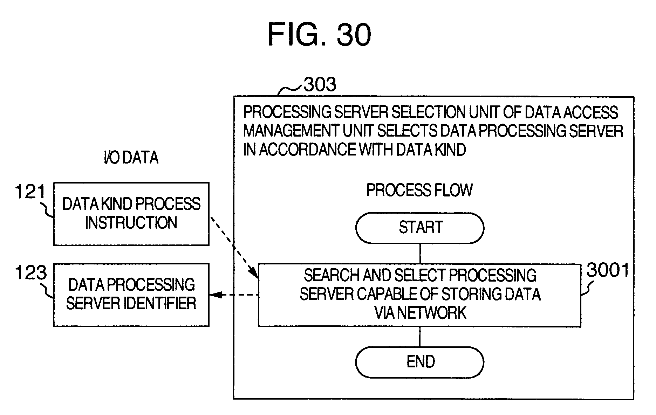

Fig. 30 is a flow chart illustrating the process of selecting a data processing server by the processing server selection unit 111 of the data access management unit 103.

In this example, a data processing server is searched via the network 105 to select a data processing server matching the data kind identifier contained in the data kind process instruction 121, and information of the selected data processing server is returned (3001).

With this process, the configuration of data processing servers in the data processing system 101 is not fixed, and even if the data kind - data processing server correspondence table 122 is not provided, the data processing server capable of executing the data processing can be selected.

Next, an example of adding a data processing server to the data processing system according to a six embodiment of the invention will be described.

The fundamental structure of the sixth embodiment of the invention is the same as that of Fig. 1. The main different point is that a data processing server 114-f of a French data kind is added to the data processing system 101, and information of the data processing server of the French data kind is added to the data kind - data processing server correspondence table 122 of the data access management unit 103.

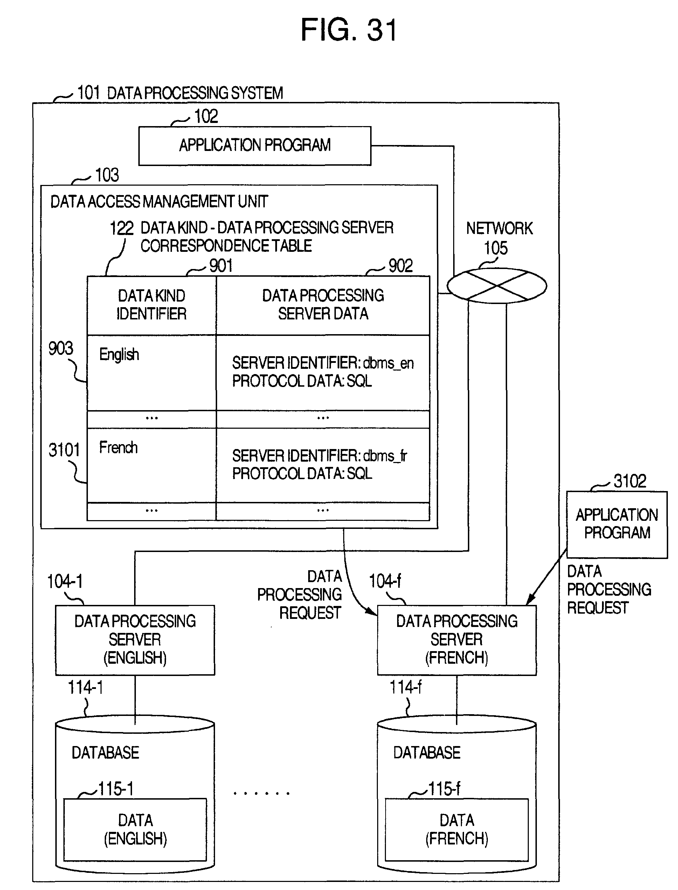

Fig. 31 is a diagram showing the outline of the structure of the data processing system added with a data processing server.

A record 3101 of the data processing server suitable for French language data processing is being added to the data kind - data processing server correspondence table 122.

A data processing server 104-f suitable for French language data processing is being connected to the network 105 and partially constituting the data processing system 101.

With this configuration, by executing the data registration process and data search process described previously, the data processing system 101 can utilize the function of the added French language data processing server 104-f.

By adding only the record 3101 to the data kind - data processing server correspondence table 122, the French data kind can be processed and the data processing by the data processing server 104-f becomes possible.

An application 3102 different from the data processing system 101 can utilize the data processing server 104-f.

It is not necessary to give any modification to the data processing servers 104-1, 104-2,..., 104-n already set to the data processing system.

Next, an example of integrating all the formats of data in each data processing server according to a seventh embodiment will be described.

The fundamental structure of the seventh embodiment of the invention is the same as that of Fig. 1. The main different point is that the same data format is used for the data in the data processing servers 104-1, 104-2, ..., 104-n constituting the data processing system 101.

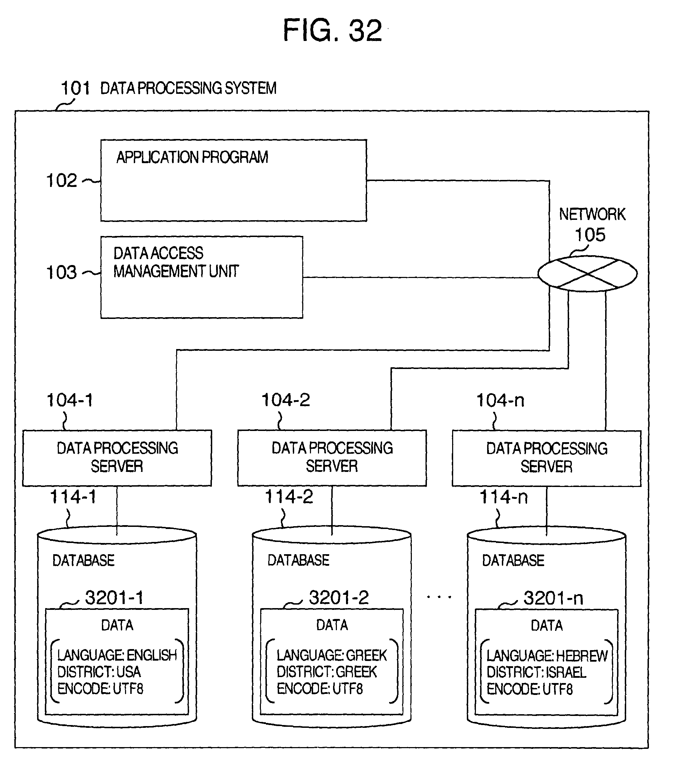

Fig. 32 shows an example of using Unicode as the data format of all data to be processed by data processing servers. UTF8 is used for the encode of all data 3201-1, 3201-2,... 3201-n of the data processing servers 104-1, 104-2, ..., 104-n.

As above, the same data format may be used for all data in the data processing servers 104-1, 104-2, ..., 104-n. The data servers can be discriminated by the data kind, and not by the data type and format.

As described in the above examples, the present invention can provide the following advantages.
(1) In a data processing system for accessing data of a plurality of different data kinds:
   (1-1) Data dependent on the data kind processed by AP is directly processed by the data processing server. It is possible to execute a process matching the data kind without losing the information dependent on the data kind.
   (1-2) Partial data is classified in accordance with the data kind and registered in the data processing server suitable for the data kind. During the data search, those partial data are combined to generate the original data which is returned to AP. It is possible to process data constituted of a plurality of partial data of different data kinds.
(2) In configuring the environment of (1):
   (2-1) By editing only the data kind - data processing server correspondence table, a data processing server can be added to or removed from the data processing system. It is therefore easy to configure a data processing system capable of accessing data of a plurality of different data kinds.
   (2-2) By editing only the data kind - data processing server correspondence table, a data processing server can be added to or removed from the data processing system. It is therefore possible to utilize an already set module which provides the function dependent upon the data kind.
   (2-3) Since a data processing server corresponding to each data kind is used, necessary modules providing data kind dependent functions can be configured as small in number as possible.

These advantages are particularly effective for multilanguage support of a database system.

The operations illustrated in the flow charts described above can be realized by executing a program by the data processing apparatus shown in Fig. 2. Such a program may be stored in a computer readable storage medium such as a hard disk and a floppy disk, or may be accessed via a network.

A collation processing apparatus according to an embodiment will be described in which different collation methods share a plurality of collating keys corresponding to the column values as multidimensional data and the apparatus sorts records through collation of collating keys corresponding to the column values.

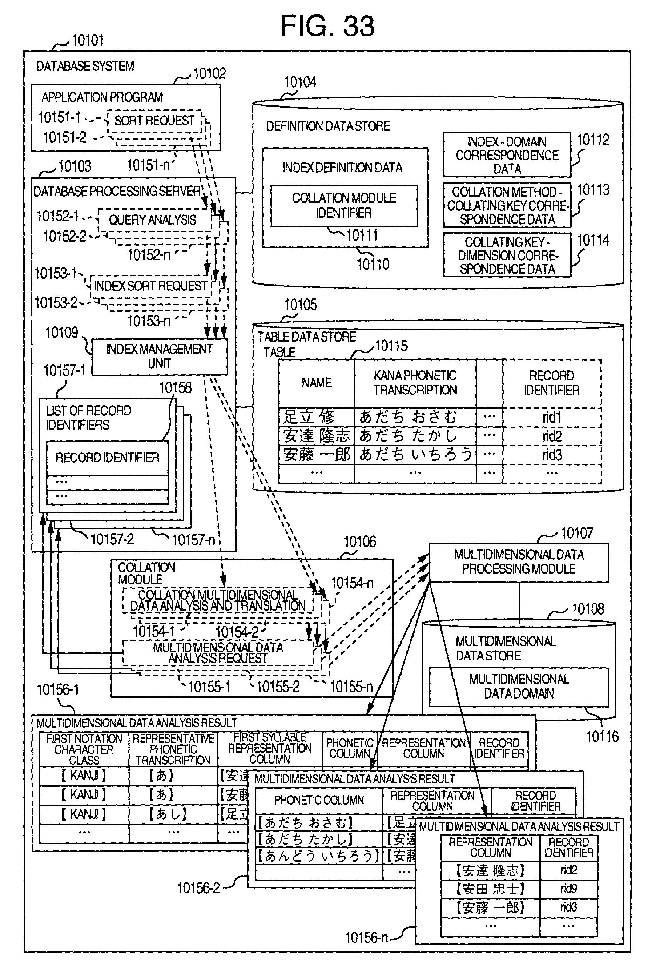

Fig. 33 is a diagram illustrating the outline of the character string sorting process of this embodiment. As shown in Fig. 33, a database system 10101 of this embodiment has a collation module 10106 and a multidimensional data processing module 10107.

The collation module 10106 is a collation processing unit for acquiring a dimension identifier of the collating key corresponding to the column values to be evaluated by the collation method designated by a sort request, and requesting for a sorting process using the collating key. The multidimensional data processing module is a sorting unit for referring to the collating key indicated by the dimension identifier acquired by the collation module 10106, sorting record identifiers 10158 for identifying the records storing the column values of a table 10115 by using the collating key, and sorting the record identifiers 10158 corresponding to the column values in accordance with the designated collation method.

A program for realizing the functions of the collation module 10106 and multidimensional data processing module 10107 of the database system 10101 is stored in a storage medium such as a CD-ROM and loaded in a magnetic disk or the like, and thereafter loaded in a memory and executed. The storage medium storing the program may be other storage media different from CD-ROM.

The outline of the system configuration will first be described. The database system 10101 as the collation processing apparatus of this embodiment has an application program 10102, a database processing server 10103, a definition data store 10104, a table data store 10105, the collation module 10106, the multidimensional data processing module 10107, and a multidimensional data store 10108.

The application program 10102 transmits a database query from a user to the database processing server 10103 and receives the processing result.

The database processing server 10103 supplies a general database management system function and includes an index management unit 10109. The index management unit 10109 receives a sort request using the index of the database processing server 10103, and a record identifier list 10157 is returned.

The definition data store 10104 has index definition data 10110, index - domain correspondence data 10112, collation method - collating key correspondence data 10113, and collating key - dimension correspondence data 10114. The index definition data 10110 includes a collation module identifier 10111 for identifying the collation module 10106 corresponding to the index. The table data store 10105 stores records in a table 10115.

The multidimensional data processing module 10107 is a module which provides a data processing function such as described in "OLAP SOLUTIONS Building Multidimensional Information Systems, Erik Thomsen, John Wiley & Sons, 1997" and which is implemented in accordance with a method disclosed in the Publication JP-A-9-265479 "Multidimensional Data Processing Method". The multidimensional data store 10108 stores a multidimensional data domain 10116 corresponding to the index which, domain stores the coded value of a collating key portion of each record and the record identifier 10158 of the record, as the multidimensional data.

Next, the outline of the query process of this system including the sort request 10151 will be described. The application program 10102 issues a query request to the database processing server 10103 to sort character strings stored in the table data store 10105 by various collation methods (sort request 10151).

The database processing server 10103 analyzes the query request from the application program 10102 to generate a query analysis result 10152. This analysis process searches the index definition data 10110 to judge whether the index is used for the sorting process. If there is the index definition data 10110 corresponding to the sort object, it is determined from this data that the database processing is executed by using the index. The order obtained by using the index is used as the order of sorting.

If it is determined from the query analysis result 10152 that the index is used, the database processing server 10103 requests the index management unit 10109 to sort (index sort request 10153). In accordance with the collation module identifier 10111 contained in the index definition information 10110, the index management unit 10109 requests the collation module 10106 to sort.

The collation module 10106 executes collation-multidimensional data analysis conversion 10154 by referring to the index - domain correspondence data 10112, collation method - collating key correspondence data 10113 and collating key - dimension correspondence data 10114 respectively stored in the definition data store 10104. This conversion acquires information on a domain for the multidimensional data process corresponding to the index, on a collating key of the applied collation method, on a dimension identifier for identifying the collating key for the multidimensional data domain 10116 corresponding to each collation stage, and on a priority order of the collating key. By designating this information, a multidimensional data analysis request 10155 is issued to the multidimensional data processing module 10107.

In accordance with the collation method suitable for each sort request 10151 from the application program 10102, the multidimensional data analysis request 10155 receives as its input the evaluation of the collating key at each collation stage in correspondence wit the dimension identifier and priority order, and outputs the record identifier list 10157 as the analysis result.

The multidimensional data processing module 10107 executes a sort process by analyzing the multidimensional data for each dimension collating key in accordance with the priority order, and returns a multidimensional data analysis result 10156.

The collation module 10106 passes the multidimensional data analysis result 10157 to the index management unit 10109 as the sorting result. The index management unit 10109 uses this sorting result as the record identifier list 10157. The database processing server 10103 receives a response representative of the sorting process end from the index management unit 10109, and returns a query process end to the application program 10102. The query process is thereafter terminated.

The result of the sort query process is picked up by using FETCH of general SQL. In response to a fetch request from the application program 10102, the database processing server 10103 sequentially picks up the record identifiers from the record identifier list 10157, picks up the records identified by the identifiers from the table data store 10105, and returns them to the application program 10102.

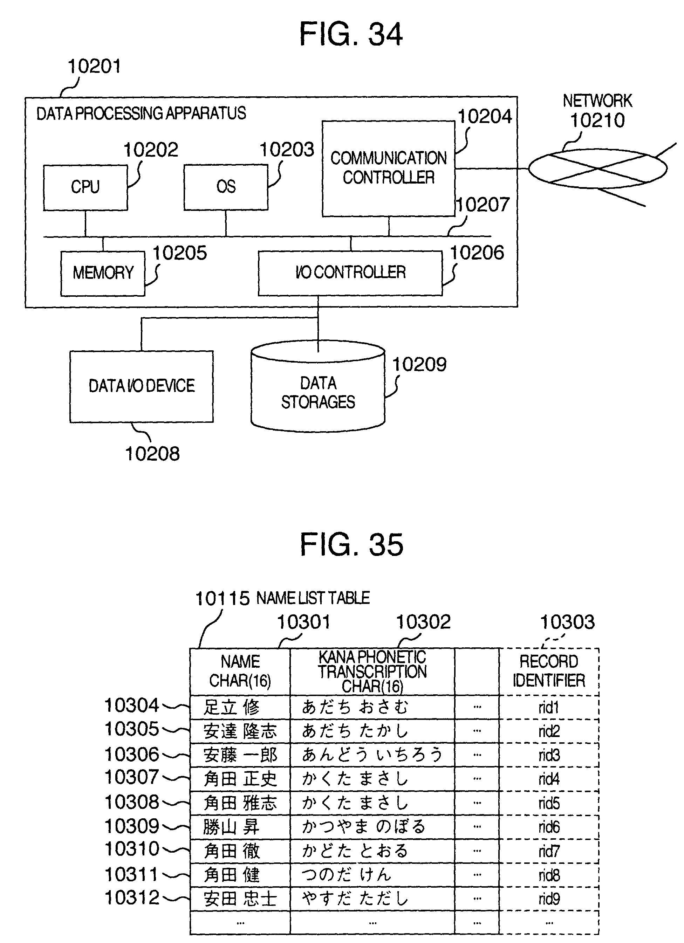

Fig. 34 is a diagram showing the outline structure of the collation processing apparatus of this embodiment. The database system 10101 of this embodiment runs on a general data processing apparatus 10201.

The data processing apparatus 10201 has a CPU 10202, an OS 10203, a communication controller 10204, a memory 10205, an I/O controller 10206, a system bus 10207 interconnecting these components, and the like. The I/O controller 10206 is connected to a data input/output device 10208 such as a keyboard, a mouse and a display, a data storage 10209 such as a magnetic disk, and the like.

The data processing apparatus 10201 is connected via the communication controller 10204 to a network 10210 such as a LAN (Local Area Network) to communicate with another data processing apparatus 10201 connected to the network 10210.

The function of programs described with Fig. 33 and programs to be later described is realized by executing the programs stored in the memory 10205 by CPU 10202 under the control of OS 10203. The definition data store 10104, table data store 10105, multidimensional data store 10108 and the like are realized by storing data in the data storage 10209.

Fig. 35 is a diagram showing an example of the table 10115 of this embodiment. Fig. 35 shows the structure of the table 10115 storing records in the database system 10101.

The table 10115 which is a name list has a name column 10301, a kana phonetic transcription column 10302, and other columns. A record identifier 10303 is assigned to each record. The column value of the name column 10301 takes a value of CHAR type sixteen characters or shorter, and the kana phonetic transcription column 10302 takes a value of CHAR type sixteen characters.

A record 10304 has a value of " 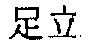 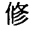 (Adachi Osamu)" in the name 10301, and a value of " 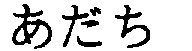 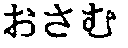 (Adachi Osamu)" in the kana phonetic transcription 10302. The database processing server 10103 discriminates the record from other records from the record identifier rid1. Other records 10305 to 10312 are structured in a similar manner.

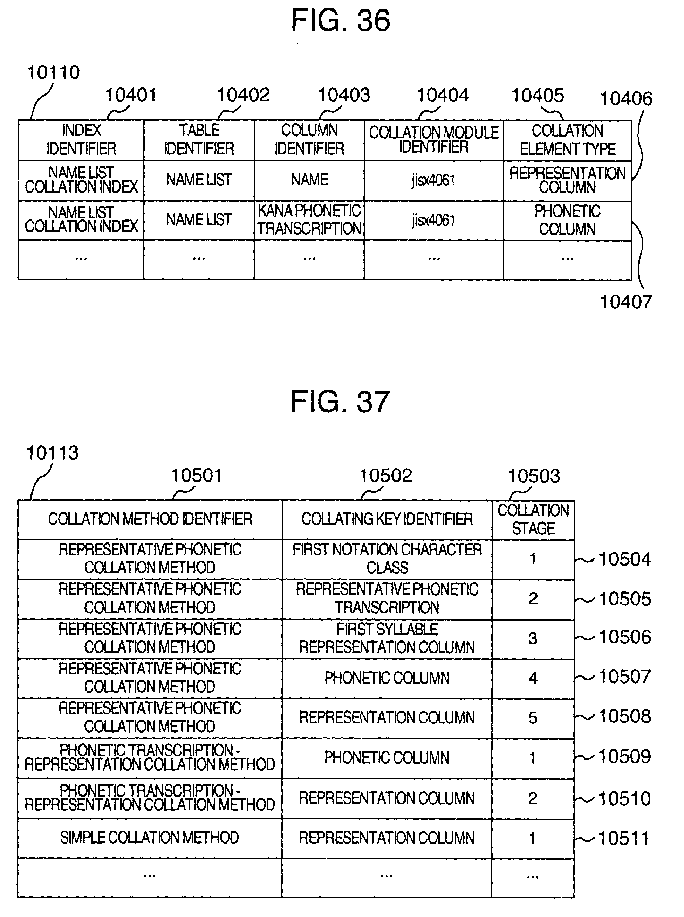

Fig. 36 is a diagram showing an example of the index definition data 10110 of this embodiment. The index definition data is constituted of an index identifier 10401, a table identifier 10402, a column identifier 10403, a collation module identifier 10404, and a collation element type 10405.

The index identifier 10401 is an identifier for discriminating the index of the definition data from other indexes. The table identifier 10402 is an identifier for identifying a table to which an index is set. The column identifier 10403 is an identifier for identifying the column which becomes a key to which an index is set.

A combination of a plurality of columns including a plurality of definition data such as records 10406 and 10407 is used as keys for the index. The records 10406 and 10407 indicate that the combination of the name 10301 and kana phonetic transcription 10302 is keys for the index (name list collation index).

The collation module identifier 10404 is an identifier for identifying the collation module 10106 which is activated when a collation process is executed by using the index indicated by the definition data. The collation element type 10405 indicates the type of the collation element corresponding to the column identifier 10403. In the record 10406, the name 10301 is used as the collation element for the representation column collation.

In summary, the records 10406 and 10407 set the index discriminated as the "name list collation index". A combination of the name 10301 and kana phonetic transcription 10302 of the name table 10115 is used as the keys for the index. The index collation process is executed by the collation module 10106 identified by jisx4061. The collation elements used for collation are a combination of the representation column and phonetic column corresponding to the columns of the name 10301 and kana phonetic transcription 10302.

Such index definition data 10110 can be generated by extending an index definition function provided by a general database management system.

Fig. 37 is a diagram showing an example of the collation method - collating key correspondence data 10113. The collation method - collating key correspondence data 10113 includes a collation method identifier 10501, a collating key identifier 10502 and a collation stage 10503.

Each of records 10504 to 10508 indicates the collating key of the representative phonetic collation method and its collation stage. Namely, they indicate that the start characters of the representation column are evaluated in the order of character classes at the first stage of the collation procedure of the representative phonetic collation method, that the evaluation is made at the second stage by using the representative phonetic transcription of the first syllable as the collating key, that the evaluation is made at the third stage by using the representation column of the first syllable as the collating key, that the evaluation is made at the fourth stage by using the phonetic column as the collating key, and that the evaluation is made at the fifth stage by using the representation column as the collating key.

A record 10509 indicates that the evaluation is made at the first stage of the collation procedure of a phonetic-representation collation method by using the phonetic column as the collating key. A record 10510 indicates that the evaluation is made at the second stage of the collation procedure of the phonetic-representation collation method by using the representation column as the collating key. A record 10511 indicates that the evaluation is made at the first stage of the collation procedure of a simple collation method by using the representation column as the collating key.

For example, since both the records 10507 and 10509 set the collating key identifier "phonetic column", it can be known that the phonetic column collating key is used in common at the fourth stage of the collation procedure of the representative phonetic collation method and at the first stage of the collation procedure of the phonetic - representation collation method.

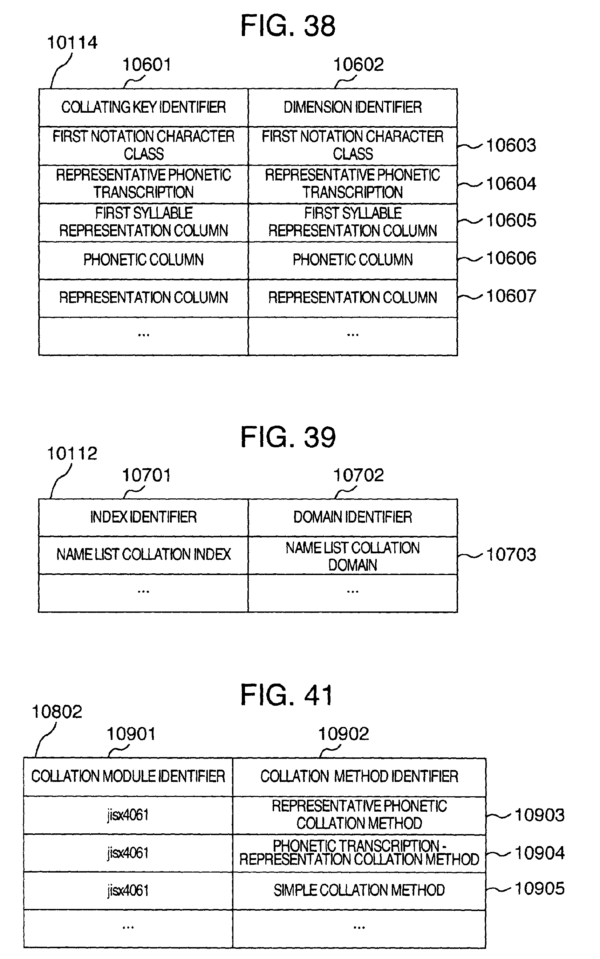

Fig. 38 is a diagram showing an example of the collating key - dimension correspondence data 10114. The collating key - dimension correspondence data 10114 includes a collating key identifier 10601 and a dimension identifier 10602.

A record 10603 indicates that the collating key discriminated by a "first notation character class" corresponds to the dimension discriminated by the "first notation character class" in the multidimensional data domain 10116. Similarly, the collating keys of records 10604 to 10607 correspond to respective dimensions in the multidimensional data domain 10116.

For example, since both the records 10507 and 10509 use the collating key identifier "phonetic column", the dimension "phonetic column" in the multidimensional data processing is used in common by a plurality of collation methods.

Fig. 39 is a diagram showing an example of the index - domain correspondence data 10112 of this embodiment. In the database system 10101, the multidimensional data domain 10116 is provided for each index. This correspondence is indicated by the index - domain correspondence data 10112.

The index - domain correspondence data 10112 includes an index identifier 10701 and a domain identifier 10702. A record 10703 indicates that the index discriminated by a "name list collation index" corresponds to the domain discriminated as "name list collation domain" in the multidimensional data processing module 10107.

Next, an example of an entry registration of multidimensional data when a record is inserted will be described as an example of registering multidimensional data into the multidimensional data domain 10116 of the database system 10101.

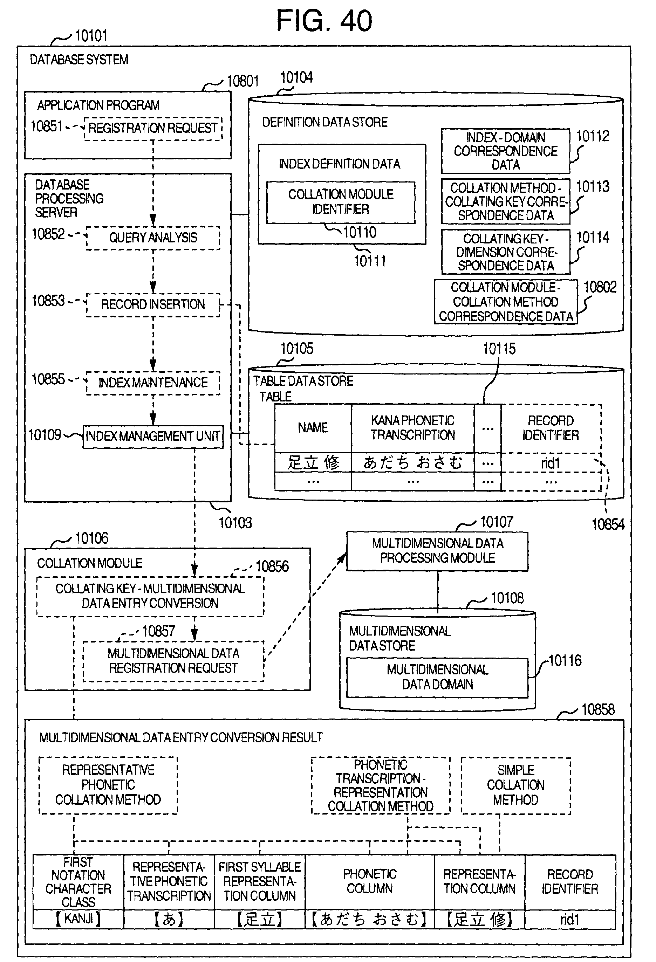

Fig. 40 is a diagram showing the outline of a process of inserting a record into the database system 10101 of this embodiment. The multidimensional data processing module 10107 of this embodiment stores a plurality of collating keys corresponding to the column values in the multidimensional data domain 10116 as the multidimensional data, when a record is inserted, to thereby allow the collating keys in the multidimensional data to be shared by different collation methods.

An application program 10801 requesting a record insertion 10853 issues a registration request 10851 to the database processing server 10103 to store a record in the name list table 10115. The query request is performed, for example, by the following SQL statement.

INSERT INTO Name List VALUES (" 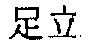 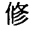 ", " 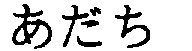 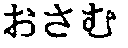 ", ...)

Upon reception of this query request, the database processing server 10103 executes a query analysis 10852 to determine the database processing procedure. The query analysis 10852 analyzes that the query request is a record insertion request, and determines to execute a record insertion 10853 into the table data store 10105.

It is judged from the index definition data 10110 whether an index related to the insertion record is subjected to maintenance. For example, by referring to the records 10406 and 10407 shown in Fig. 36, it is determined to make the name list index be subjected to maintenance.

Next, in accordance with the determined database processing procedure, the record insertion 10853 into the table data store 10105 is executed. The database processing server 10103 determines a store location of the record and stores it in the table data store 10105. Information of the store location is encoded into a record identifier 10854.

Next, in accordance with the database processing procedure determined by the query analysis 10852, an index maintenance 10855 is executed. The database processing server 10103 requests the index management unit 10109 to execute an index entry registration. The index management unit 10109 identifies the collation module 10106 from the collation module identifier 10404 (jisx4061) acquired from the index definition data 10110, and requests the collation module 10106 to execute the entry registration. For this request, the index identifier, collation module identifier, index setting object column value, and record identifier are designated.

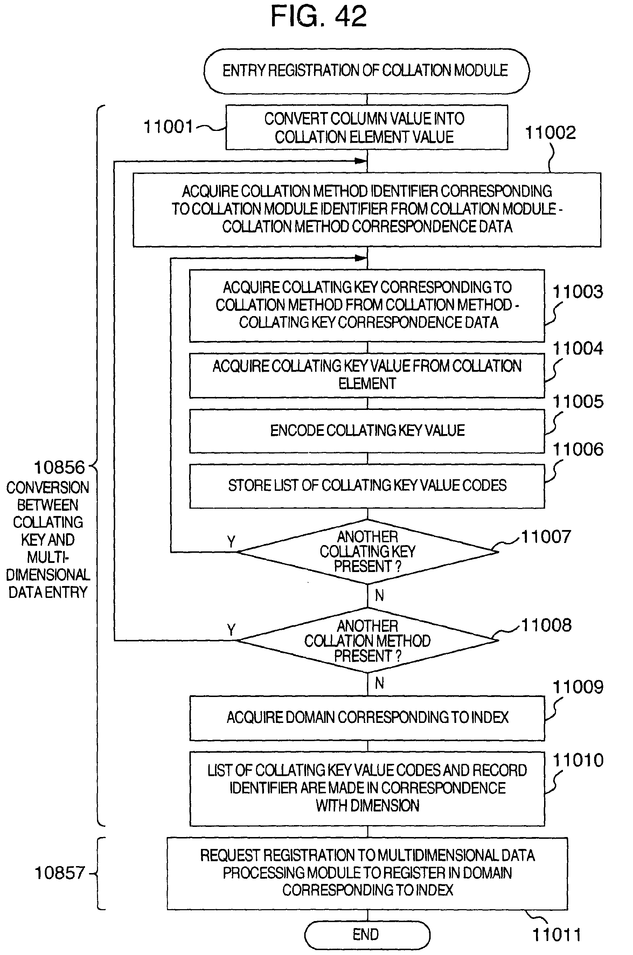

The collation module 10106 acquires a collating key value from the key value of the index, in correspondence with the collation element, in accordance with the index definition data 10110, collation module - collation method correspondence data 10802, and collation method - collating key correspondence data 10113 respectively stored in the definition data store 10104. The collation module 10106 also refers to the collating key - dimension correspondence data 10114 to execute a collating key-multidimensional data entry conversion 10856 in order to make the collating key correspond to the multidimensional data entry. Then, a multidimensional data registration request 10857 is issued to request the multidimensional data processing module 10107 to register a multidimensional data entry conversion result 10858. The entry registration process by the collation module 10106 will be later detailed with reference to Fig. 42.

After the completion of the entry registration by the collation module 10106, the index maintenance by the index management unit 10109 is terminated and the database processing server 10103 returns a record insertion process end to the registration application program to terminate the record insertion process.

Fig. 41 shows an example of the collation module - collation method correspondence data 10802 of this embodiment. The collation module - collation method correspondence data 10802 includes a collation module identifier 10901 and a collation method identifier 10902. Records 10903 to 10905 indicate that the collation module 10106 identified by jisx4061 corresponds to identifiers of three collation methods including the "representative phonetic collation method", "phonetic transcription-representation collation method" and "simple collation method".

Fig. 42 is a flow chart illustrating the process of entry registration by the collation module 10106 of this embodiment. The process shown in Fig. 40 is activated in response to an entry registration request from the index management unit 10109 shown in Fig. 40. This process enters the index identifier, collation module identifier, index setting object column value, and record identifier.

First, with reference to the index definition data 10110, the column value is converted to the value of a collation element (Step 11001). For example, with reference to the records 10406 and 10407 shown in Fig. 36, the column value " 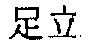 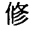 (Adachi Osamu)" of the insertion record is set as the value of the representation column, and the column value " 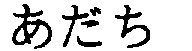 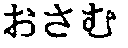 (Adachi Osamu)" as the value of the phonetic column.

Next, with reference to the collation module-collation method correspondence data 10802, the collation method identifier corresponding to the collation module 10106 is acquired (Step 11002). For example, the collation method identifier "representative phonetic collation method" is acquired from the record 10903 shown in Fig. 41.

Next, in accordance with the collation method identifier acquired at Step 11002, the collating key corresponding to the collation method is acquired from the collation method - collating key correspondence data 10113 (Step 11003). For example, in accordance with the collation method identifier "representative phonetic collation method", the collating key identifier "first notation character class" is acquired from the record 10504 shown in Fig. 37.

Next, a collating key value is acquired from the value of the collation element acquired at Step 11001 (Step 11004). For example, the top character " 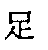 (Ashi)" of the representation column " 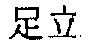 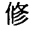 (Adachi Osamu)" is acquired and then its character class "kanji" is acquired (by the collation module 10106 using a character dictionary or the like).

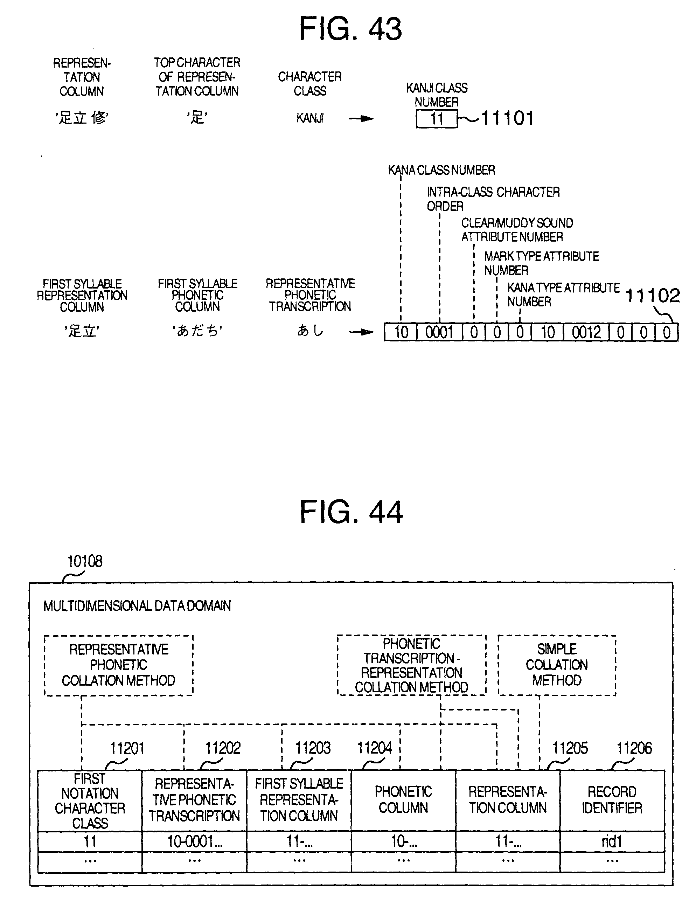

Next, the collating key value acquired at Step 11004 is encoded (Step 11005). The details of encoding will be later described with reference to Fig. 43. The obtained collating key value code is stored in a list format (Step 11006).

Next, it is checked whether there is another collating key acquired at Step 11003 (Step 11007). If there is still another collating key, the processes at Steps 11003 to 11006 are repeated. For example, the collating keys correspond to the records 10505 to 10508 and the like shown in Fig. 37, and the processes at Steps 11003 to 11008 are repeated for those records.

If there is no collating key at Step 11007, the flow advances to next Step 11008. At Step 11008 it is checked whether there is another collation method identifier acquired at Step 11002. If there is still another collation method, the processes at Steps 11002 to 11008 are repeated. For example, there are records 10904 and 10905 or the like shown in Fig. 41, and the processes at Steps 11002 to 11008 are repeated for these records. Namely, a process of acquiring the collating key is repeated for the phonetic transcription - representation collation method and simple collation method.

If there is no collation method identifier at Step 11008, the flow advances to next Step 11009. With the above processes, for all the collating keys of the collation methods related to the collation module 10106, a list of encoded values of the collating key values has been obtained. Next, with reference to the index - domain correspondence data 10112, an identifier of the domain which requests the multidimensional data processing module 10107 to register is acquired (Step 11009). For example, with reference to the record 10703 shown in Fig. 39, the domain identifier "name list collation domain" is acquired.

Next, with reference to the collating key-dimension correspondence data 10114, the list of the collating key value codes formed at Step 11006 and the record identifiers are made in correspondence with the dimension in the multidimensional data processing module 10107 (Step 11010). For example, with reference to the records 10603 to 10607 or the like shown in Fig. 38, the collating key value code is made in correspondence with the dimension. Namely, the code value of the first notation character class "kanji" of " 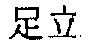 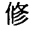 (Adachi Osamu)" is made in correspondence with the dimension "first notation character class". The record identifier rid1 is made in correspondence with the dimension "record identifier".

Next, an entry registration is requested to the multidimensional data processing module 10107 (Step 11011). For this request, the domain is designated by the domain identifier "name list collation domain" acquired at Step 11009, and the dimension and code value acquired at Step 11010 are designated. After the entry registration by the multidimensional data processing module 10107, this process is terminated. With this process, the code values of all collating keys of the collation methods to be applied to sorting are registered in the multidimensional data domain 10116, for the entry registration of each record.

Fig. 43 is a diagram showing an example of the code of a collating key value of this embodiment. An example of the structure of codes generated by the entry registration by the collation module 10106 at Step 11005 shown in Fig. 42 is shown in Fig. 43.

A collating key 11101 is used at the first stage of the representative phonetic collation method, and indicates a code of the character class of the first character in the representation column. The character class of the first character " 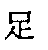 (a)" of the representation column " 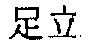 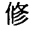 (Adachi Osamu) is "kanji" which has a character class number "11" defined in JIS X 4061. Therefore, the code of the collating key is set to "11".

A collating key 11102 is used at the second stage of the representative phonetic collation method, and indicates a code of the representative phonetic transcription. Since the representative phonetic transcription of the representation column " 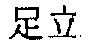 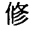 (Adachi Osamu)" and phonetic column " 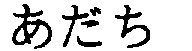 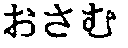 (Adachi Osamu)" is " 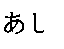 (ashi)" which is determined by the collation module 10106 by using a representative phonetic dictionary or the like, the collating key 11102 is encoded by using the following numbers defined in JIS X 44061.
Character class number: kana..."10"
Character order in character class: " 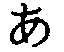 (a)" ..."1", " 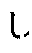 (shi)" ... "12"
Clear/muddy attribute number: " 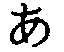 (a)" (clear sound) ... "0", " 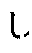 (shi)" (clear sound) ... "0"
Font type attribute number: " 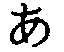 (a)" (upper case) ... "0", " 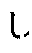 (shi)" (upper case) ... "0"
Kana type attribute number: " 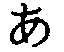 (a)" (hiragana) ... "0", " 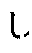 (shi)" (hiragana) ... "0"

Similarly, all the collating keys for the first syllable representation column, phonetic column, representation column, and the like are encoded. These codes represent the numerical order, and this number corresponds to the order of collating keys. Therefore, by comparing the numbers and sorting them in the ascending order for the multidimensional data analysis, the sorting result in the order of collating keys can be easily obtained.

Fig. 44 is a diagram showing an example of the multidimensional data in the multidimensional data domain 10116 of this embodiment. As described in the entry registration process shown in Fig. 42, the dimensions are formed for all collating keys of all collation methods applied to the sorting process.

In the example shown in Fig. 44, the dimensions are formed for a first notation character class 11201, a representative phonetic transcription 11202, a first syllable representation column 11203, a phonetic column 11204, a representation column 11205, and a record identifier 11206. For these dimensions, the code values of the collating keys such as shown in Fig. 43 are provided.

The dimension of the phonetic column is shared by the representative phonetic collation method and phonetic transcription - representation collation method. The dimension of the phonetic column is shared by the representative phonetic collation method, phonetic transcription-representation collation method, and simple collation method.

The code values of all collating keys are therefore stored in the corresponding multidimensional domain 10116.

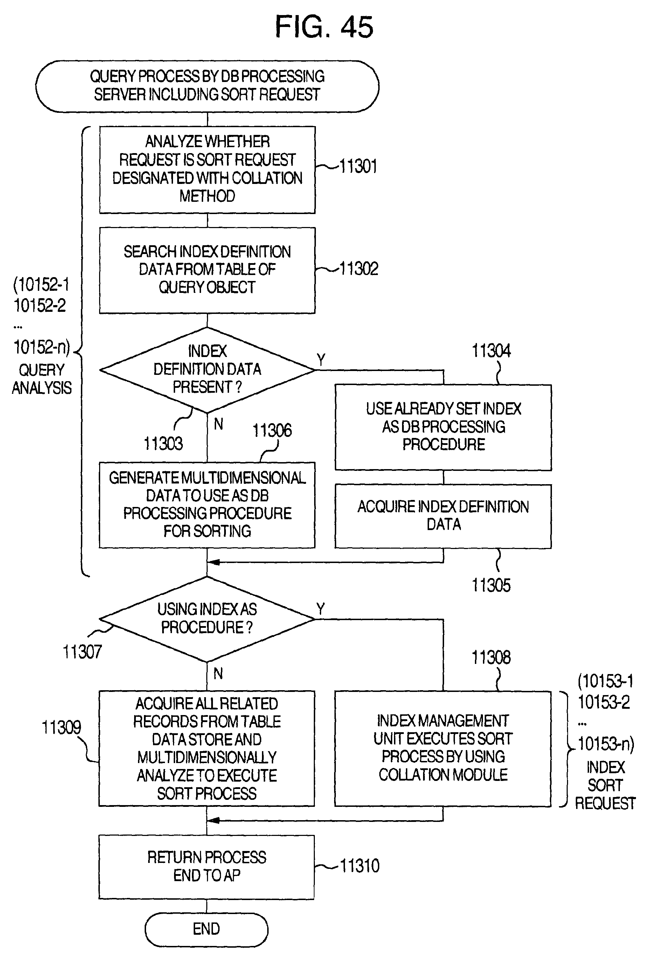

Fig. 45 is a flow chart illustrating the query process including the sort request 10151 of this embodiment. The flow chart of Fig. 45 illustrates a process to be executed when the application program 10102 requests to sort the character strings stored in the table data store 10105. For example, the application program 10102 requests the sorting process relative to the name list table 10115 by using the combination of the name 10301 and kana phonetic transcription 10302 (representation column and phonetic column of the collation elements) as the keys and the representative phonetic collation method.

Generally the application program 10102 defines a cursor for each query for such a process request, and after the cursor is opened, each query result is acquired through fetching. The flow chart shown in Fig. 45 illustrates a process of forming a list of sorted query process results by the database processing server 10103 in response to a cursor open request from the application program 10102.

First, the database processing server 10103 analyzes a query request from the application program 10102 to obtain the analysis result (corresponding to the query analysis result 10152 shown in Fig. 33). In this case, it is analyzed that the request is a query request including the sort request, for example, it is analyzed that the request is the sort request 10151 for the combination of the name column 10301 and kana phonetic transcription column 10302 of the name list table 10115 by using the representative phonetic collation method (Step 11301).

Next, it is judged whether the definition set index can be used for the sorting process. This judgement is realized by searching an index definition data 10110 related to the name 10301 and kana phonetic transcription 10302 of the name list table 10115 (Step 11302) and by checking whether there is corresponding index definition data 10110 (Step 11303).

If there is the corresponding index definition data 10110, it is determined that the database processing procedure is executed by using the definition set index (Step 11304). Next, a corresponding index definition data 10110 is acquired (Step 11305). In this example, the records 10406 and 10407 shown in Fig. 36 are acquired.

If there is no corresponding index definition data 10110 at Step 11304, it is determined that the database processing procedure is executed for the sorting process by generating multidimensional data from records (Step 11306).

Next, in accordance with the database processing procedure determined by the query analysis 10852, the database processing server 10103 executes the database processing. The database processing server 10103 judges whether the database processing procedure uses the index (Step 11307).

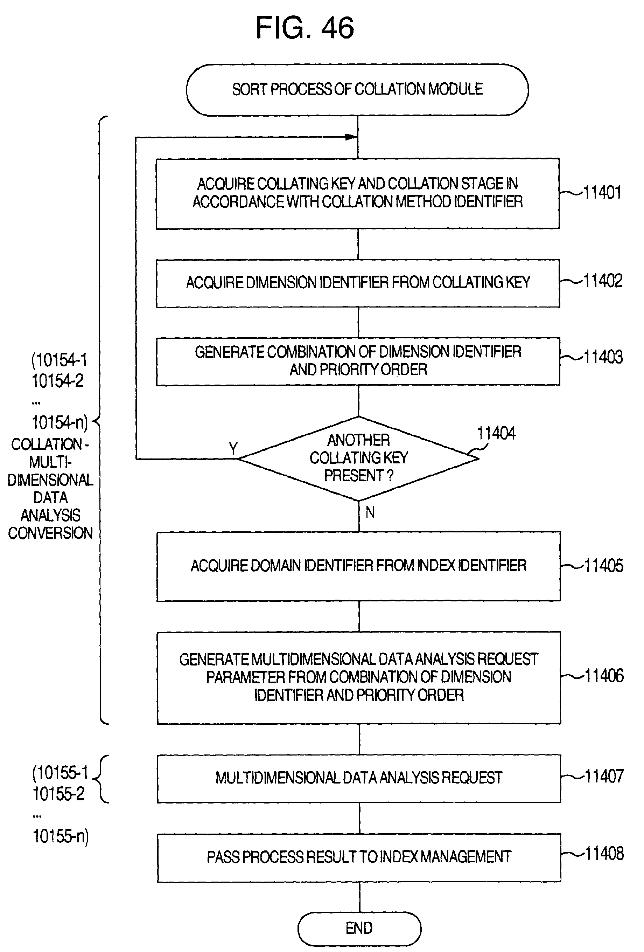

If the definition set index is used, the index management unit 10109 is requested to execute the sorting process by using the index (corresponding to the index sort request 10153 shown in Fig. 33). The index management unit 10109 receives the index definition data 10110 acquired at Step 11305 and executes a process corresponding to the sort request 10151 (Step 11308). This sort request 10151 is designated with the index identifier and collation method identifier. In accordance with the collation module identifier in the index definition data 10110, the index management unit 10109 requests the collation module 10106 to execute the sorting process. By using the multidimensional data processing module 10107, the collation module 10106 analyzes the multidimensional data registered by the process shown in Fig. 42 to acquire the record identifier list 10157 which is returned as the processing result. The details of the process by the collation module 10106 to be executed for the sort request will be later given with reference to Fig. 46. The index management unit 10109 uses the record identifier list 10157 as the processing result.

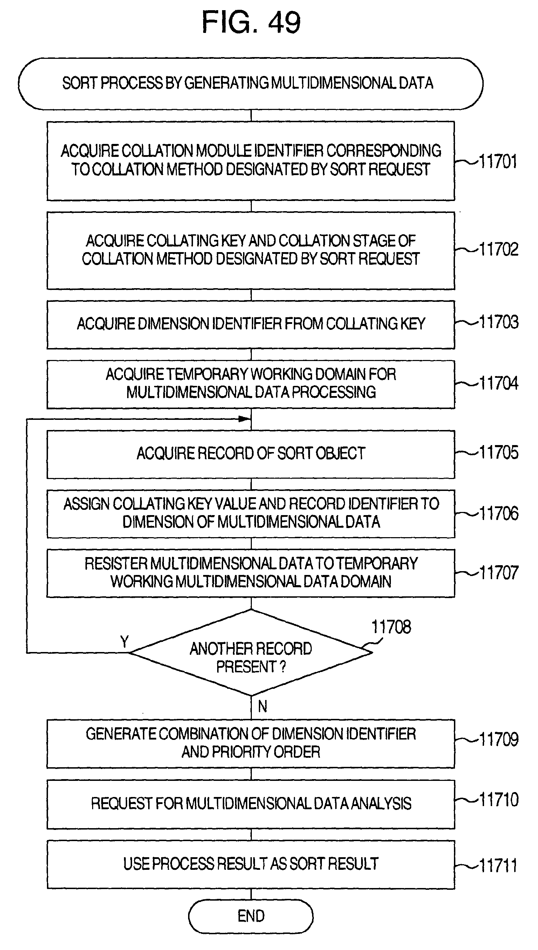

If the database processing procedure is executed not by using the definition set index at Step 11307 (if the sorting process is executed by generating multidimensional data), the database processing server 10103 acquires all records from the table data store 10105 and these records are subjected to a multidimensional analysis to thereafter execute the sorting process (Step 11309). This process will be described later with reference to Fig. 49. As this processing result, the list 10157 of record identifiers arranged in the collation sequence is generated.

After the completion of the process at Step 11308 or 11309, the database processing server 10103 returns a query process end to the application program 10102 (Step 11310) to terminate the query process.

Fig. 46 is a flow chart illustrating the process by the collation module 10106 to be executed for the sorting process according to the embodiment. The flow chart of Fig. 46 illustrates the sorting process of the collation module 10106 to be activated at Step 11308 shown in Fig. 45 in response to the sort request 10151 from the index management unit 10109.

By using the collation method identifier designated by the sort request 10151 from a user, the collation module 10106 refers to the collation method-collating key correspondence data 10113 to acquire the collating key identifier and collation stage 10503 (Step 11401). For example, by using the collation method identifier "representative phonetic collation method", the collating key identifier "first notation character class" and collation stage 10503 "1" and the like of the record 10504 shown in Fig. 37 are acquired. Next, in accordance with the collating key identifier acquired at Step 11401, the dimension identifier is acquired from the collating key - dimension correspondence data 10114. For example, in accordance with the collating key identifier "first notation character class" acquired at Step 11401, the dimension identifier "first notation character class" and the like of he record 10603 and the like shown in Fig. 38 are acquired.

Next, a combination of the dimension and priority order is generated from the dimension identifier acquired at Step 11402 and the collation stage 10503 acquired at Step 11401 (Step 11403). For example, since the collation stage 10503 corresponding to the collating key identifier "first notation character class" is "1", the priority order of the dimension discriminated by the dimension identifier "first notation character class" is set to "1".

Next, it is checked whether there is another collating key acquired at Step 11401 (Step 11404). If there is still another collating key, the processes at Steps 11401 to 11404 are repeated. If there is no collating key, the flow advances to next Step 11405. With the above processes, the priority orders "1", "2", "3", "4" and "5" are assigned to the dimension identifier "first notation character class", "representative phonetic transcription", "first syllable representation column", "phonetic column" and "representation column".

At Step 11405, in accordance with the index identifier received from the index management unit 10109, the index - domain correspondence data 10112 is referred to and the domain identifier is acquired. By referring to the record 10703 shown in Fig. 39, the domain identifier "name list collation domain" is acquired.

Next, in accordance with the combination of the dimension identifier and priority order generated at Step 11403, parameters used when the multidimensional data analysis is requested are generated (Step 11406). The parameters are set so that the processing result becomes the list 10157 of record identifiers. The processes up to this correspond to the collation - multidimensional data analysis conversion 10154 shown in Fig. 33.

Next, the multidimensional data processing module 10107 is requested to analyze the multidimensional data (Step 11407). This corresponds to the multidimensional data analysis request 10155 shown in Fig. 33. When the processing result by the multidimensional data processing module 10107 is received, the list 10157 of record identifiers is passed to the index management unit 10109 (Step 11408) to terminate the process. With the above operations, the sort request from the application program 10102 is realized.

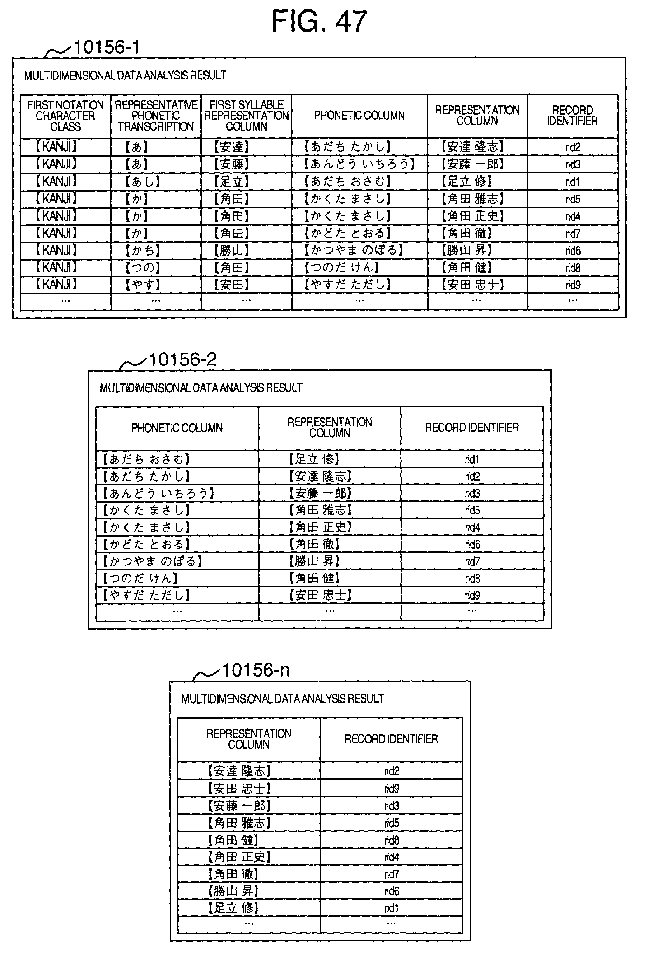

Fig. 47 is a diagram showing an example of the sorting result of this embodiment. A multidimensional data analysis result 10156-1 shows the sort result by the representative phonetic collation method. The dimensions of the first notation character class, representative phonetic transcription, first syllable representation column, phonetic column, and representation column were given the priority orders in this order recited, and the multidimensional data was analyzed so as to sort the values (code values of the collating keys) in the ascending order. This sort result is equivalent to the evaluation result of the collating keys at each collation stage 10503 by the representative phonetic collation method.

From this result, a list of record identifiers rid2, rid3, rid1, rid5, rid4, rid7, rid6, rid8, rid9, ... can be obtained. This list corresponds to the list 10157 of record identifiers when the values of the name column 10301 and kana phonetic transcription column 10302 are sorted by the representative phonetic collation method.

Similarly, a multidimensional data analysis result 10156-2 shows the sort result by the phonetic transcription - representation collation method, and a multidimensional data analysis result 10156-n shows the sort result by the simple collation method. In both cases, the list 10157 of record identifiers is obtained when the values of the name column 10301 and kana phonetic transcription column 10302 are sorted by the respective collation methods.

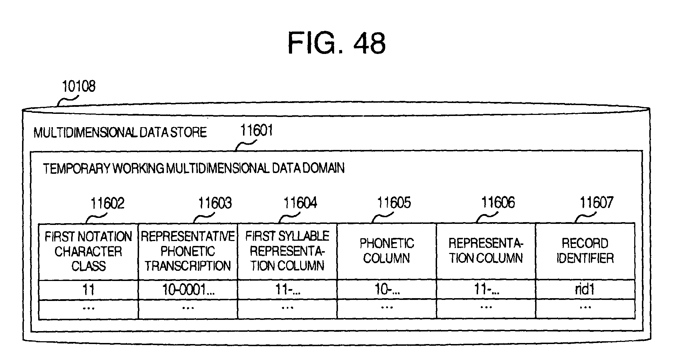

Fig. 48 is a diagram showing an example of multidimensional data which is generated for the sorting process according to the embodiment. The multidimensional data shown in Fig. 48 is stored in the multidimensional data store 10108 when the sorting process is executed by generating the multidimensional data from records at Step 11309 shown in Fig. 45.

At Step 11309 shown in Fig. 45, the sorting process such as shown in Fig. 46 is executed by storing the code values of collating keys of records in the data multidimensional data store into a temporary working multidimensional data domain 11601. The details of which will be later described with reference to Fig. 49.

The temporary working multidimensional data domain 11601 has a first notation character class 11602 to a representation column 11606 corresponding to the collating keys for the collation method applied to the sorting process, and a record identifier 11607. Code values such as shown in Fig. 43 are stored in this temporary working multidimensional data domain 11601.

Fig. 49 is a flow chart illustrating the sorting process of this embodiment in which multidimensional data is generated. The flow chart shown in Fig. 49 illustrates the sorting process at Step 11309 shown in Fig. 45 in which the multidimensional data is generated by acquiring records from the table data store 10105.

First, with reference to the collation module-collation method correspondence data 10802, the database processing server 10103 acquires the collation module identifier corresponding to the collation method designated by the sort request 10151 (Step 11701). For example, the collation module identifier jisx4061 of the representative phonetic collation method is acquired.

Next, with reference to the collation method-collating key correspondence data 10113, the collating keys for the collation method designated by the sort request 10151 and information on the collation stages 10503 are acquired (Step 11702). With reference to the collating key - dimension correspondence data 10114, the dimension identifiers corresponding to the dimension identifiers are acquired (Step 11703). At Step 11704 the temporary working multidimensional data domain 11601 for the multidimensional data processing is acquired.

Next, the sort object records are acquired from the table data store 10105 (Step 11705). At Step 11706 the collating key value and record identifier are made in correspondence with the dimension of the multidimensional data. In accordance with the user request, the column value of the name of each record is used as the value of the representation column of each collation element, and the column value of each kana phonetic transcription is used as the value of the phonetic column of each collation element. In accordance with these values, the collation module 10106 generates the collating keys which are made in correspondence with the dimensions for the multidimensional analysis.

Next, the collation module 10106 registers the collating key values generated at Step 11706 in the temporary working multidimensional data domain 11601 (Step 11707) (a similar process to the entry registration process shown in Fig. 42 is executed). With this process, the multidimensional data such as shown in Fig. 48 is generated.

Next, the database processing server 10103 judges whether there is another record acquired at Step 11705 (Step 11708). If there is still another record, the processes at Steps 11705 to 11708 are repeated. If there is no another record, the flow advances to next Step 11709. With the above processes, the multidimensional data of the collating key values for all sort records in the table data store 10105 is therefore registered in the temporary working multidimensional data domain 11601.

At Step 11709 the collating module 10106 generates parameters for the multidimensional data analysis constituted of a combination of the dimension identifier and priority order, by referring to the collation method-collating key correspondence data 10113 and collating key-dimension correspondence data 10114. For example, for the representative phonetic collation method, the parameters are generated by assigning the priority order to the first notation character class, representative phonetic transcription, first syllable representation column, phonetic column and representation column in this order.

Next, the collation module 10106 issues a multidimensional data analysis request by using the parameters generated at Step 11709. In response to this request, the multidimensional data processing module 10107 executes the multidimensional data analysis (Step 11710). The database processing server 10103 receives the processing result from the collation module 10106, and uses the processing result of the multidimensional data analysis as the sort result (Step 11711) to thereafter terminate this process.

With this process, even if there is no definition set index, the multidimensional data for the collating keys is generated and the multidimensional data is analyzed to execute the sort process.

Next, an example of the sort process whose sort method is changed according to a modification of the embodiment will be described.

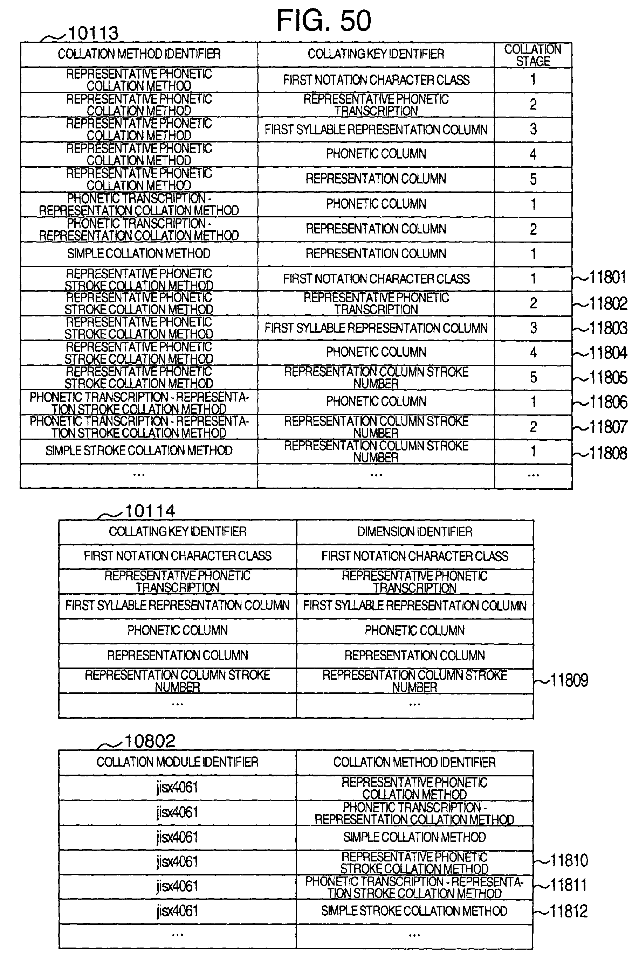

Fig. 50 is a diagram showing an example of the collation method definition according to the modification of the embodiment. Fig. 50 shows tables of the definition data of the modified collation methods. In this example, in the database system 10101 which supports the collation of JIS X 4061, a representative phonetic collation method, a phonetic transcription - representation collation method and a simple collation method respectively in the order of the number of strokes of a kanji are added (respectively called a representative phonetic stroke collation method, a phonetic transcription - representation stroke collation method and a simple stroke collation method). The definition data shown in Fig. 50 is used also for these methods.

In the collation method - collating key correspondence data 10113, records 11801 to 11805 indicate that the collating keys of the "representative phonetic stroke collation method" are a "first notation character class", a "representative phonetic transcription", a "first syllable representation column", a "phonetic column" and a "representation column stroke number" which are evaluated at the collation stage 10503 of "1", "2", "3", "4", and "5". Similarly, records 11806 and 11807 indicate the collating keys and collation stage 10503 of the "phonetic transcription - representation stroke collation method", and a record 11808 indicates the collating keys and collation stage 10503 of the "simple stroke collation method".

In the collating key - dimension corresponding data 10114, a record 11809 indicates that the collating key "representation column stroke number" corresponds to the dimension "representation column stroke number. In the collation module - collation method correspondence data 10802, records 11810 to 11812 indicate that the representative phonetic stroke collation method, phonetic transcription - representation stroke collation method and simple stroke collation method correspond to the collation module jisx4061.

In accordance with these definition data, the multidimensional data entry registration described with Fig. 42 and the multidimensional data analysis process described with Fig. 46 are executed so that the above-described sort process as well as the sort process using the phonetic transcription - representation collation method in the order of the number of strokes of a kanji, is executed. In this case, the collation module 10106 is required to have a function of encoding the representation column stroke number.

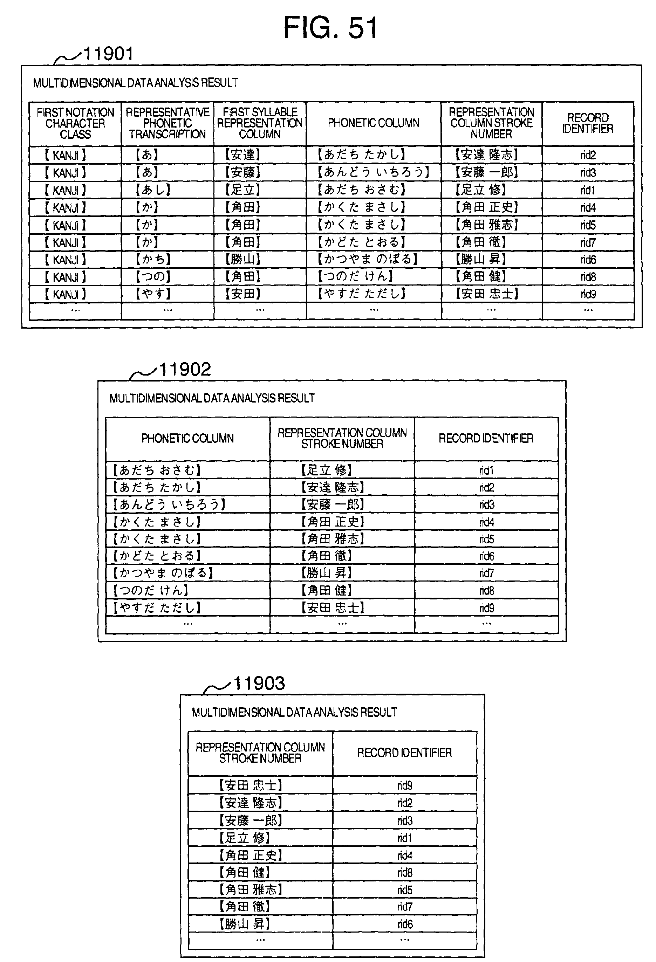

Fig. 51 shows an example of the sort result obtained by using the changed collation method definition according to the modification of the embodiment. The sort result shown in Fig. 51 is obtained by using the definition data shown in Fig. 50. A multidimensional data analysis result 11901 is the sort result obtained by the representative phonetic stroke collation method. This sort result is obtained by analyzing the multidimensional data in such a manner that the dimensions of the first notation character class, representative phonetic transcription, first syllable representation column, phonetic column and representation column stroke number are given priorities in this order and the values (code values of the collating keys) are sorted in the ascending order. The sort result is equivalent to the evaluation result of the collating keys at each collation stage using the representative phonetic stroke collation method.

From this result, a list of record identifiers rid2, rid3, rid1, rid4, rid5, rid7, rid6, rid8, rid9, ... can be obtained. This list corresponds to the list 10157 of record identifiers of records when the values of the name column 10301 and kana phonetic transcription column 10302 are sorted by the representative phonetic stroke collation method.

Similarly, a multidimensional data analysis result 11902 shows the sort result by the phonetic transcription - representation stroke collation method, and a multidimensional data analysis result 11903 shows the sort result by the simple stroke collation method. In both cases, the list 10157 of record identifiers is obtained when the values of the name column 10301 and kana phonetic transcription column 10302 are sorted by the respective collation methods.

The multidimensional data analysis results 11901 to 11903 are now compared with the sort results by the representative phonetic collation method, phonetic transcription - representation collation method, and simple collation method shown in Fig. 47. In the multidimensional data analysis results 11901 and 11902, the order of the record of " 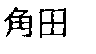 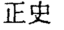 (Kakuta Masashi)" of the record identifier rid4 and the record of " 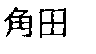 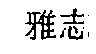 (Kakuta Masashi)" of the record identifier rid5 is reversed because of differences of the order of kanji and the number of strokes as defined in JIS X 4061. In the multidimensional data analysis result 11903, the order of the records are changed greatly because of differences of the order of kanji and the number of strokes as defined in JIS X 4061.

As described above, in the modification of this embodiment, another sort function can be easily supported by using a multidimensional data group by changing only the definition information of the collation method.

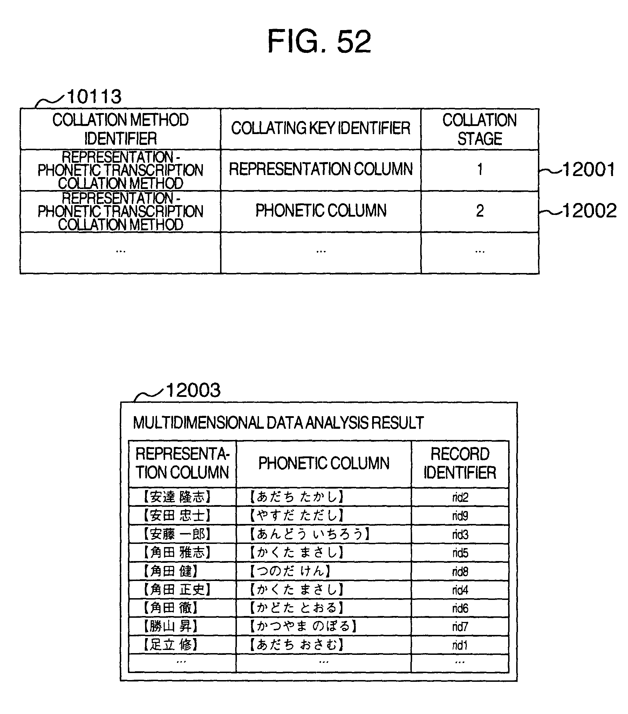

Fig. 52 is a diagram showing an example of the collation method definition with evaluation in the order of the representation column and phonetic column and its sort result. Fig. 52 illustrates an example of supporting a sort by the collation method definition with evaluation in the order of the representation column and phonetic column (called a representation - phonetic collation method). Data 12001 and 12002 representative of the representation-phonetic collation method with evaluation in the order of the representation column and phonetic column are stored in the collation method - collating key correspondence data 10113.

By using this data, the collation module 10106 executes the sort process shown in Fig. 46 to acquire a multidimensional data analysis result 12003. The list 10157 of record identifiers can therefore be obtained by sorting the values of the name column 10301 and kana phonetic transcription column 10302 by the representation-phonetic collation method.

As above, according to the modification of this embodiment, the sort function can be easily supported by using already set multidimensional data without changing it, by changing only the definition information of the collation method.

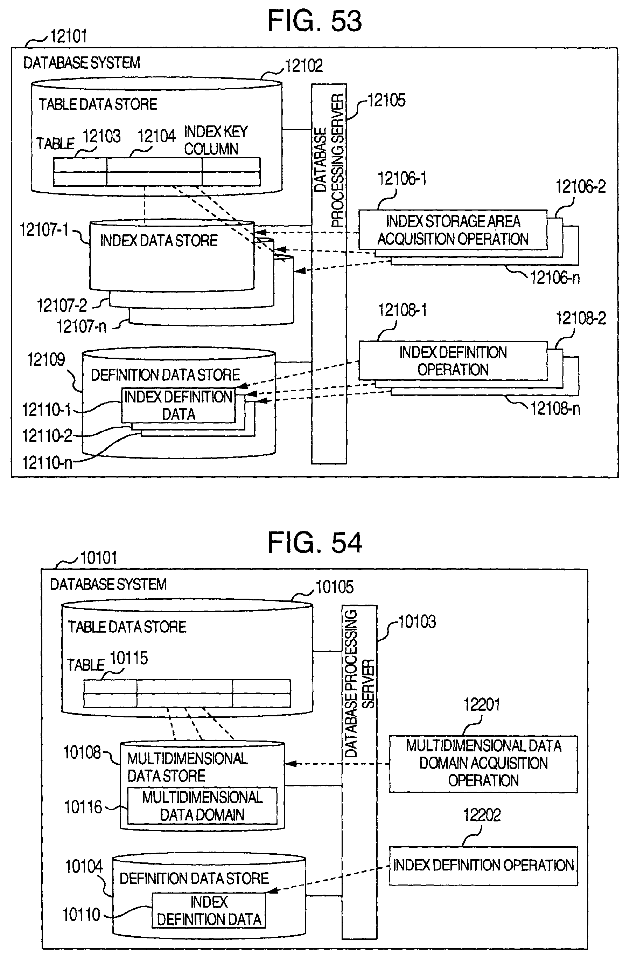

Fig. 53 is a conceptual diagram illustrating a system operation of a conventional database system. In a database system 12101 applying conventional techniques, since one index cannot be used for a plurality of collation methods, an index is generated for each collation method.

Each index is set to an index key column 12104 of a table 12103 in a table data store 12102. An index storage area acquisition operation 12106 for each collation method is executed relative to a database processing server 12105 to acquire an index data store 12107. Then, an index definition operation 12108 is executed to store index definition data 12110 in a definition data store 12109.

Fig. 54 is a conceptual diagram showing the system operation of a database of this embodiment. In a database system 10101 applying the embodiment, in order for one multidimensional data group to deal with a plurality of collation methods, one multidimensional data domain 10116 is formed.

A multidimensional data domain acquisition operation 12201 is executed relative to a database processing server 10103 to acquire the multidimensional data domain 10116 in the multidimensional data store 10108. Then, an index definition operation 12202 is executed to store index definition data 10110 in a definition data store 10104.

In order to support a plurality of collation methods for the sort process, a plurality of operations are required for each collation method in the system applying conventional techniques, whereas only one operation is required in the system of this embodiment.

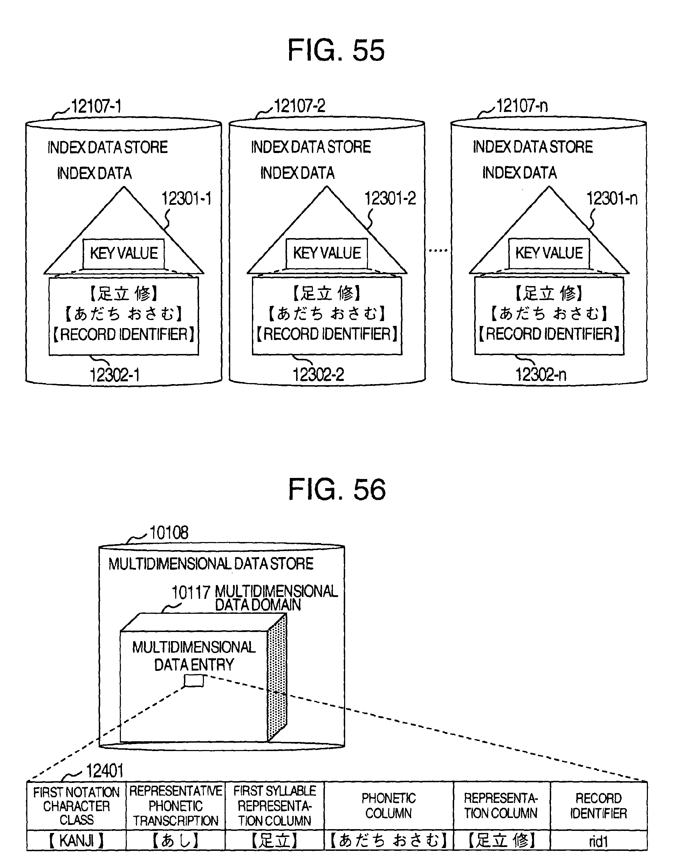

Fig. 55 is a conceptual diagram showing conventional index data. In the database system 12101 shown in Fig. 53, a key value 12302 is contained in index data 12301 which is stored in the index data store 12107 corresponding to each of a plurality of collation methods for the sorting operation. The key value can be duplicately stored in the index data.

Fig. 56 is a conceptual diagram showing the multidimensional data of this embodiment. In the database system 10101, a multidimensional data entry 12401 is contained in the multidimensional data domain 10116 which is stored in the multidimensional data store 10108 corresponding to a plurality of collation methods for the sorting operation.

In order to support a plurality of collation methods for the sort process, the system applying conventional techniques is required to store the key value in the index of each collation method, whereas the system of this embodiment is required to store only one multidimensional data entry in the multidimensional data domain 10116. It is therefore possible to reduce resources of the system which can support a plurality of collation methods.

The processes shown in the above-described flow charts can be realized by executing programs by a general data processing apparatus 10201 such as the apparatus 10201 shown in Fig. 34. Such programs may be stored in a computer readable storage medium such as a hard disk and a floppy disk, or may be accessed via a network.

As described above, according to this embodiment, in order to support a plurality of collation methods for the sort process, the multidimensional data is shared by the plurality of collation methods, and the sort process for the plurality of collation methods is executed by using collating keys in the multidimensional data. It is possible to speed up the sort process for each collation method, to improve a use efficiency of the multidimensional data (reduce resources), and to lower a maintenance operation cost.

Addition or alteration of a collation method can be realized by adding or altering only the definition data of the collating key used by the collation method by referring to the definition data of the collation method. It is therefore possible to improve a use efficiency of the multidimensional data (reduce resources) and to lower a maintenance operation cost.

In this embodiment, the sort process is executed by the representative phonetic collation method by using as keys a combination of the name 10301 and kana phonetic transcription 10302 of the name list table 10116. Even if a collation method of processing different languages is used, the sort process which supports multilanguages can be realized.

According to the collation processing apparatus of this embodiment described above, the multidimensional data representative of the collating keys corresponding to the column values are shared by a plurality of collation methods, and the sort process for a plurality of different collation methods is executed by using the collating keys in the multidimensional data. It is therefore possible to speed up the sort process for each collation method and to improve a use efficiency of the multidimensional data.

A data processing apparatus of the embodiment will be described which stores and retrieves data constituted of optional elements including a character string.

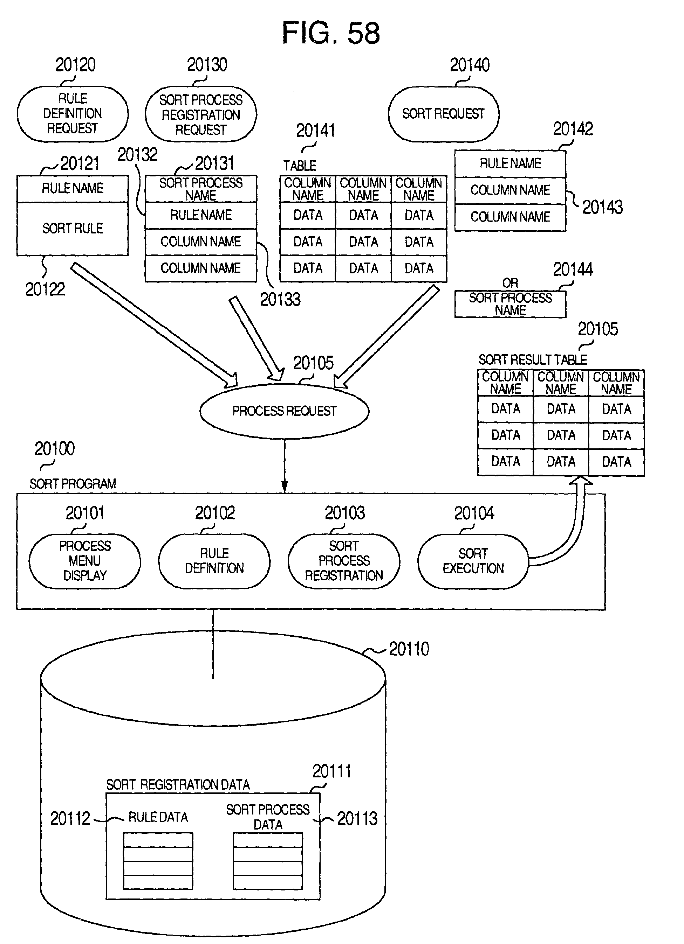

Fig. 58 is a diagram illustrating the outline of a sort process of this embodiment. As shown in Fig. 58, the data processing apparatus of this embodiment has a sort process part 20100, a process menu display part 20101, a rule definition part 20102, a sort process registration part 20103, and a sort execution part 20104.

The sort process part 20100 controls the whole of the sort process. The process menu display part 20101 displays a sort process menu. The rule definition part 20102 defines a rule which determines sort objects in a column to be referred to during the sort process and a sort order.

The sort process registration part 20103 designates a sort process representative of the column to be referred to during the sort process and the rule used by the referenced column during the sort operation. The sort execution part 20104 executes the sort operation in accordance with the designated sort process.

A program for realizing the functions of the sort process part 20100, process menu display part 20101, rule definition part 20102, sort process registration part 20103 and sort execution part 20101 respectively of the data processing apparatus is stored in a storage medium such as a CD-ROM and loaded in a magnetic disk or the like, and thereafter loaded in a memory to be executed. The storage medium for storing the program may be other recording media different from CD-ROM.

When the process menu display part 20101 receives a process request 20150 including a rule definition request 20120, a sort process registration request 20130 and a sort request 20140, the rule definition part 20102, sort process registration part 20103 and sort execution part 20104 respectively of the sort process part 20100 execute corresponding processes.

The rule definition request 20120 designates a rule name 20121 and a sort rule 20122. The sort process registration request 20130 designates a sort process name 20131, a sort rule name 20132, and an object column name 20133. The sort request 20140 designates a table 20141 and a rule name for the sort process, and an object column name 20143 or a sort process name 20144.

Upon reception of the rule definition request 20120 and sort process registration request 20130, the designated data is stored in a disk 20110 as sort registration data 20111 including rule data 20112 and sort process data 20113.

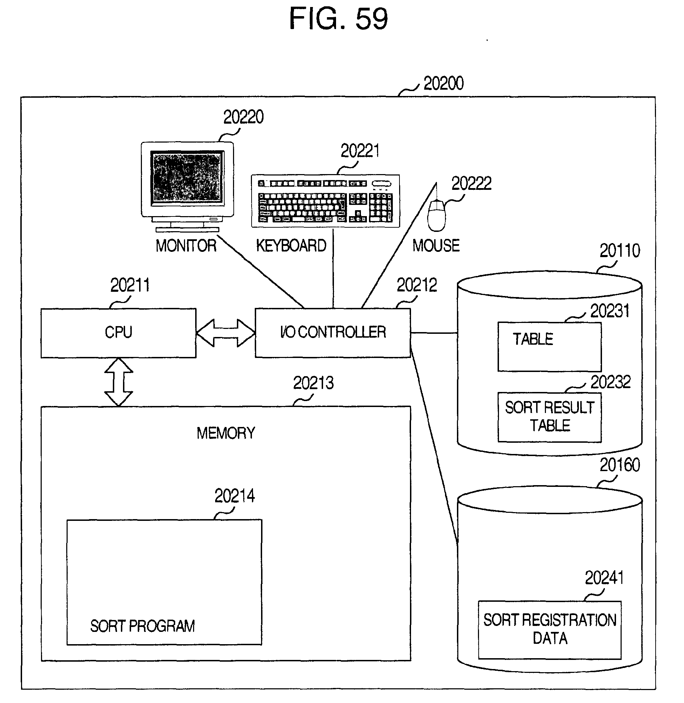

Fig. 59 is a diagram showing the outline structure of the data processing apparatus of this embodiment. The data processing apparatus 20200 has a CPU 20211, a memory 20213, and an I/O controller 20212. CPU 20211 executes the sort process part 20100 stored in the memory 20213 to execute the sort process. The I/O controller 20212 reads data from and writes data to the disk 20110, displays data on a monitor 20220, inputs data from a keyboard 20221 and a mouse 20222.

Table data 20231 for the sort process is stored in the disk 20110, and a sort result table 20232 is also stored in the disk 20110 after the execution of the sort process. The sort process part 20100 displays a menu on the monitor 20220, and receives data from the keyboard 20221 and mouse 20222.

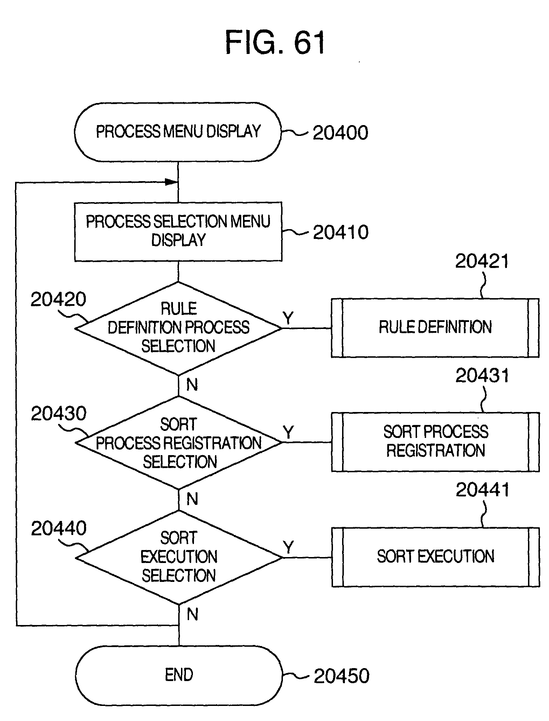

Fig. 60 is a diagram showing an example of the structure of the table 20141 of this embodiment. The table 20141 is constituted of a column name field 20310 and a data field 20320. The first row of the table 20141 is the column name field 20310, and the following rows are the data field. The table 20141 is constituted of one or more columns 20330 and 20340, each column storing a column name and data. In the example shown in Fig. 60, "name" and "kana phonetic transcription" are stored as the column names. " 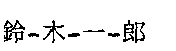 (Suzu-ki-ichi-rou)" and " 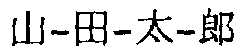 (Yama-da-ta-rou)" are stored as the column data of the name column, and " 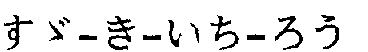 (Suzu-ki-ichi-rou)" and " 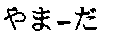 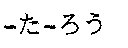 (Yama-da-ta-rou)" are stored as the column data of the kana phonetic transcriptions.

Fig. 61 is a flow chart illustrating the operation by the process menu display part 20101 of this embodiment. As the sort process part 20100 is activated, the process menu display part 20101 in the flow chart of Fig. 61 is executed. With reference to Fig. 61, the process menu display process will be described.

The process menu display part 20101 displays a menu from which one of the rule definition, sort process registration, and sort request is selected (Step 20410).

When a user selects the rule definition (Step 20420), the rule definition part 20102 is executed to perform a rule definition process (Step 20421).

When the user selects the sort process registration (Step 20430), the sort process registration part 20103 is executed to perform a sort process registration process (Step 20431). When the user selects the sort execution (Step 20440), the sort execution part 20104 is executed to perform a sort execution process (Step 20441).

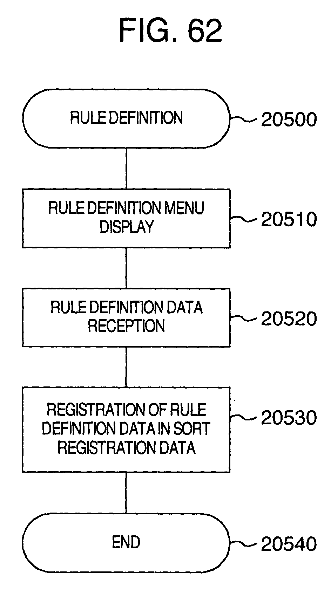

Fig. 62 is a flow chart illustrating the operation by the rule definition part 20102 of this embodiment. As the rule definition is selected from the process menu, a menu for rule registration is displayed and the user sets necessary items (Step 20510).

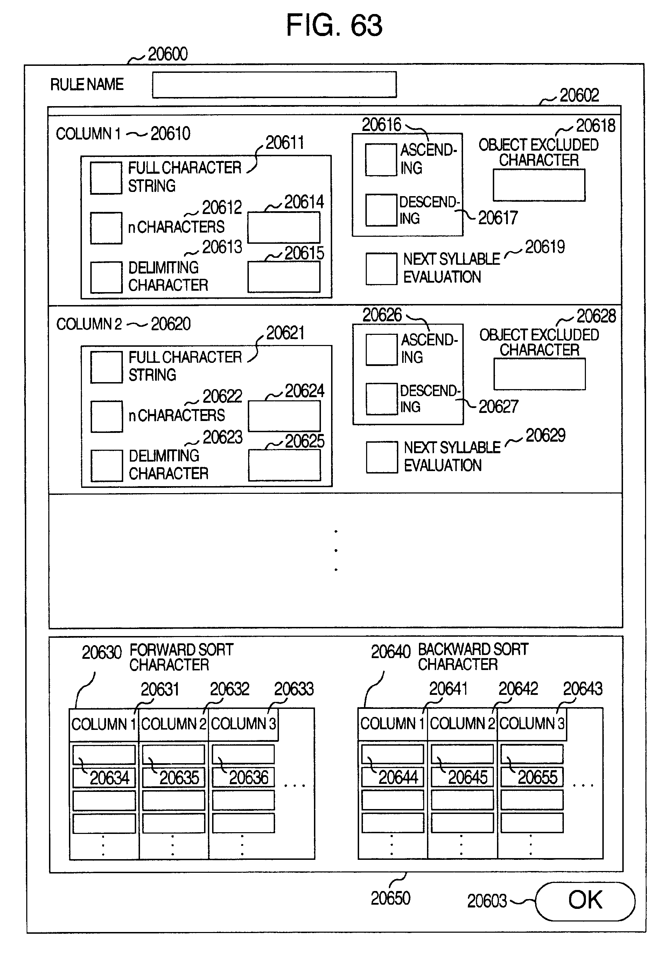

Fig. 63 is a diagram showing an example of a rule definition menu of this embodiment. The items in the menu indicate a rule name 20600 for entering the name of a rule to be registered, a data setting field 20602 for setting data regarding a column to be referred to during the sort process, and a data setting field 20650 used for the sort process.

The name of a rule to be registered is set to the rule name 20600. The data setting field 20602 for setting data regarding a column to be referred to during the sort process includes: switches 20611 to 20613 for selecting a full character string, n characters, or characters down to the delimiting character; the delimiting character 20615 for use with the case if characters down to the delimiting character are selected as the object characters; switches 20616 and 20617 for designating ascending order or descending order for the sort process; and an excluded object character 20618 which is not evaluated for the sort process.

A next syllable evaluation 20619 is checked if the evaluation shows the same order when the n characters or the characters down to the delimiting character are selected, and if the evaluation is to be executed again for the next syllable (next n characters for the selection of n characters, and characters down to the next delimiting character for the selection of characters down to the delimiting character).

The data setting field 20602 under the column 20620 is used for setting data of those columns whose characters are sorted and evaluated at the same time.

The sort data setting field 20650 is set with a forward sort character 20630 which is an item to be sorted fixedly forward and a backward sort character 20640 which is an item to be sorted fixedly backward.

If there are characters to be sorted at the top of the sorting sequence irrespective of the ascending or descending order, these characters are registered in a desired order in the item to be sorted fixedly forward. These characters are set to input fields of the column in which object character strings are stored.

Consider for example the case wherein a name list is sorted in the order of names and particular names are to be sorted forward and the other names are sorted in the order of kana phonetic transcriptions. In this case, names are assigned to the column 1 (20610) and input to the input field 20634 and following fields of the column 1 (20631) of the forward sort character 20630. In this manner, the input names can be sorted in the front position of the sorting sequence. Similarly, if there are characters to be sorted at the end of the sorting sequence irrespective of the ascending or descending order, these characters are registered in a desired order.

The setting items are provided for the columns 1 to 3 in order to explicitly indicate each column in the data setting field 20602. Data is set to the field corresponding to each column which is sorted fixedly forward or backward. If a combination of a plurality of columns is designated, data is set to the field corresponding to each of the combined columns.

After all the items are set, an OK button 20603 is depressed to notify a rule setting completion. The definition data set in the menu is received (Step 20520) and stored in the disk 20110 as the rule data 20112 in the sort registration data 20111 (Step 20530).

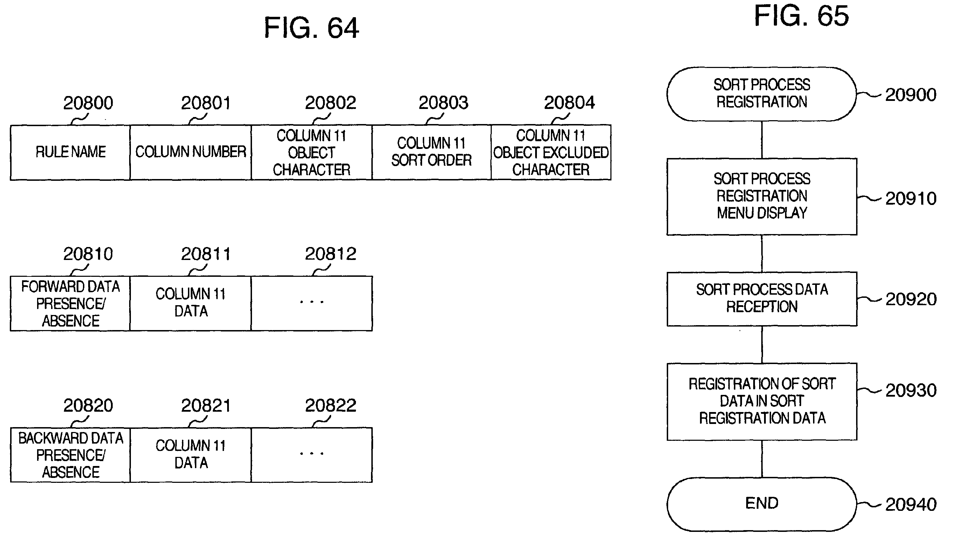

Fig. 64 is a diagram showing the details of rule data of this embodiment. Data set in the rule definition table is registered as a rule name 20800, a column number 20801, object characters 20802 of each column, a sorting order 20803 of each column, an excluded object character 20804 of each column, a forward fixed data presence/absence 20810 and its data 20811, a backward fixed data presence/ absence 20820 and its data 20821.

Fig. 65 is a flow chart illustrating the operation by the sort process registration part 20103 of this embodiment. The sort process registration will be described with reference to Fig. 65. As the sort process registration is selected from the process menu, the menu for sort process registration is displayed and a user sets items (Step 20910).

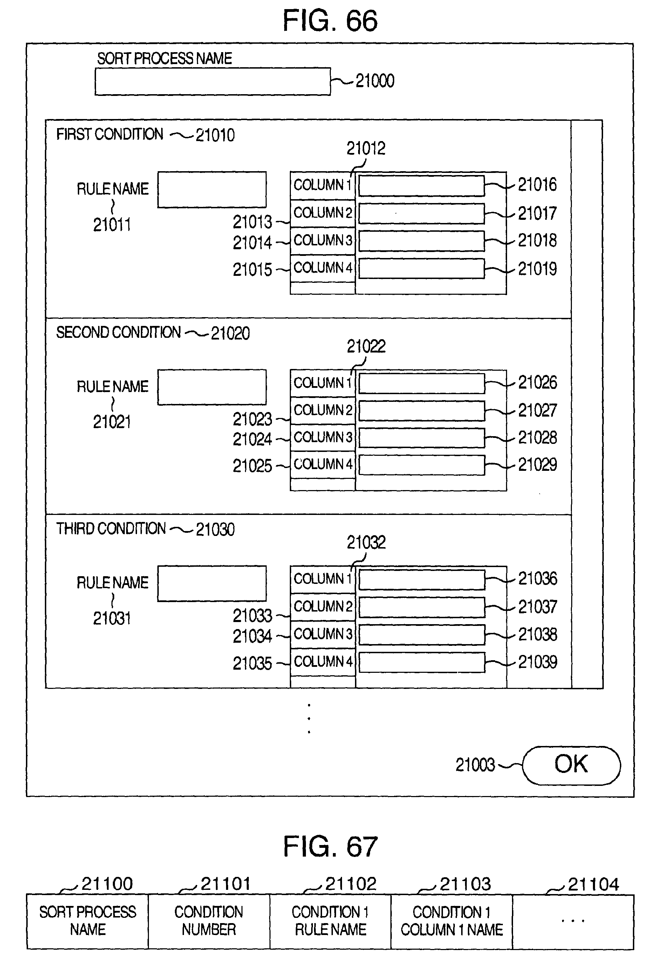

Fig. 66 is a diagram showing an example of the sort process registration menu of this embodiment. The items of the menu designate a sort process name 21000 for registration, a rule name 21011 applied to the sort process, and column names 21016 to 21019 corresponding to the columns 21012 to 21015 designated by the rule. If a process to be used when the sort result is the same order is to be added, set to second and third condition fields are rule names 21021 and 21031 applied to the sort process, and column names 21026 to 21029 and column names 21036 to 21039 corresponding to the columns 21022 to 21025 and columns 21032 to 21035 designated by the rules.

After all the items are set, an OK button 21003 is depressed to notify a input completion. The data set in the menu is received (Step 20920) and stored in the disk 20110 as the sort process data 20113 in the sort registration data 20111 (Step 20930).

Fig. 67 is a diagram showing the details of the sort process data 20113 of this embodiment. Data set as the sort process data is registered as a sort process name 21100, a condition number 21101, a rule name 21102 for each rule, and a column name 21103 corresponding to the rule in the condition. The rule name is registered as many as the number of conditions and the corresponding column name is registered as many as the number of columns defined by the rule.

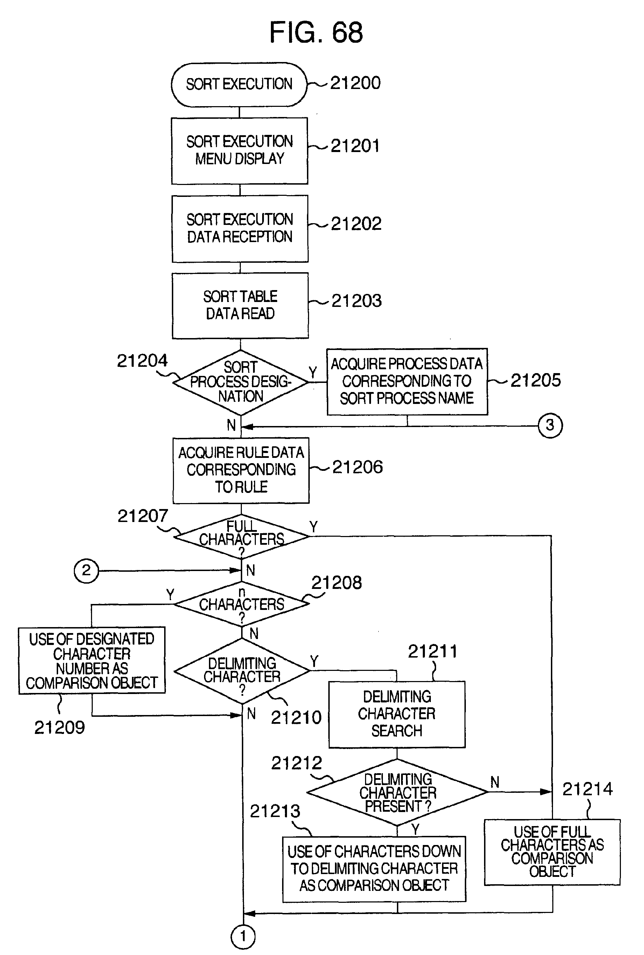

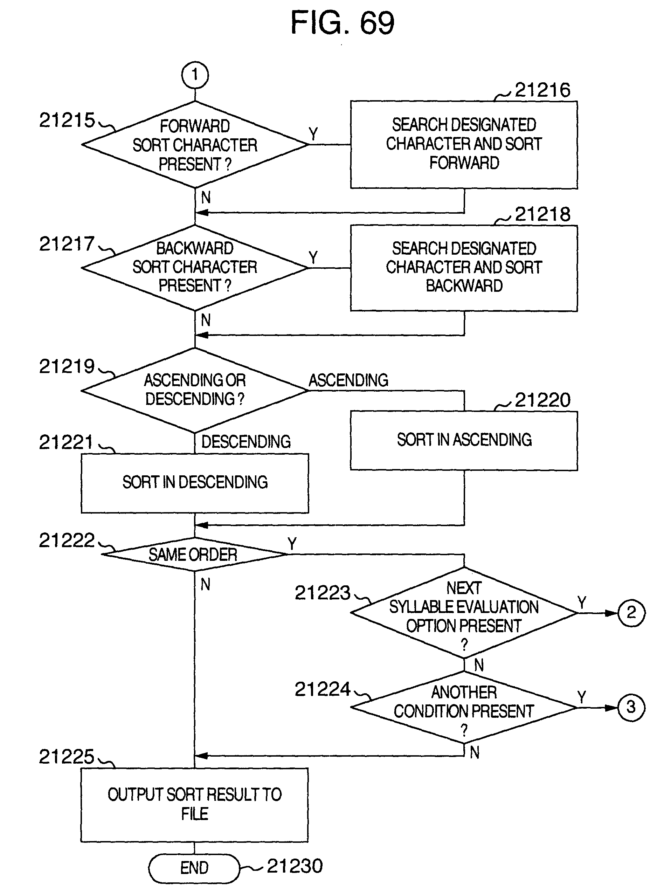

Fig. 68 is a flow chart illustrating the operation by the sort execution part 20104 of this embodiment. Fig. 69 is a flow chart to follow the flow chart shown in Fig. 68. With reference to Figs. 68 and 69, the sort execution process will be described. As the sort execution is selected by the process menu, a menu for the sort execution is displayed and a user sets items (Step 21201).

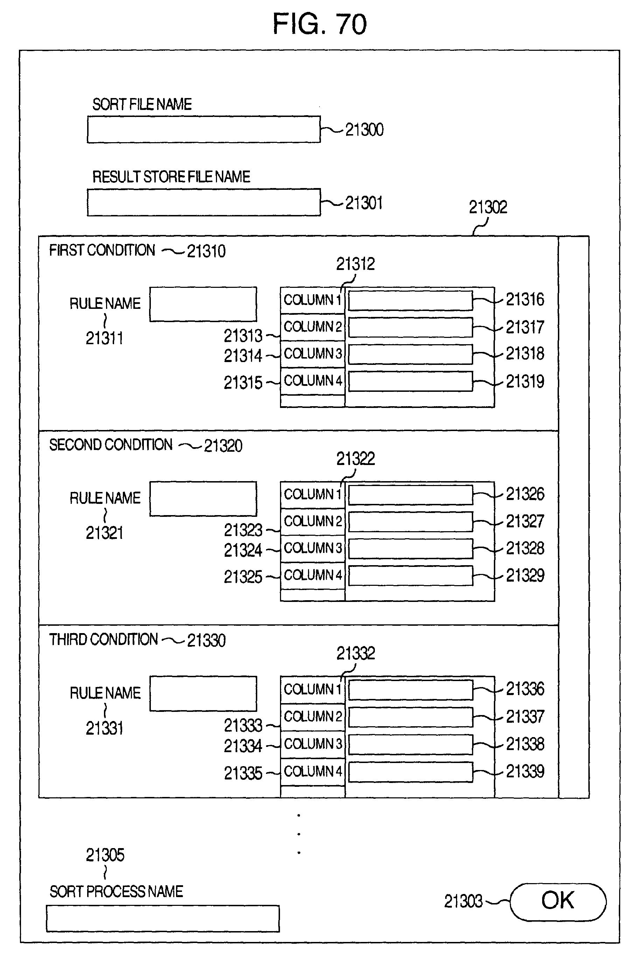

Fig. 70 is a diagram showing an example of the sort execution menu of this embodiment. The items in the menu indicate a sort file name field 21300 in which the name of a file storing sort object data is stored, a result storage file name field 21301 in which the name of a file storing a sort execution result is stored, a sort process designation field 21302 in which the contents of a sort process are stored, and a sort process name field 21305 in which the name of a registered sort process is stored.

In designating a sort process, either a method of designating the rule name and column names in the sort process designation field 21302 or a method of designating the sort process name in the sort process name field 21305 can be selected. If the rule name and column names are to be designated, the sort rule name 21311 and column names 21316 to 21319 corresponding to the columns 21312 to 21315 designated by the rule are designated.

If a process used for the same order of the sort result is to be added, set to second and third conditions 21320 and 21330 are sort rule names 21321 and 21331 and column names 21326 to 21329 and column names 21336 to 21339 corresponding to the columns 21322 to 21325 and columns 21332 to 21335 designated by the rules.

In designating the name of a sort process, the name of a sort process registered by the sort process registration is designated to the sort process name field 21305. After the item is set, an OK button 21303 is depressed to notify the completion, set execution data is received (Step 21202) to execute an actual sort process. A sort execution file designated in the sort execution menu is read from the disk (Step 21203) to check whether the rule and column names are designated or whether the sort process is designated (Step 21204).

If the rule and column names are designated, the rule data 20112 in the sort registration data 20111 corresponding to the designated rule is read (Step 21206) to evaluate the columns in accordance with the read data.

It is checked whether the object characters are the full character string (Step 21207), n characters (Step 21208) or characters down to the delimiting character (Step 21210). If the object characters are the full character string, a full character string is used as the sort object (Step 21214), if the n characters are designated, the designated number of characters are used as the sort object (Step 21209), and if the delimiting character is designated, the designated delimiting character is searched from the character string (Step 21211) to check whether there is the delimiting character (Step 21212). If there is the delimiting character, a character string before the delimiting character is used as the sort object (Step 21213), whereas if there is no delimiting character, the full character string is used as the sort object (Step 21214).

Next, it is checked whether the forward sort item is designated (Step 21215). If designated, the registered character string and the sort object character string are checked, and if there is the registered character string, this string is located at the position before the sort result (Step 21216).

Next, it is checked whether the backward sort item is designated (Step 21217). If designated, the registered character string and the sort object character string are checked, and if there is the registered character string, this string is located at the position after the sort result (Step 21218).

Next, it is checked whether the remaining character strings not located at the position before and after the sort result are to be sorted in the ascending order or descending order (Step 21219). If the ascending order is designated, the character strings are sorted in the ascending order (Step 21220), whereas if the descending order is designated, the character strings are sorted in the descending order (Step 21221).

If the evaluation result by the rule designated for the column indicates the same order (Step 21222) and the next syllable evaluation execution is being designated (Step 21223), the processes at Step 21208 and following Steps are repeated for the characters of the next syllable. If the next syllable evaluation execution is not designated and the condition of the next column is being designated (Step 21224), in order to execute the next condition for the character strings having the same order, the rule data is read and the processes at Step 21206 and following Steps are executed. After all the sort processes are executed, the sort execution result is output to the designated file (Step 21225) to terminate this process.

If the sort process is designated, the sort process data 20113 corresponding to the designated sort process name is read (Step 21205), and by referring to the rule and column names designated in the process data, the processes similar to those executed when the rule and column names are designated, are executed.

The rule data 20112 in the sort registration data 20111 corresponding to the rule is read (Step 21206) to evaluate the columns in accordance with the read data.

It is checked whether the object characters are the full character string (Step 21207), n characters (Step 21208) or characters down to the delimiting character (Step 21210). If the object characters are the full character string, a full character string is used as the sort object (Step 21214), if the n characters are designated, the designated number of characters are used as the sort object (Step 21209), and if the delimiting character is designated, the designated delimiting character is searched from the character string (Step 21211) to check whether there is the delimiting character (Step 21212). If there is the delimiting character, a character string before the delimiting character is used as the sort object (Step 21213), whereas if there is no delimiting character, the full character string is used as the sort object (Step 21214).

Next, it is checked whether the forward sort item is designated (Step 21215). If designated, the registered character string and the sort object character string are checked, and if there is the registered character string, this string is located at the position before the sort result (Step 21216).

Next, it is checked whether the backward sort item is designated (Step 21217). If designated, the registered character string and the sort object character string are checked, and if there is the registered character string, this string is located at the position after the sort result (Step 21218).

Next, it is checked whether the remaining character strings not located at the position before and after the sort result are to be sorted in the ascending order or descending order (Step 21219). If the ascending order is designated, the character strings are sorted in the ascending order (Step 21220), whereas if the descending order is designated, the character strings are sorted in the descending order (Step 21221).

If the evaluation result by the rule designated for the column indicates the same order (Step 21222) and the next syllable evaluation execution is being designated (Step 21223), the processes at Step 21208 and following Steps are repeated for the characters of the next syllable. If the next syllable evaluation execution is not designated and the condition of the next column is being designated (Step 21224), in order to execute the next condition for the character strings having the same order, the rule data is read and the processes at Step 21206 and following Steps are executed. After all the sort processes are executed, the sort execution result is output to the designated file (Step 21225) to terminate this process.

This sort process part 20100 is applied to sorting the kana phonetic transcriptions of the name list data shown in Fig. 60 in the 50-kana syllabic order. First, the sort rule is defined for sorting in the 50-kana syllabic order.

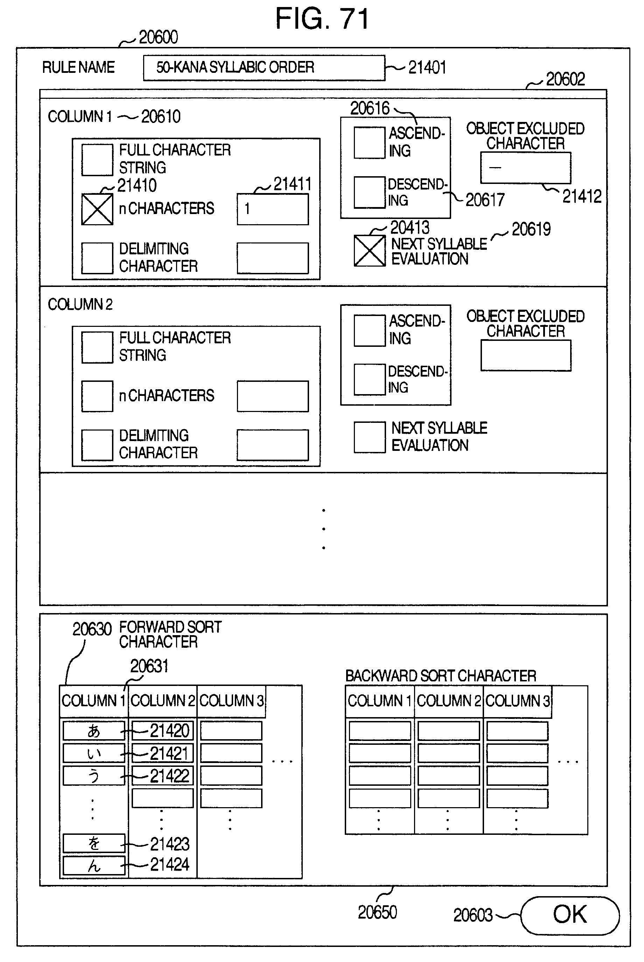

Fig. 71 is a diagram showing an example of designating the sort process registration menu of this embodiment. As shown in Fig. 71, a 50-kana syllabic order (21401) is set to a rule name 20600, the object character string in the column 1 (20610) is checked to n characters (21410), and the character number is set to "1" (21411).

"-" (21412) is set to the excluded object character, and the next syllable evaluation is designated (21413). In an input item 20631 of the column 1 in the forward sort character 20630, " 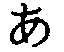 (a)" (21420), " 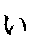 (i)" (21421), " 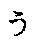 (u)" (21422), ..., " 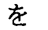 (wo)" (21423), and " 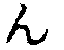 (un)" (21424) are registered.

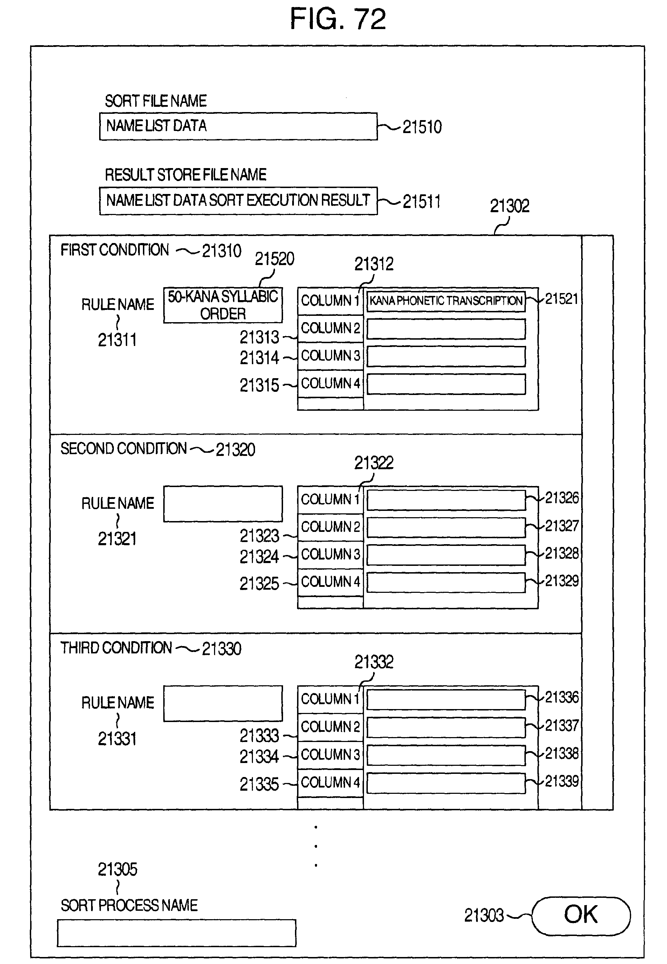

Fig. 72 is a diagram showing an example of designating the sort process execution menu of this embodiment. As shown in Fig. 72, in the sort execution, name list data (21510) is set to the sort execution file name of the execution menu, a name list data sort execution result (21511) is set to an execution result file name, a registered rule name "50-kana syllabic order" (21520) is set to the rule name 21311 of the first condition 21310, and a column name kana phonetic transcription (21521) is set to the column 1 (21312). In this manner, the character string excepting "-" in the kana phonetic transcription column can be sorted on the one-character basis in the order of " 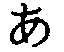 ", " 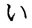 ", " 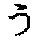 ", ....

The name list data shown in Fig. 60 has the kana phonetic transcription column. Even if the kana phonetic transcription column does not exist, the sort process for the name column in the name order can be executed by registering a rule which resisters the kanji names in the phonetic transcription order.

Similarly, the name list data shown in Fig. 60 is applied to the sort process by a fundamental representative phonetic collation defined in JIS X 4061-1996. The fundamental representative phonetic collation evaluates by the following five procedures.
(1) The start character of the representation column is evaluated in the order of a character class. The character class is classified as in the following.
   1. Space
   2. Descriptive mark
   3. Bracket mark
   4. Scientific mark
   5. General mark
   6. Unit mark
   7. Arabian number
   8. European mark
   9. Latin alphabet
   10. Kana
   11. Kanji
   12. Geta mark
(2) A representative phonetic transcription is determined from the representation column and phonetic column of syllables, and by using this representative phonetic transcription as a collating key, the evaluation is made. The evaluation is made for the second and following syllables.
(3) By using the representation column of the syllables as a collating key, the evaluation is made.
(4) The evaluation is made by using the phonetic column as a collating key.
(5) The evaluation is made by using the representation key as a collating key.

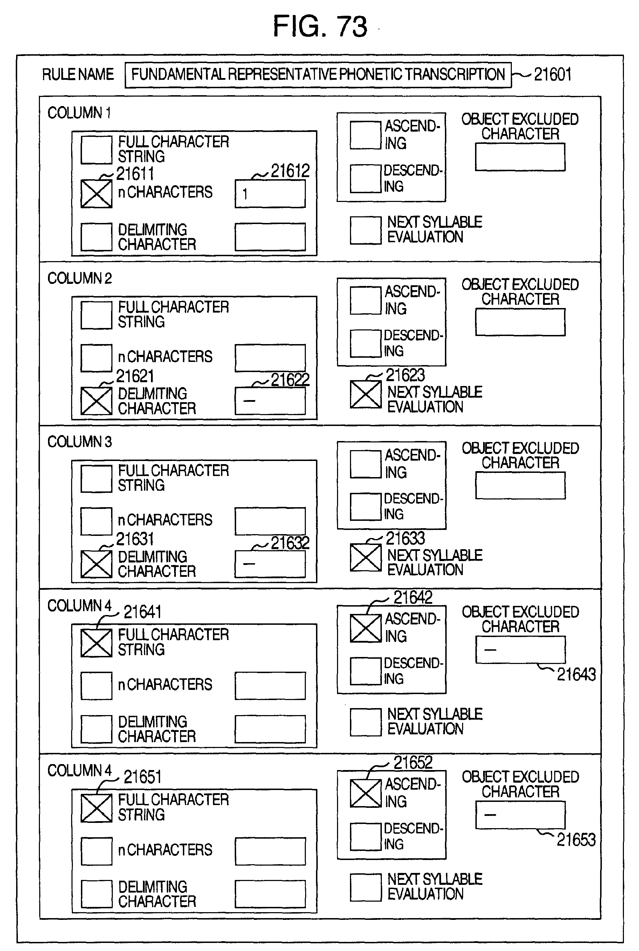

Fig. 73 is a diagram showing an example of the setting in the data setting field of the sort rule for the fundamental representative phonetic collation of this embodiment. As shown in Fig. 73, as the rule definition, a column 1 is assigned to evaluate by the procedure (1), columns 1 and 2 are assigned to evaluate by the procedures (2) and (3), and columns 4 and 5 are assigned to evaluate by the procedures (4) and (5). In the column 1, the object character string is checked to n characters (21611) and the number of characters is set to "1" (21612) because the top character is sorted in the order of the character class. The order of the character class is registered in a corresponding field of the column 1 of the forward sort character or backward sort character.

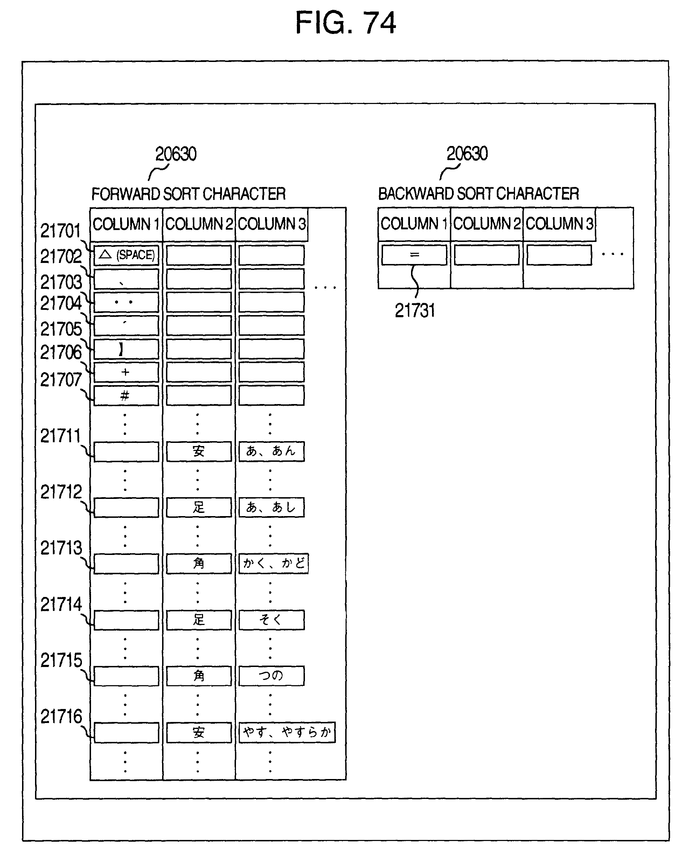

Fig. 74 is a diagram showing an example of the setting in the data setting field of the sort rule for the fundamental representative phonetic collation of this embodiment. As shown in Fig. 74, the space (21701), descriptive marks (21702, 21703), bracket marks (21704, 21705), a scientific mark (21706) and a general mark (21707) are registered in this order, and the "geta" mark at the last of the order is registered in the backward sort character 20640 (21731).

Next, in order to pick up syllables, the delimiting characters (21621, 21631) of the object character strings are checked and "-" (21622, 21632) is defined as the delimiting character. In the order of the evaluation result by using the representative phonetic collation as the collating key (2) and the evaluation result by using the representation column as the collating key (3), combinations of characters are registered in the corresponding fields of the columns 2 and 3 of the forward sort character 20630 and backward sort character 20640.

As shown in the example of Fig. 74, this registration is made in the following manner. " 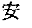 (a, an)" (21711) having phonetic transcriptions of " 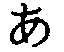 (a)" or " 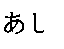 (an)" in the combination of characters of the columns 2 and 3 has a higher order than " 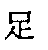 (a, ashi)" (21712) having phonetic transcriptions of " 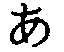 (a)" or " 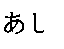 (ashi)". Similarly, the registration is made as " 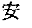 " ( 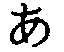 , 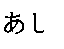 (a, an)) < " 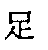 " ( 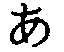 , 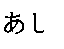 (a, ashi)) < " 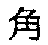 " ( 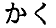 , 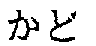 (kaku, kado)) < " 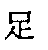 " ( 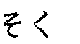 (soku)) < " 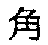 " ( 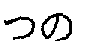 (tsuno)) < " 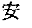 " ( 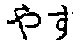 , 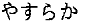 (yasu, yasuraka)) (21711 to 21716).

Lastly, since the evaluation is made by using the phonetic column or representation column as the collating key in the columns 4 or 5, the full character strings (21641, 21651) are checked in the object character string, and "-" (21643, 21653), and the sort in the ascending order is designated (21642, 21652).

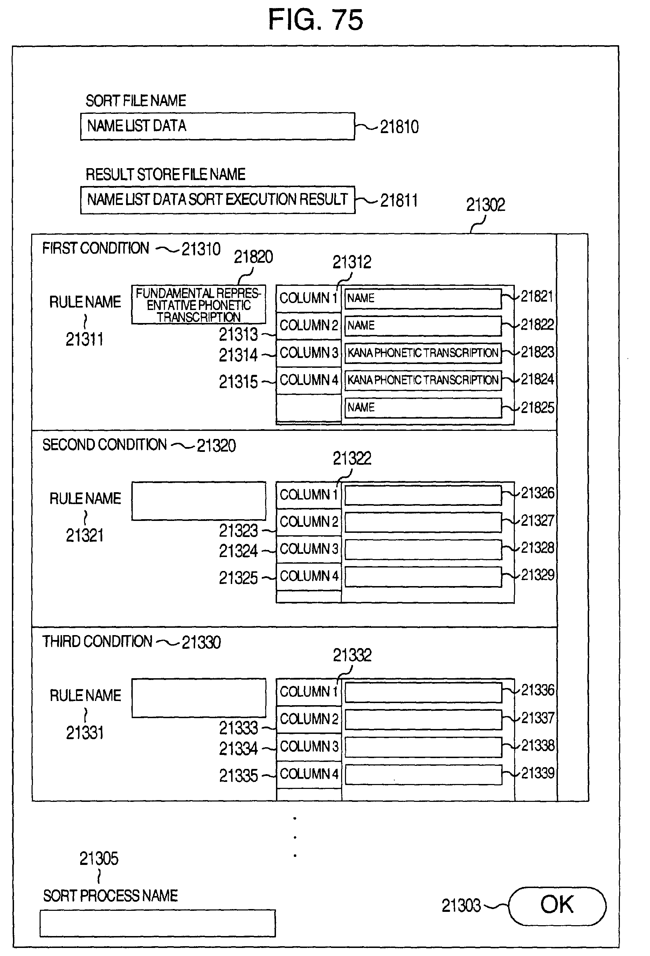

Fig. 75 is a diagram showing an example of setting the sort process registration menu. The sort execution by the fundamental representative phonetic collation can be realized by designating, in the execution menu shown in Fig. 75, the registered rule name 21820 in the rule name of the first condition 21310, the name (21821) in the column name of the column 1, the name (21822) in the column name of the column 2, the kana phonetic transcription (21823) in the column name of the column 3, the kana phonetic transcription (21824) in the column name of the column 4. and the name (21825) in the column name of the column 5. With the above processes, registration and execution of the sort process designated by the user can be realized.

As described above, according to the data processing apparatus of this embodiment, the rules for the sort process are registered in advance, and the sort process is executed in accordance with the designated rules. It is therefore possible to execute the data sort process specific to each user.

A data processing apparatus of another embodiment will be described in which a database stores and retrieves data constituted of optional elements including a character string to generate an index indicating the sort execution result.

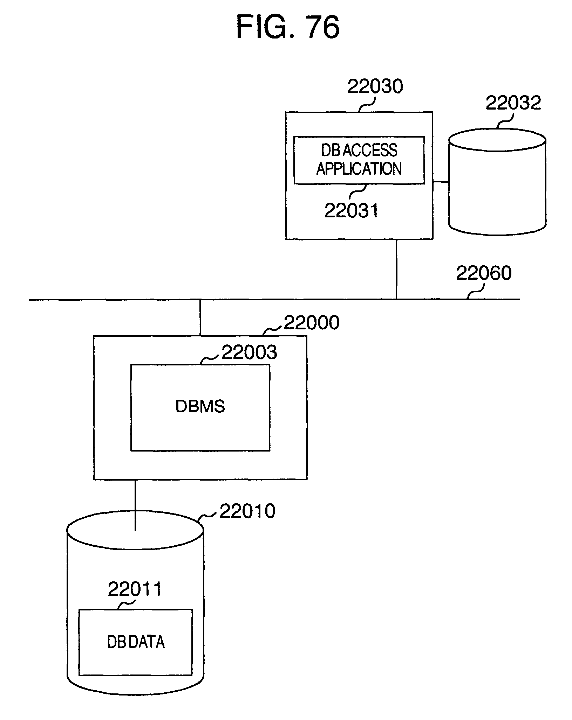

Fig. 76 is a diagram showing the system structure of a data processing apparatus 22000 of this embodiment. A DB access application 22031 runs on an information processing apparatus 22030 and a DBMS 22003 runs on the data processing apparatus 22000. The data processing apparatus 22000 and information processing apparatus 22030 are connected to a network 22060 and can communicate with each other.

The DB access application 22031 issues a query execution request via the network 22060 to DBMS 22003 of the data processing apparatus 22000. Upon reception of the query request, DBMS 22003 accesses DB data 22011 stored in a disk 22010 connected to the data processing apparatus to thereby execute a process corresponding to the query request.

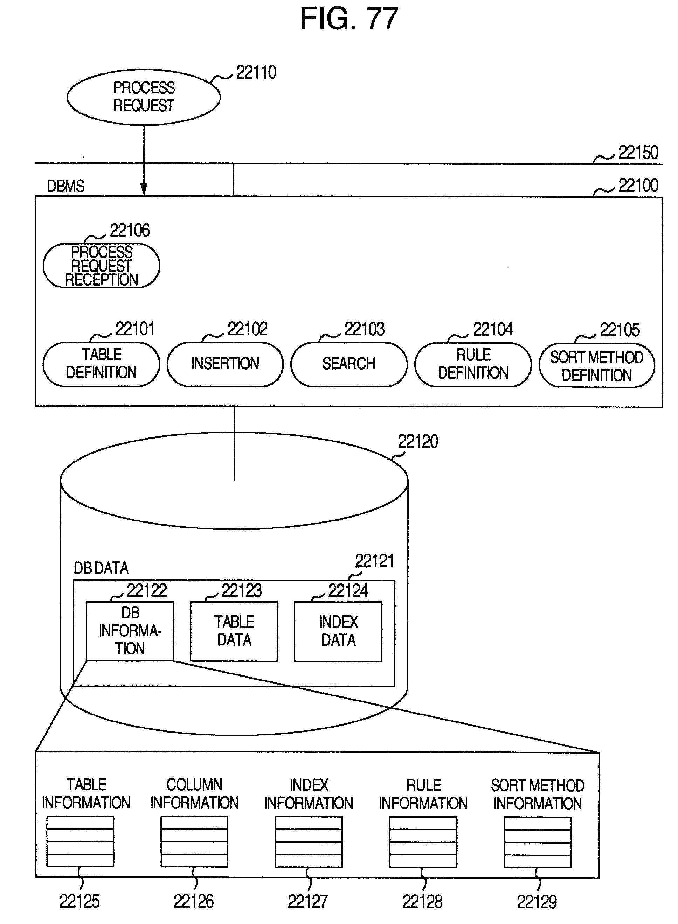

Fig. 77 is a diagram showing the outline structures of the data processing apparatus 22000 and information processing apparatus 22030. As shown in Fig. 77, the data processing apparatus 22000 has a CPU 2213, a memory 2214, an I/O controller 2212, and a communication controller 2211. CPU 2213 executes a program of DBMS 22003 stored in the memory 2214 to execute a process of DBMS 22003. The I/O controller 2212 controls to read data from and write data in the disk 2210. The communication controller 2211 controls to transfer data to and from another information processing apparatus 22030 connected to the network 22060.

The information processing apparatus has a similar structure. The DB access application 22031 is stored in a memory 2202 and executed. As the DB application 22031 issues a query request to DBMS 22003, this request is transmitted from a communication controller 2203 of the information processing apparatus 22030 to the communication controller 2211 of the data processing apparatus 22000 and to DBMS 22003. DBMS 22003 executes a process corresponding to the request. If an access to DB data 22011 is necessary, the I/O controller 2212 accesses DB data 22011 stored in the disk 2210. The process result is transferred from the communication controller 2211 to the communication controller 2203 of the information processing apparatus 22030 and returned to the requesting DB application 22031.

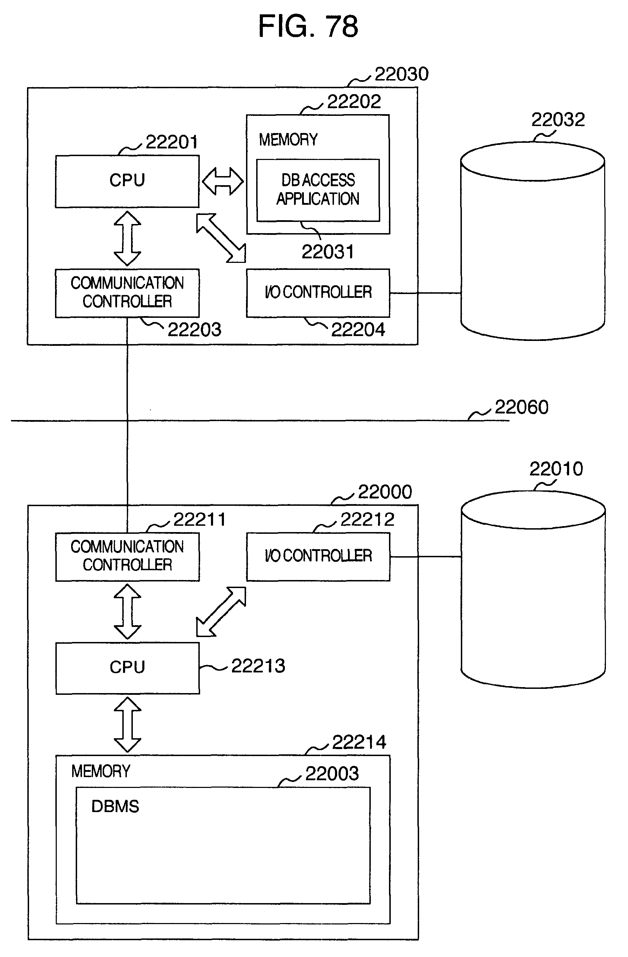

Fig. 78 is a diagram illustrating the outline of a process by DBMS 22003 of this embodiment. As shown in Fig. 78, the data processing apparatus 22000 of this embodiment has a table definition part 22101, an insertion part 22102, a search part 22103, a rule definition part 22104, a sort process registration part 22105, and a process request reception part 22106.

The table definition part 22101 defines the table of the database. The insertion part 22102 inserts data in the database and updates the index indicating the sort execution result. The search part 22103 sorts the database search result to execute a process of a sort execution part in accordance with the designated contents of the sort process.

The rule definition part 22104 defines a sort rule indicating the sort object in the column to be referred to during the sort process and the sort order. The sort process registration part 22105 designates the sort process representative of the column to be referred to during the sort process and the rule used by the referred column during the sort operation, and generates the index indicating the sort execution result for the sorted data. The process request reception part 22106 receives a process request 22110 to the database.

A program for realizing the functions of the table definition part 22101, insertion 22102, search part 22103, rule definition part 22104, sort process registration part 22105 and process reception part 22106 respectively of the data processing apparatus 22000 is stored in a storage medium such as a CD-ROM and loaded in a magnetic disk or the like, and thereafter loaded in a memory to be executed. The storage medium for storing the program may be other recording media different from CD-ROM.

When the process request 22110 is received by the process request reception part 22106, DBMS 22003 analyzes the request to activate the table definition part 22101, insertion part 22102, search part 22103, rule definition part 22104, and sort process registration part 22105.

The DB data 22121 contains DB information 22122, table data 22123, and index data 22124. The DB information 22122 includes table information 22125, column information 22126, index information 22127, rule information 22128, sort process information 22129 and the like.

The table information 22125 is added with information when a table is formed, and set with a table name, the number of columns and the like. The column information 22126 is also added with information when a table is formed, and set with the name of a table constituting columns, a column name, a column data type and the like. The index information 22127 is added with information when an index is formed, and is set with the name of a table for which the index is formed, a column name and the like. The rule information 22128 is added with information on the sort rule by the rule definition part 22104. The sort process information 22129 is added with the name of a table to which the sort process is registered, a column name and a rule name by the sort process registration part 22105.

Data of each generated table is stored in the table data 22123. The search part 22103 picks up the column data, and the insertion part 22102 stores row data. The index data 22124 is added with information when the index is generated, this information being used for searching data at high speed.

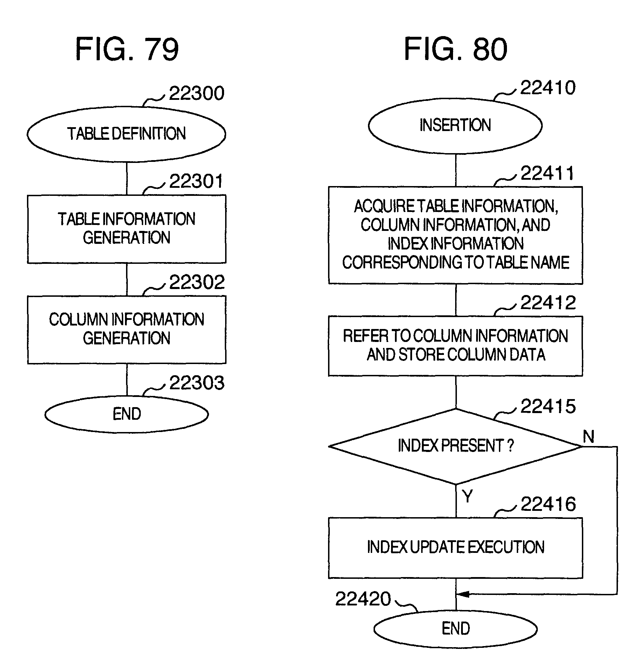

Fig. 79 is a flow chart illustrating the operation by the table definition part 22101 of this embodiment. With reference to Fig. 79 and following drawing, each function of the sort process by the database system of this embodiment and each function of DBMS 22003 related to the sort index will be described. The manipulation function regarding the sort process and the sort index includes table definition, insertion, search, rule definition, sort process definition and the like. As the process request 22110 is supplied to DBMS 22003, a manipulation function process for the process request 22110 is executed.

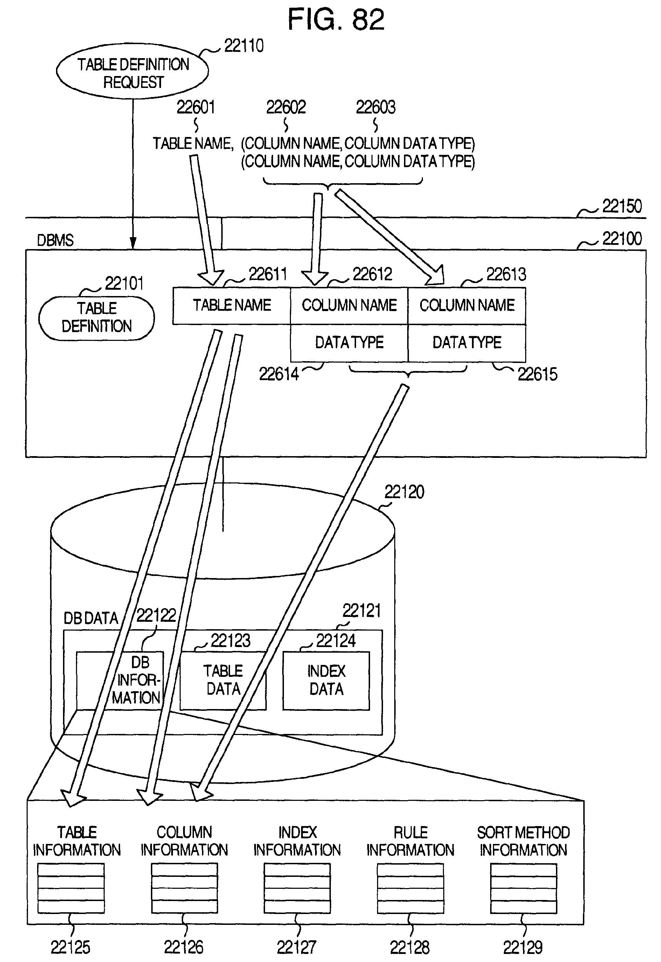

Fig. 82 is a diagram illustrating the outline of the table definition process of this embodiment. The table definition process will be described with reference to Figs. 82 and 79. The process request 22110 as well as the name 22601 of the table to be formed, the column name 22602 of a column constituting the table, the column data type 222603 and the like is sent to DBMS 22003. DBMS 22003 analyzes the request, activates the table definition part 22101 to add the table name 22611, the column number and the like to the table information 22125 in the DB information 22122 (Step 22301), and also adds the table name 22611, column names 22612 and 22613, and column data types 22614 and 22615 to the column information 22126 in the DB information 22122 (Step 22302).

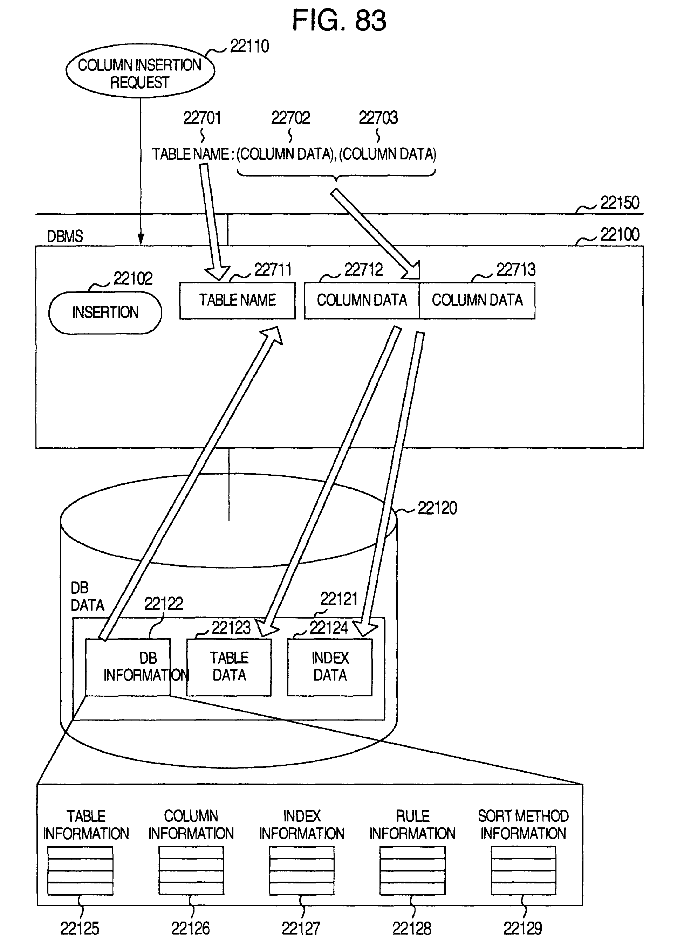

Fig. 83 is a diagram illustrating the outline of the insertion process of this embodiment. Fig. 82 is a flow chart illustrating the operation by the insertion part 22102 of this embodiment. The data insertion process will be described with reference to Figs. 83 and 82. The process request 22110 as well as the name 22701 of the table in which data is inserted, column data 22702 and 22703 to be inserted into each column and the like is sent to DBMS 22003. The column data type includes an integer type, a character type and the like, and data corresponding to each data kind is designated to the insertion data.

DBMS 22003 analyzes the request, activates the insertion part 22102, acquires the table information 22125, column information 22126, and index information 22127 corresponding to the table name 22711 from the DB information 22122 (Step 22411), and by referring to the column information 22126, stores the column data 22712 and 22713 in the corresponding table data 22123 of the DB data 22121 (Step 22412). By referring to the acquired index information 22127, and if the index is being added to the inserted table (Step 22415), the index is updated (Step 22416).

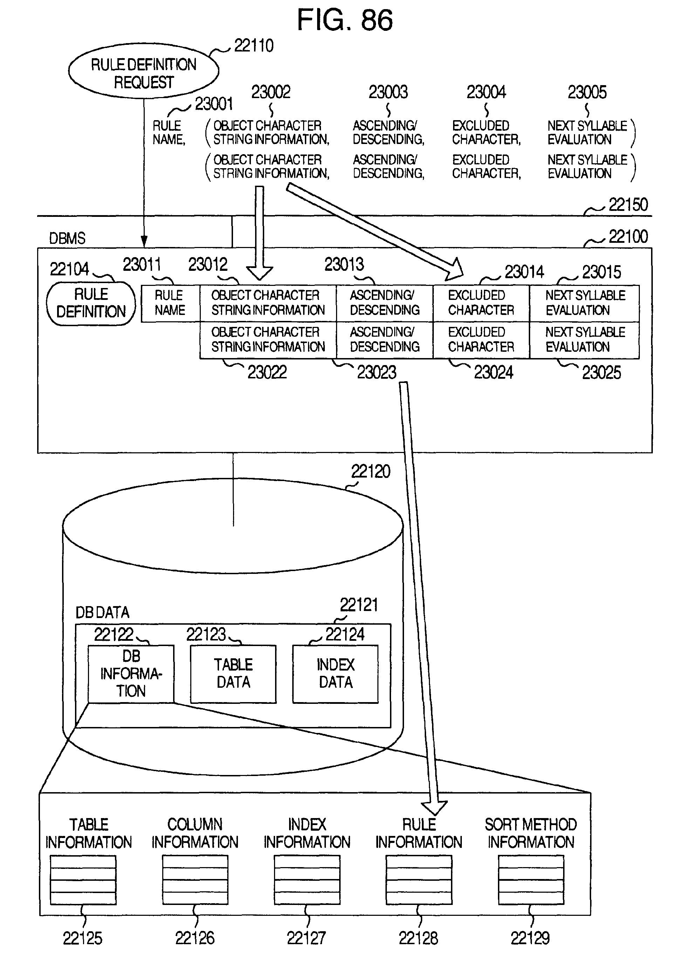

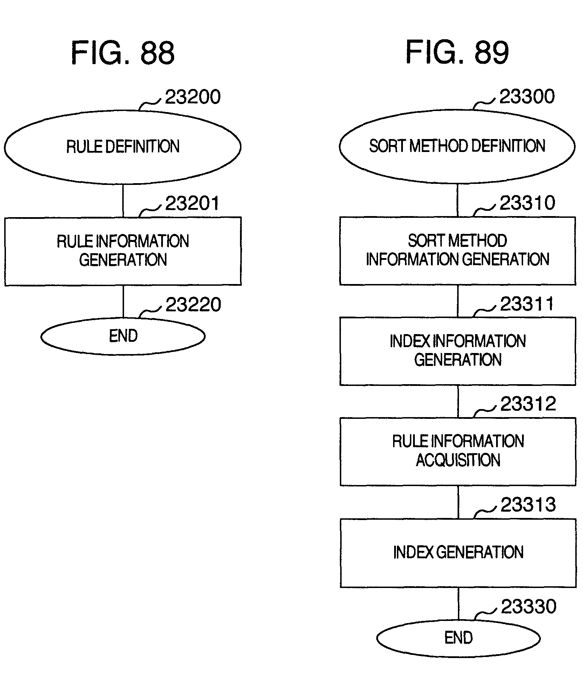

Fig. 86 is a diagram showing the outline of the sort process definition of this embodiment. Fig. 88 is a flow chart illustrating the operation by the rule definition part 22104 of this embodiment. The rule definition process will be described with reference to Figs. 86 and 88. The process request 22110 as well as the rule information such as the name 23001 of the sort rule to be registered, object character string information 23002, ascending/descending information 32003, an excluded character 23004, a next syllable evaluation flag 23005 is sent to DBMS 22003.

DBMS 22003 analyses the request, activates the rule definition part 22104, and adds, to the rule information 22128 in the DB information 22122, the information such as a rule name 23011, object character string information 23012, ascending/descending information 23013, ascending/descending information 23023, an excluded character 23014, an excluded character 23024, a next syllable evaluation flag 23015, and a next syllable evaluation flag 23025 (Step 23201).

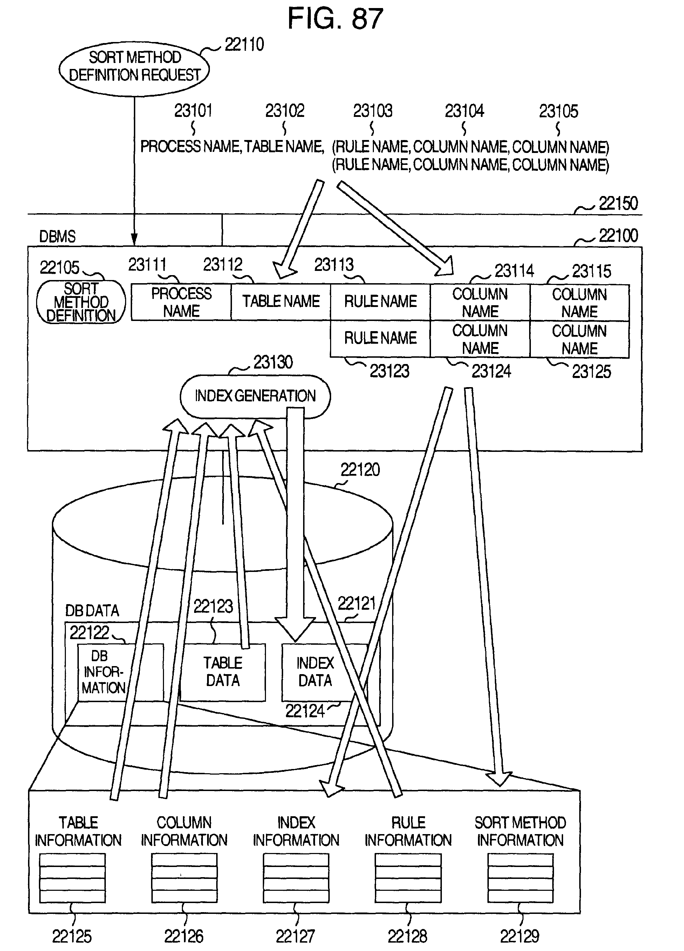

Fig. 87 is a diagram showing the outline of the sort process definition of this embodiment. Fig. 89 is a flow chart illustrating the operation by the sort process registration part 22105 of this embodiment. The sort process definition will be described with reference to Figs. 87 and 89. The process request 22110 as well as the name 23101 of a sort process to be registered, the name 23102 of a table to be sorted, a name 23103 of a sort rule to be applied, column names 23104 and 23105 and the like is sent to DBMS 22003.

DBMS 22003 analyzes the request, activates the sort process registration part 22105, and adds, to the sort process information 22129 in the DB information 22122, a process name 23111, a table name 23112, rule names 23113 and 23123, column names 23114, 13115, 23124 and 23125, and the like (Step 23310), and also adds, to the index information 22127 of the DB information 22122, the table name 23112, rule names 23113 and 13123, column names 23114, 23115, 23124 and 23125, and the like (Step 23311). The rule information 22128 designated to the rule names 23113 and 23123 is acquired (Step 23312), and by referring to the table designated to the table name 23112, the index of data to be sorted is generated (Step 23313).

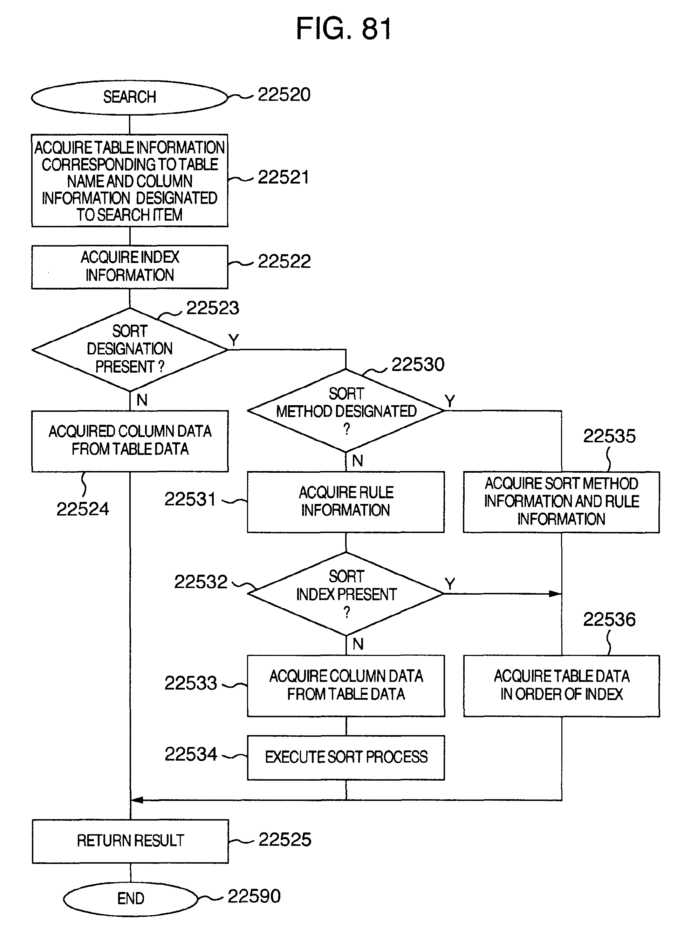

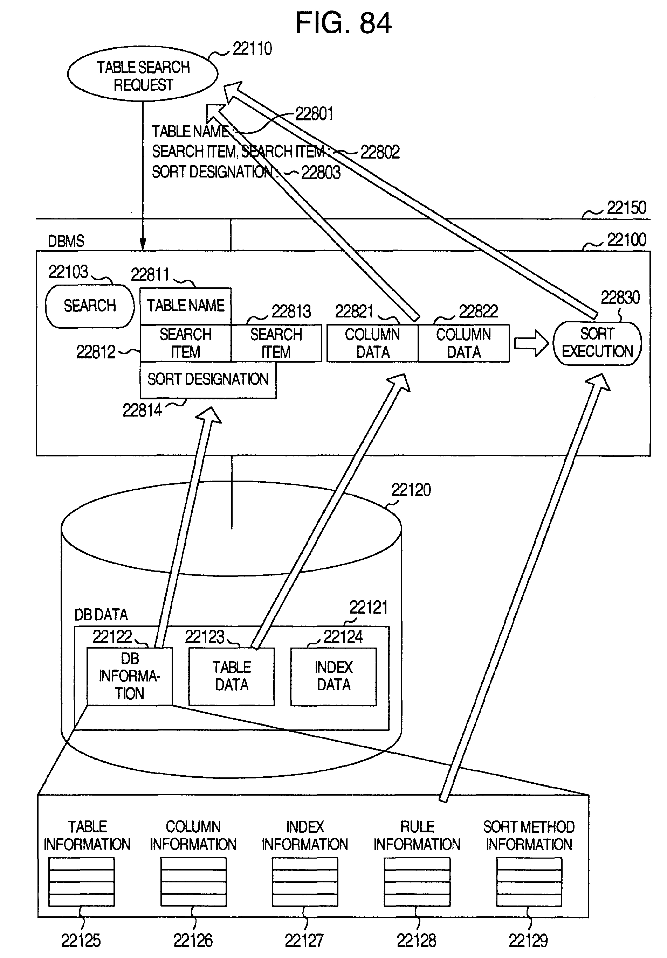

Fig. 84 is a diagram illustrating the outline of the table search process by using an index of this embodiment. Fig. 81 is a flow chart illustrating the operation by the search part 22103 of this embodiment. The data search process will be described with reference to Figs. 84, 81 and 85. The process request 22110 as well as a name 22801 of a table to be picked up, a search item 22802, and a sort designation 22803 is sent to DBMS 22003. A column name of the table to be picked up is designated to the search item 22802.

For the sort designation, either the sort rule and the column name corresponding to the rule are designated, or the sort process name already registered by the sort process registration is designated.

DBMS 22003 analyzes the request, activates the search part 22103, and acquires the table information 22125 corresponding to the table name 22811 and the column information 22126 designated to the search items 22812 and 22813 from the DB information 22122 (Step 22521), and also acquires the index information 22127 related to the sort designation 22814 from the DB information 22122 (Step 22522). The sort designation is checked (Step 22523), and if there is no sort designation, the column data 22821 and 22822 is acquired from the table data 22123 and the result is returned (Step 22525).

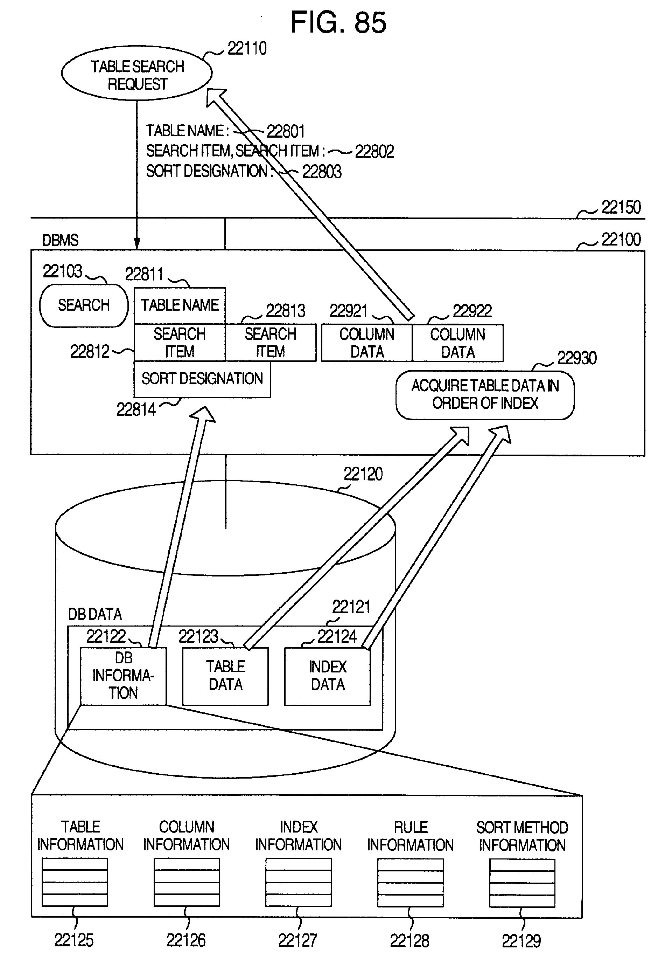

Fig. 85 is a diagram illustrating the outline of the table search process using the index. If there is the sort designation, it is checked whether the designation is a designation by the sort rule and the column name corresponding to the rule or a designation by the sort process name (Fig. 81, Step 22530). If the designation is a designation by the sort rule and the column name corresponding to the rule, the rule information is acquired (Step 22531), and it is checked whether the index capable of being used for the designated sort is present (Step 22532). If there is no such index, the column data 22821 and 22822 is acquired from the table data 22123 (Step 22533), the sort process is executed in accordance with the rule (Steps 22830 and 22534) and the result is returned (Step 22525). If there is such an index, as shown in Fig. 85, the index data 22124 is referred to and the column data 22921 and 22922 is acquired from the table data 22123 in the order of the index (Steps 22930 and 22536), and the result is returned (Step 22525).

If the designation is a designation by the sort process name, the sort process information 22129 and rule information 22128 is acquired (Step 22535), the index data 22124 corresponding to the sort process is referred to, the column data 22921 and 22922 is acquired from the table data 22123 in the order of the index (Steps 22930 and 22536), and the result is returned (Step 22525).

With the above processes, it is possible to register and execute a sort process designated by a user, to generate an index for the sort process, and to access the sort result by using the index at high speed.

As described above, according to the data processing apparatus of this embodiment, a rule for the sort process is registered in advance and the sort process is executed in accordance with the designated rule. It is therefore possible to execute a sort process specific to each user.

According to the data processing apparatus of this embodiment, an index for the sort result by the rule designated by the sort process is generated, and so the sort process by the rule designated by the sort process can be executed at high speed.

According to the invention, in a data processing system capable of accessing data of a plurality of different kinds, it is possible to select and execute a data processing apparatus in accordance with the data kind. It is therefore possible to provide a function of processing data in accordance with each data kind.

## Claims

1. A data processing method capable of accessing a plurality of data of different data kinds by discriminating between the data kinds through classification into a natural language such as English and Japanese or through another method, comprising:
a first step (303) of selecting data processing means for executing data processing such as registration and search, in accordance with the data kind; and
a second step (305) of executing the data processing by the data processing means selected at said first step.

2. A data processing method according to claim 1, further comprising a third step of executing the data processing suitable for the data kind by the data processing means in the data processing at said second step.

3. A data processing method according to claim 1, further comprising a fourth step of selecting the data processing means at said first step by using only a limited data kind as a process object.

4. A data processing method according to claim 1, further comprising a fifth step of, when a request for data processing is issued to the data processing means selected at said first step, changing the request in accordance with the data kind to be processed by the data processing means.

5. A data processing method according to claim 1, further comprising in a data search method a sixth step of editing result data of the data processing by the data processing means at said second step, and generating search result data of a data search process.

6. A data processing method according to claim 5, further comprising a seventh step of translating the result data of the data processing by the data processing means at said sixth step into another data kind and generating the search result data of the data search process.

7. A data processing method according to claim 1, further comprising in a data registration method:
an eighth step of selecting the data processing means at said first step in accordance with the data kind of a registration object; and
a ninth step of executing the data registration by said selected data processing means at said second step, without translating data of the registration object.

8. A data processing method according to claim 1, further comprising in a method of registering data constituted of partial data:
a tenth step of generating registration data to be registered to a data processing procedure for each data kind, from the partial data;
an eleventh step of generating a data identifier unique in a system, and setting the data identifier to the registration data generated at said tenth step; and
a twelfth step of registering the registration data by the data processing means.

9. A data processing method according to claim 8, further comprising in a data search method a thirteenth step of generating at said sixth step the search result data from partial data constituting data having a same data identifier, in accordance with the data identifier set at said eleventh step.

10. A data processing method according to claim 1, further comprising a fourteenth step of referring to a correspondence table representative of the data kind and the data processing means, and selecting the data processing means by acquiring identification information of the data processing means by using the data kind as a key, at said first step.

11. A data processing method according to claim 1, further comprising a fifteenth step of searching the data processing means capable of executing the data processing, acquiring the data kind of the searched and detected data processing means, and selecting the data processing means in accordance with the acquired data kind, at said first step.

12. A data processing method according to claim 1, further comprising:
a sixteenth step of selecting the data processing means corresponding to a second data kind capable of being translated from a first data kind of data of a process object, at said first step; and
a seventeenth step of translating the data of the first data kind of the process object into data of the second data kind.

13. A data processing system capable of accessing a plurality of data of different data kinds by discriminating between the data kinds through classification into a natural language such as English and Japanese or through another method, comprising:
first means (102, 103) for selecting data processing means for executing data processing such as registration and search, in accordance with the data kind; and
second means (104, 114) for executing the data processing by the data processing means selected by said first means.

14. A data processing system according to claim 13, further comprising an application programming interface for designating the data kind of a process object by using an execution environment variable which controls the data processing and indicates an execution environment of the data processing.

15. A data processing system according to claim 13, further comprising an application programming interface for designating the data kind by using an attribute of a variable which stores data of a process object.

16. A data processing system according to claim 15, wherein the application programming interface designates the data kind by using an attribute of a variable which stores partial data constituting data of a process object.

17. A data processing system according to claim 13, further comprising an application programming interface for designating the data kind to the data of a process type.

18. A data processing system according to claim 17, wherein the application programming interface designates the data kind of partial data constituting the data to the data of a process object.

19. A data processing system according to claim 13, further comprising an application programming interface for designating the data kind of a process object in accordance with a kind constituted of a plurality of element such as a locale including a language, a district and encode.

20. A data processing system according to claim 13, further comprising an application programming interface for designating the data type of a process result by a variable such as an indicator.

21. A data processing system according to claim 13, further comprising a correspondence table storing information on the data kind and a corresponding data processing means for executing the data processing of the data kind.

22. A data processing method according to claim 10, further comprising an eighteenth step of editing the correspondence table representative of the data kind and the data processing means.

23. A storage medium storing a program and data for a data processing system capable of accessing a plurality of data of different data kinds by discriminating between the data kinds through classification into a natural language such as English and Japanese or through another method, the program including the codes for:
first means (102, 103) for selecting data processing means for executing data processing such as registration and search, in accordance with the data kind; and
second means (104, 114) for executing the data processing by the data processing means selected by said first means.

24. A collation processing method for sorting records by collating collating keys corresponding to column values, comprising the steps of:
acquiring (11003) an identifier of a collating key corresponding to column values of evaluation objects by using a collation method designated by a sort request, and requesting for a sort process using the collating key; and
referring to the collating key identified by the identifier, collating record identifiers for identifying records storing the column values by using the collating key, and sorting the record identifiers corresponding to the column values in accordance with the collation method.

25. A collation processing means according to claim 24, wherein a plurality of collating keys corresponding to the column values are stored as multidimensional data, and each collating key in the multidimensional data is shared by different collation methods.

26. A collation processing means according to claim 24, further comprising a step of, when a record is inserted, registering the collating key corresponding to the column values corresponding to the record.

27. A collation processing apparatus for sorting records by collating collating keys corresponding to column values, comprising:
a collation process unit for acquiring an identifier of a collating key corresponding to column values of evaluation objects by using a collation method designated by a sort request, and requesting for a sort process using the collating key; and
a sort processing unit (20100) for referring to the collating key identified by the identifier, collating record identifiers for identifying records storing the column values by using the collating key, and sorting the record identifiers corresponding to the column values in accordance with the collation method.

28. A computer readable storage medium storing a program for a computer realizing functions of a collation processing apparatus for sorting records by collating collating keys corresponding to column values, the program comprising the codes for:
a collation process unit for acquiring an identifier of a collating key corresponding to column values of evaluation objects by using a collation method designated by a sort request, and requesting for a sort process using the collating key; and
a sort processing unit (20100) for referring to the collating key identified by the identifier, collating record identifiers for identifying records storing the column values by using the collating key, and sorting the record identifiers corresponding to the column values in accordance with the collation method.

29. A data processing method of executing storage and retrieval of data constituted of optional elements including a character string, comprising the steps of:
defining a sort rule (20421) indicating a sort object of columns to be referred to during sorting and a sort order;
designating a sort process (20431) representative of a column to be referred to during sorting and a rule used for sorting the referred column; and
executing a sort process (20441) in accordance with contents of the designated sort process.

30. A data processing method according to claim 29, wherein the sort rule is defined which contains a byte length of data of sort objects and a data train representative of the sort order.

31. A data processing method according to claim 29, further comprising a step of generating an index indicating a sort execution result.

32. A data processing apparatus for executing storage and retrieval of data constituted of optional elements including a character string, comprising:
a rule defining unit (20421) for defining a sort rule indicating a sort object of columns to be referred to during sorting and a sort order;
a sort process registration unit (20431) for designating a sort process representative of a column to be referred to during sorting and a rule used for sorting the referred column; and
a sort execution unit (20441) for executing a sort process in accordance with contents of the designated sort process.

33. A computer readable storage medium storing a program of a computer for realizing functions of a data processing apparatus for executing storage and retrieval of data constituted of optional elements including a character string, the program comprising the codes for:
a rule defining unit (20421) for defining a sort rule indicating a sort object of columns to be referred to during sorting and a sort order;
a sort process registration unit (20431) for designating a sort process representative of a column to be referred to during sorting and a rule used for sorting the referred column; and
a sort execution unit (20441) for executing a sort process in accordance with contents of the designated sort process.
